# EUROPEAN PATENT APPLICATION

(11) **EP 1 189 161 A1**
(43) Date of publication of application: **20.03.2002**
(21) Application number: 00402519.3
(22) Date of filing: 13.09.2000
(51) Int. Cl.: G06F 17/60

(54) **A method and system for managing network-based partner relationships**

(71) Applicant: iMediation, S.A., 92045 Paris La Defense (FR)
(72) Inventor: Baudu, Regis Jacques, 75018 Paris (FR); Colin, Dominique Michel, 78810 Feucherolles (FR); Cores, Andres, 75016 Paris (FR); LHospitalier, Denis Rene Marie, 75012 Paris (FR); Sair, Faraj, 92250 La Garenne Colombes (FR)
(74) Representative: Harris, Ian Richard

(57) **Abstract**

Disclosed are computer-implemented systems and methods for the management and operation of network-based partner, e.g., business, relationships. A representation of the partner relationship is established that includes rules for allocation of compensation, the subject matter to come under the partner relationship, and a resources to be presented to users/customers when they encounter an aspect of the partner relationship, for instance by browsing a web site of one of the partner entities. A system implementing the partner relationship includes a transactional engine for monitoring the browsing activity of a user while browsing partner relationship resources. A composite site manager generates the partner relationship resources based on component resources drawn from the partner entities and a presentation characterization forming part of the relationship representation. The transactional engine generates event data from the client-server request/response data flow. Message brokers transport the event data to software component that accumulates and aggregates the event data to generate facts that are meaningful for the operation of the partner relationship, e.g., compensation flows. An interposition mechanism allows for the request/response data flow to be modified. Further, the interposition mechanism can be used to implement common wallet or common shopping basket functionality in the context of the partner relationship.

## Description

### FIELD

Features of the invention relate generally to computer-implemented systems for the setup and management of commercial relationships in a network-based environment, and more particularly to systems achieving improved deployment, flexibility and scalability.

### BACKGROUND

Increasingly, businesses are conducting their operations over public computer networks, most prominently the worldwide web aspect of the internet. These open networks provide profitable opportunities for groups of entities to form partnerships. Indeed, the enormous scope and variety of electronic commerce alliances formed in recent years among trading partners using the worldwide web bears witness to the desirability of such alliances. Both from the perspective of consumers, who are better able to find goods and services of interest, and from the perspective of sellers who are better able to expand their market through alliances, successful implementation of network-based partnering relationships is highly desirable.

However, software solutions for implementing such relationships leave deficiencies in effective implementation and management of network-based partnering relationships. One common example is the situation where a merchant selling goods through an on-line catalog desires to establish an affiliate network to drive traffic to the merchant site. In exchange for driving a purchaser to the merchant site, the affiliate could receive compensation, say a commission of purchases.

From the perspective of the merchant, establishing the mechanisms on their site to track affiliate-generated traffic, and provide compensation can be costly and time consuming, and may involve significant intrusive re-editing of their on-line catalog. From the perspective of the affiliate, there is an information deficiency: what is the real value of the traffic being driven to the merchant and how can the compensation reflect this value. Still further, from the perspective of the merchant-affiliate partnership it would be desirable for a solution to exist that allowed for co-marketing, for instance with co-branding, so that both partners could reap the benefits of the partnership. Accordingly, there is a need for system that allows merchants to conveniently implement an affiliate network, that provides robust information generation, and a convenient capability of providing partnership-specific content presentations.

Another common example is for a portal-type site. A portal-operator typically drives traffic to many merchants without having a means to capture this value. Indeed, a portal operator may desire to not completely drive user-traffic to merchant sites when a purchase is to be made, but rather, have the purchase made via the portal site thereby keeping the user. Many portals have high traffic rates and, in such a situation, effective scalability is highly desirable. Still further, from the perspective of the portal-operator it would be desirable for a solution to exist that allowed features such as a common shopping basket or common wallet to exist for all or selected merchants accessible through the portal. Thus it would be desirable for methods to exist that allowed for a portal-operator to implement a purchasing system that allowed it to manage purchases made on merchant sites by users coming to the merchant through the operator's portal. Still further, it there is a need for such methods to be highly scalable, flexible, and extensible to enable the portal-operator to coordinate with the various purchasing systems of the merchants.

Yet another common network-based partnership scenario is for a reseller network. A manufacture with a well-known brand, may wish to direct user-traffic to a local reseller for purchase, follow-up service, localization, special promotions etc. However, simply redirecting users to the local reseller deprives the manufacturer of information about the efficacy of its reseller or distribution network. There is a need for a software system to exist that allows for manufacturer in this situation to track information after the user has been directed to their local reseller. Still further, the entire reseller network could benefit from traffic, sales, and other information about all members of the reseller network. Thus there is a need for an efficient information dissemination mechanism in connection with network-based partnering relationships.

There are conventional systems which provide benefits in connection with network-based partnering relationships, but leave several deficiencies. One related means are OLAP and other data mining tools. These tools allow web-site operators to examine and analyze their server logs and from this gain certain forms of information. However, such tools do not assist in implementing a network-based partnering relationship in the first instance, only in gathering data after implementation. Still further, such tools do not provide real-time or near-real-time data but rather are typically based on batch runs through voluminous server logs. This type of delay is undesirable in a rapidly-moving market where commissions could be calculated daily. More fundamentally, this low-level information is not useful in the context of the network-based partnering relationship and must be mapped to the higher-level semantic of the business relationship.

Another related conventional technique are server-side dynamic web page generation tools, e.g. Active Server Pages, Java Server Pages, PHP, or conventional CGI-based scripts/programs. These systems do provide for a general means to dynamically create web pages, however do not provide a convenient and open means to establish commercial partnerships, let along effectively track events that occur in the context of those partnerships. Still further, they provide no effective means to disseminate information to several peer entities in a network-based partner relationship.

Yet another set of related solutions are so-called "link-sharing" or associates-linking systems. These systems typically provide software for administering an affiliate relationship. They frequently require substantial deployment time and effort, with both the merchant and affiliates having to modify their sites. Further, typical solutions of this type are limited to the connecting link between the merchant and the affiliate and are an inadequate solution to gain full tracking information of the user's browsing session in the context of the partner relationship. To gain this type of information in the context of using such tools typically requires reversion to server-log or other data-mining techniques which, as noted above, scale poorly and do not provide real-time data.

Accordingly, there is a need for a methods and systems for implementing and managing network-based partnering relationships that is convenient to deploy, highly scalable, provides for comprehensive real-time information gathering, generation of higher-level semantic information, and efficient dissemination of information.

### SUMMARY

Particular and preferred aspects of the invention are set out in the accompanying independent and dependent claims. Features of the dependent claims may be combined with those of the independent claims as appropriate and in combinations other than those explicitly set out in the claims.

These and other benefits are obtained by the present invention that provides methods and systems for managing network-based partner relationships. One aspect of the invention provides a computer-controlled method of operating a network-based partner relationship. An illustrative method includes establishing a representation of a relationship between two peer entities. The representation includes collection of resources associated with the relationship, and a presentation template to be applied when providing the collection of resources. The representation also includes criteria for providing a compensation flow between the two peer entities. An additional part of the illustrative method includes dynamically generating composite resources during a browsing session. The composite resources include first and second components selected from the collection of resources associated with the first and second peer entities. This method also includes monitoring the browsing session for generating session events and transforming the session events to events in a semantic associated with the relationship, thus generating higher-level semantic events. Then, a compensation flow is generated based on the higher-level semantic events based on the criteria in the relationship representation.

In a variation of this illustrative method, generating session events also includes providing the session events on a first message broker, such as Java Messaging Services, then transforming the session events includes receiving the session events from the message broker and providing the higher-level semantic events on a second message broker. An additional aspect in this variation is where dynamically generating composite resources during a browsing session comprises includes receiving the higher-level semantic events from the second message broker and selecting one or more of the components based on the higher-level semantic events.

In yet another variation, dynamically generating composite resources during a browsing session may include initiating a request for a component resident on target site, receiving and altering the request, and then forwarding the altered request to the target site. In an additional aspect, information may be extracted from the request, for instance for implementing a common shopping basket or common wallet. Then, the extracted information could be used to suitably update the data implementing the common wallet/shopping basket.

In a related variation, dynamically generating composite resources during a browsing session includes initiating a request for a component resident at a target site, receiving and altering a response from the target site, and forwarding the altered response.

Yet another aspect of the invention are computer controlled network based partnership systems. An illustrative system includes a relationship engine for defining attributes of a relationship among at least two peer entities and a storage for storing the attributes of the relationship. The illustrative system also includes a composite site manager for dynamically generating composite resources during browsing sessions. The composite resources include component resources associated with each of the two peer entities and the composite site manager is configured for retrieving a characterization of the composite resources from the storage. This system also includes a session tracking component. The session tracking component includes a server application for receiving requests from a client system, a communication client configured for requesting the composite resources from the composite site manager, a client application configured to request the component resources from server systems associated with the two peer entities and a session event generation module configured for generating event data respecting the requests and the component resources. This system also includes a set of semantic mapping modules that are configured for receiving the event data. The semantic mapping modules include rules for generating higher-level semantic events based on the event data.

A variation of illustrative system just described also includes a message broker. The message broker is configured for receiving the higher-level semantic events from the set of semantic mapping modules and the composite site manager is further configured for receiving the higher level semantic events from the message broker. In this variation, the composite site manager dynamically generates the composite resources responsive to the higher-level semantic events.

Another variation also includes an interposition module logically positioned between the client application and the server systems. The interposition module is configured for altering the request sent by said client application for the component resources.

In a related variation, the illustrative system also includes an interposition module logically positioned between the client application and the server systems. The interposition module is configured for altering the component resources sent by the server systems.

To introduce features of the invention more fully set forth below, a summary of an illustrative embodiment will now be described. A web-based merchant seeks to establish an affiliate network. The merchant deploys a software package embodying features of the invention on a computer system (the "platform"). To attract affiliates the merchant uses a web-based interface to set up a proposal for potential affiliates (an "offer"). The offer includes a template of a "composite site" that will be used to present co-branded pages to users browsing the merchant's catalog via the affiliate's site. The offer also includes portions of the merchant's catalog coming under the scope of the offer, as well as compensation rules, for instance, a commission rate based on sales volume. The merchant makes the offer publicly available on the worldwide web. Interested potential affiliates review the offer and indicate interest. For those the merchant accepts, a partner relationship is thus established and the platform provides the affiliate with a link to place on their site with an identifier of the composite site. When user follows this link they are directed to the platform system. The platform dynamically generates pages based on the composite site definition. The composite site pages include components from the merchant's catalogs as well as brand images and documents from both the merchant and affiliate. When the platform retrieves these components it rewrites links in the components to point back to the platform. Thus, the platform acts as a mobile proxy through which the user's browsing session is controlled. The platform tracks the browsing session and generates event data from the session including, for instance, when the user purchases an item from the merchant's catalog. This event data is passed to a series of modules that take this low session-level data, aggregate it, and generate facts in a semantic of a higher level―the level of the business relationship between the merchant and affiliate. These higher level events are provided on a flexible messaging architecture so that, not only the partners can effectively track their relationship, but also that this information can be provided to other affiliates in a flexible and scalable manner. The platform also tracks these higher-level events and computes commissions due based on the purchases. The merchant and/or affiliate can then access a web site for monitoring the details of their partnership, e.g., commission earned or other statistics.

### BRIEF DESCRIPTION OF THE DRAWINGS

The above features and advantages will be better appreciated with reference to the following detailed description and identified figures where, in accordance with illustrative embodiments:
Fig. 1 illustrates features of a system for managing networked partner relationships;
Fig. 2-1, 2-2, and 2-3 depict functions available to various peer entity relationship participants;
Fig. 3 depicts a state diagram illustrating a composite site browsing session;
Fig. 4 depicts schematic of a composite site page as it could be parsed and rendered on a user's browser; and
Fig. 5 depicts a block diagram of a reference rewriting module.

### DETAILED DESCRIPTION

### DESCRIPTION OF FIGURES

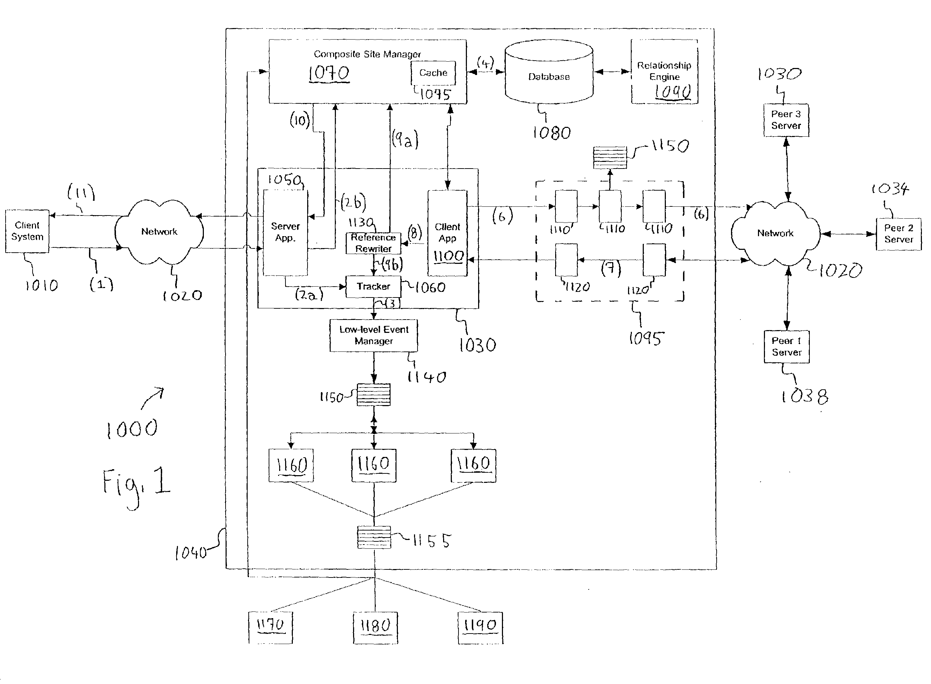

**Fig. 1** illustrates features of a system for managing networked partner relationships **1000** in accordance with an illustrative embodiment. A client system **1010**, under control of a user, initiates a request (**1**) across a network **1020** to a host computer system executing software implementing the system **1000** indicated in **Fig. 1** as a platform **1040**.

In some embodiments, the client system **1010** is a conventional "web" browser, configured for operation with either HTML and/or XML executing on general purpose computer. In other embodiments, the client system **1010** could be special-purpose computing hardware, including, for instance, a mobile phone, personal digital assistant, or set-top box. Given its current commercial ubiquity, in preferred embodiments, the network **1020** includes a portion of the Internet; however this is not fundamental and other networks, either public or private, and using either the TCP/IP stack of protocols or other protocols could be used.

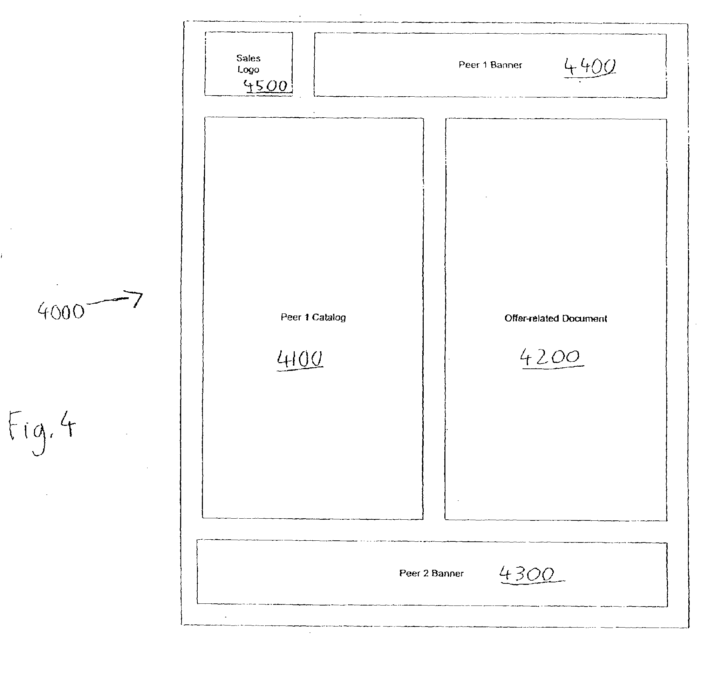

A server application **1050** receives the request from the client system **1010**. The request preferably includes a plurality of field/value pairs: an identifier of a 'composite site" (csid), a session identifier (sid), a customer identifier (cid), a merchant identifier (mid), a partner id (rid), an encoded HTTP referer, and a target frame in which to load the response. These particular fields are not fundamental. In some embodiments, the field/value pairs are part of the path or data portion of a URL, in others they could be passed by cookies, hidden fields, or other means of client-server data transfer available to one skilled in the art. The server application **1050** parses and extracts the field values from the request and passes events (**2**a) from the user's browsing session to a tracker module **1060**. The tracker module **1060** is explained in greater detail below in connection with **Fig. 4;**briefly, here, certain events from the user's browsing session are tracked for use in generating higher-level semantic events. In the illustrative embodiment, the conditions that must be satisfied to trigger the firing of rules that generate the higher-level semantic events determine which events are tracked. Features of this aspect could be carried on as illustrated in a patent application, filed concurrently herewith for the same applicant, entitled "Method and System for Transforming Session Data,".

The server application **1050** passes the composite site identifier (**2**b) to a composite site manager **1070**. The composite site manager **1070** embodies features described in a patent application filed concurrently herewith and incorporated herein by this reference, entitled Composite Site Generation System. In some embodiments, the composite site manager **1070** includes software components configured for generating web pages, e.g., HTML documents, or XML documents with an XSL style sheet for presenting the XML data. The collection of web pages provided through the composite site manager **1070** to the user of the client system **1010** constitute the composite site. For ease of exposition, a single document or web page forming a portion of the composite site is also referred to herein as the composite site or a composite site resource.

The site is 'composite' in that the web pages themselves comprise component resources requested from target sites, such as a first peer server **1038** and a second peer server, **1034** that are assembled by the composite site manager **1070**. The assembling of the component resources is determined by a definition of the composite site. These features are further illustrated below with reference to **Fig. 4**. Additionally, further related detail can be found in the disclosure of a concurrently filed patent application entitled "Method and System for Composite Site Resource Generation" set forth as **ANNEX A** hereto.

The composite site manager **1070** uses the CSID to retrieve (**4**) the definition of the composite site from a database **1080**. In some embodiments, the definition of the composite site is stored in the database **1080** in conventional relational tables and mapped to an XML schema upon retrieval (**4**). The composite site manager **1070** may store the composite site definition in a cache **1075**, thereby reducing database query latency when repeatedly generated the composite site resources.

The composite site manager **1070** parses the composite site definition to identify component resources that should be retrieved to assemble the composite site. The composite site manger **1070** instructs a client application **1100** to request (**6**) component resources resident on remote systems.

Some embodiments of the invention include an interposition mechanism. The interposition mechanism can be used to perform actions on for instance, HTTP, Request and Response messages. The interposition mechanism can produce events relative to the interaction between the platform **1040** and peer server systems (described below). The interposition mechanism further can perform lightweight HTTP flow updating and/or redirection. The interposition mechanism achieves these features by intercepting and modifying, for instance, HTTP Request / Response flow via modules. An interposition engine **1095** operates with and controls the sequence of execution of the modules. Interposition modules perform the actual functional modification of the HTTP flow. In some embodiments, one or more filters are used to determine whether a particular interposition module has to perform an action or not. One skilled in the field will appreciated that such filters can avoid having the modules perform generic manipulation. One or more dispatchers, which are abstract components, handle the filters. Typically a dispatcher is followed by one or more filters, which, in turn, are followed by one or more modules. When a request or response enters the interposition engine **1095**, all filters are executed on it to determine which (if any) modules meet the criteria of the filters. Preferably, modules execute only after all filters have executed.

In an illustrative embodiment, one or more first interposition modules **1100** may alter the request (**6**). In accordance with this embodiment, an interposition module is a software module that examines a locator in the request (**6**), e.g. a URL, and if a particular pattern is satisfied, the interposition module executes code to perform an action either on the locator itself, or more generally on the state of the platform **1040**. For instance, in some embodiments interposition modules could be used to implement a common 'shopping basket"or a "common wallet" on an electronic commerce portal. Yet another aspect of the invention are methods using interposition modules to transform data flow in a browsing session. The transformed data flow may be to provide an electronic commerce transaction function in the context of the network-based partner relationship.

In some embodiments, one of the component resources includes a page from a merchant's on-line catalog. Peer entities may be merchants with such on-line catalog. For instance, a first peer entity may operate a first peer server system **1038** though which the peer entity operates an electronic commerce operation including an on-line catalog of items for which users can make purchase orders. A page forming a portion of this on-line catalog can constitute one of the component resources. Similarly, other component resources could be requested from a second peer server system **1034** operated by a second peer entity distinct from the first peer entity. More generally, the component resources could include any addressable resource capable of being parsed and rendered by the client system **1010**.

A response (**7**) including the component resource requested in the request (**6**) returns. One or more second interposition modules **1120** may alter the response (**7**) as the first interposition modules **1110** may alter the request (**6**). The client application **1100** receives the response (**7**) which is provided (**8**) to a reference rewriting module **1030**.

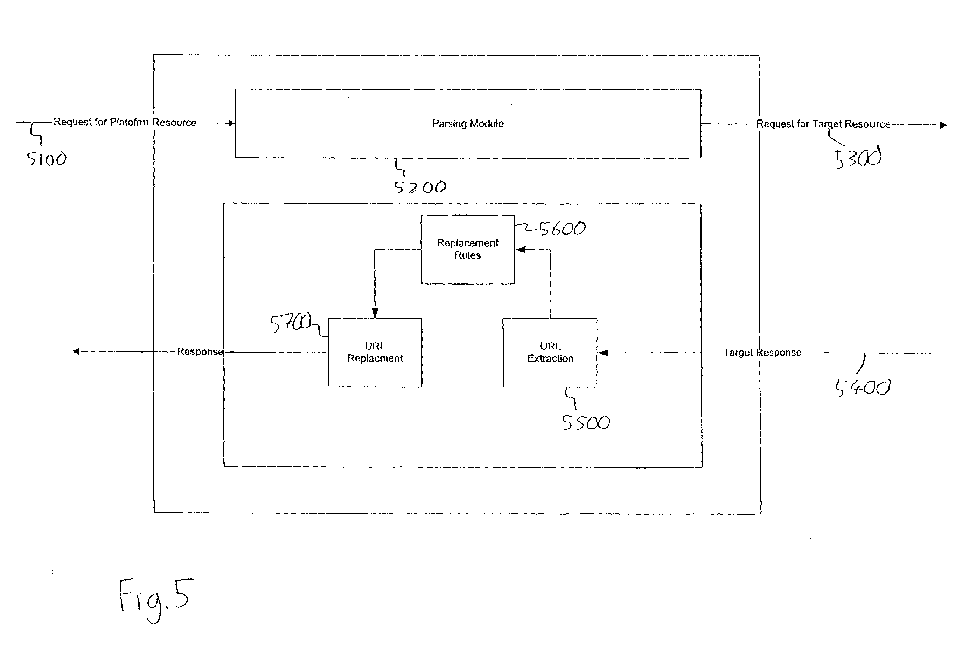

The reference rewriting module **1130** rewrites certain resource references in the response (**7**) to ensure that requests for these resource made by the client system **1010** are directed to the platform **1040.** This is described in greater detail below in connection with **Fig. 5.** Briefly here, references to resources including, for instance, URLs, are rewritten from identifying a resource accessible from a target site such as the first peer server system **1038** to a resource accessible from the platform **1040**. This step thus provides a facility for the platform **1040** to track and monitor a browsing session of the client system **1010** as more fully described below.

The reference rewriting module **1130** provides (**9a**) the component resources (with resource references appropriately rewritten) to the composite site manager **1070** that assembles the component resources in accordance with the definition of the composite site to generate a composite site resource. The composite site manager **1070** provides (**10**) the resulting resource to the server application that then provides this as a response (**11**) to the request (**1**) from the client system **1010**.

The server application **1050**, the reference rewriter **1130**, tracker module **1060** and client application **1100** form a transactional engine **1030** for tracking the browsing session and creating session-level semantic events. In some embodiments, the transactional engine **1130** is multithreaded with its various components communicating through shared memory. In some embodiments it is implemented in a language such as C for increased efficiency.

During the above-described process events are detected and reported from the data flow. In part, this is described above in connection with the server application **1050** passing events (**2**a) to the tracker module **1060**. In addition, the reference rewriting module **1130** may be configured to detect and report events **9**b based on the contents of the component resource when parsing the component resources to detect references for rewriting. For instance, if the component resource were a page from a merchant's on-line catalog that indicated a price for an item that was purchased, the price could be detected and reported as the event **9**b. As one skilled in art having the benefit of this disclosure will appreciate, the type and particulars of events 9**b** detected and reported in this fashion is limited only by the data flow in the browsing session.

One deficiency, however, in the data flow of a client-server request/response cycle is that it is in the semantic of the request/response cycle. Ordinarily this semantic level is too low for purposes of effectively managing network partner relationships. Fundamentally, any fact in a semantic that spans multiple requests/responses cannot be represented by an event drawn from a single request/response cycle. Yet, it is in such higher-level semantics that facts useful for the management of the partnership relationship are desired. The session-level semantic event that a document was received that included a particular number in a particular place in a particular pattern is too low to take meaningful action in a partner relationship, e.g., crediting a commission from a merchant to an affiliate. In a higher-level semantic, the document has the meaning of an order confirmation page and the number is the purchase price. In some embodiments, events in the session-level semantic are extracted from HTTP Request and Response messages; these events are accumulated or aggregated, and higher-level semantic events are derived through a rule-based system where activation of a rule coincides with transformation to the higher-level semantic that can draw on the aggregated or accumulated information.

A mechanism for generating higher-level semantic events from the low session-level semantic events involves the tracker module **1060** providing (**3**) session-level semantic events (**2**a & **9**b) to a low level event manager **1140**. An method and system for performing this feature are described in the aforementioned patent application entitled "Method and System for Transforming Session Data," filed concurrently herewith forming Annex B.

The low level event manager **1140** publishes a sequence of tracked session level semantic events across a first message broker **1150**. In some embodiments the message broker uses Java Messaging Services, although other systems could be used. A set of higher-level semantic event generators **1160** subscribe to the first message broker **1150** and generate events in a higher-level semantic from the events in a session-level semantic. This is describe in greater detail in the concurrently filed patent application entitled "Method and System for Transforming Session Data". Note also that an interposition module, such as one of the first interposition modules **1110** may also publish events on the first message broker **1150** either directly as illustrated in **Fig. 1**, or by providing them upstream of the message broker **1150** to the low-level event manager **1140**.

The set of higher-level semantic event generators **1160** provide higher-level semantic events across a second message broker **1155**. The second message broker **1155** may be of the same or different type of messaging service as the first message broker **1150**. Also, in some embodiments the second message broker **1155** publishes across a public network.

Applications for managing aspects of the network partner relationship can subscribe to the higher-level semantic events provided on the second message broker **1155**. In some embodiments, a compensation management application **1170** subscribes and manages flows of compensations among the peer entities forming the network partner relationship. In some embodiments, a statistics generation application **1180** subscribes and generates summary data and analysis about financial, administrative, or network aspects of the network partner relationship. More generally, a custom application **1190** can be written to provide particular services based on the higher-level semantic events.

Still further, in some embodiments the composite site manager **1070** receives higher-level semantic events from the second message broker **1155** and dynamically alters aspects of composite site resources based on the higher-level semantic events.

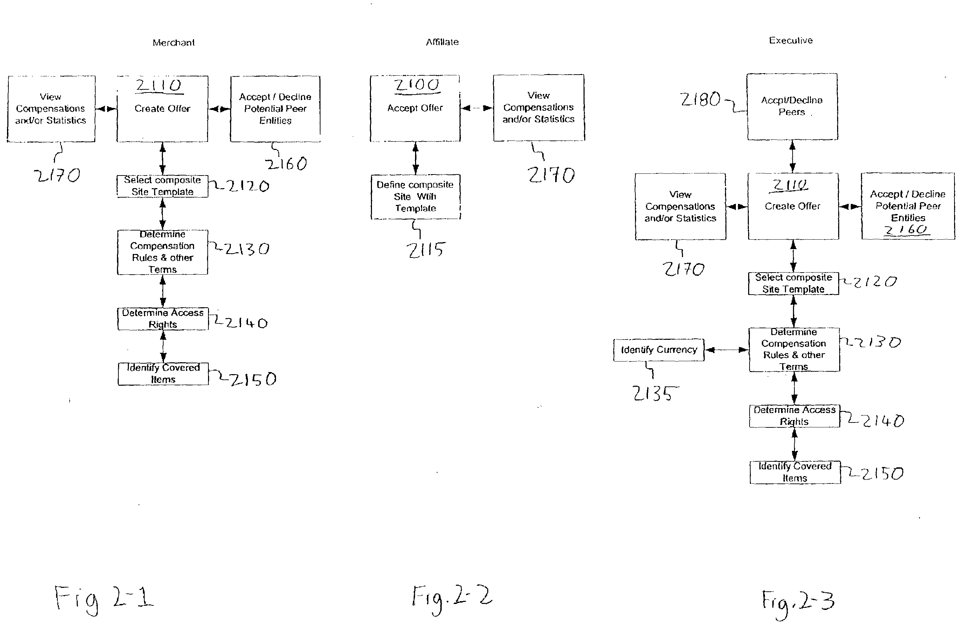

**Fig. 2-1, 2-2,** and **2-3** depict functions available to various peer entity relationship participants in accordance with an illustrative embodiment. In some embodiments the functions depicted in these figures are accessed through a browser-based interface to the relationship engine **1090** where server-side logic controls generation of the pages implementing the interface on the browser and generates/updates the appropriate data objects in the database **1080** based on browser-user input.

**Fig. 2-1** depicts functions available to a peer entity identified as a 'Merchant.' A create offer function **2110** involves creating a definition of a (potential) peer entity relationship ("offer"). Creating an offer involves identifying items covered by the offer **2150**. In some embodiments, the items are identified with reference to the on-line catalog of the Merchant although the items covered could be identified in other ways. Creating an offer also involves determining compensation and other terms **2130** for the offer.

In some embodiments the compensation terms are rule-based and provide conditions that must be satisfied and the resulting compensation if the conditions are satisfied. For instance, the Merchant may pay a **5**% commission if an item is sold. One skilled in the art having the benefit of this disclosure, will readily appreciate that the particular rules determining compensation are not fundamental and may be tailored to the particular circumstances of the peer entities. Further, certain common compensation rules (e.g. commission as a percentage of sales price) could be predetermined and that other compensation rules for be custom-developed. In some embodiments, offers include other terms including, for instance, an exclusivity term, a compensation period, a renewal schedule, etc. As with the compensation rules, these could be predetermined and selected among or custom-developed.

Creating an offer also involves determining access rights **2140** to information generated in connection with implementation of the offer and privileges for changing aspects the offer. Finally, another aspect of creating an offer is selecting a composite site definition **2120**. The composite site definition determines a manner in which component resources from various peers, e.g., the Merchant, will be assembled during a user's browsing of resources within the scope of the offer.

Another function available to the merchant is viewing compensation or statistics **2170**. After an offer has been accepted (as described below) activity within the scope of the offer may generate compensation flow to or from the Merchant and may generate statistical information. The viewing compensation or statistics **2170** function allows the Merchant to have this information presented.

Yet another function available to the Merchant is to accept or decline potential peer entities **2160**. In particular, after an offer is created, interested entities may seek to accept the offer (as described below) and thus become peer entities. When such an entity has indicated a desire to accept the offer, the Merchant can either accept or decline.

After an offer has been created, it is made available and interested entities may review it and indicate their desire to accept the offer. Those entities accepting offers are termed "Affiliates". As depicted in **Fig. 2-2**, functions available to an Affiliate include an accept offer function **2100**. The accept offer function **2100** may also be accessed with a browser-based interface to server-side logic as described above in connection with the Merchant functions. In addition, the Affiliate defines the composite site **2110** that will be used with the offer. Using the definition of the composite site selected by the Merchant, the Affiliate specifies their component resources that will be used in presenting the composite site during the user's browsing session. As with the Merchant, the Affiliate may view compensation or statistics.

A third type of entity in addition to Merchant and Affiliate is termed an "Executive." The Executive has functions available to it in addition to those of the Merchant. In particular, the Executive identifies a currency **2135** that will be used for offers implemented by the platform. Finally, the Executive may accept or decline Merchants **2180** that may desire to create offers.

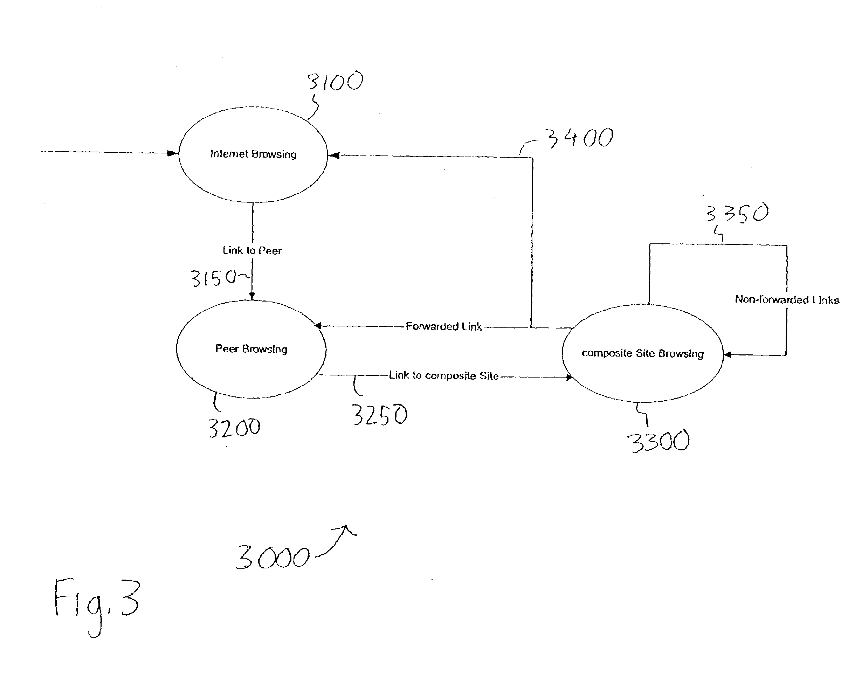

**Fig. 3** depicts a state diagram illustrating a composite site browsing session **3000** in accordance with an illustrative embodiment in which a user operates a conventional web browser. Initially the user in an internet browsing state **3100** follows a link to a peer site **3150** and enters a peer browsing state **3200**. While in the peer browsing state **3200**, for instance navigating a site of an Affiliate, the user follows link to a composite site **3250**. More particularly, the link to a composite site **3250** is a URL of the form:
<protocol>://<path to platform>/<field1>/<field value**1**> ... <fieldN>/<field valueN>/<id. of target resource>.

The portion <id. of target resource> is an identifier of a resource that will be included in the composite site resource provided to the user when a request is made for the resource associated with the link to a composite site **3250**. In some embodiments the identifier is a URL; in others a key used in a lookup data structure, and, in any event, the particular form is not fundamental. The link to a composite site **3250** is associated with a particular offer and is provided to the Affiliate in connection with offer creation/acceptance interaction previously described. That is, when a Merchant has agreed to an Affiliates' acceptance of an offer the link to a composite site **3250** is provided to the Affiliate to place on the Affiliate's site. Thereafter, when a user follows this link, their session is tracked through the platform **1040**.

Now in a composite site browsing state **3300**, the resources provided to the user's client system have two features. First, when following a link to request a resource, the response sent to the user's browser is an composition of component resources (as is further described below in connection with **Fig. 4**) including resources from the Merchant peer entity and the Affiliate peer entity. Second, links in the component resources (with a few exceptions described below) are rewritten to point to a server system hosting the platform **1040** creating the composite site. For instance, one of the component resources in a composite site page could be a page from an on-line catalog of the Merchant. This page could initially have a link that points to a different page in the Merchant's on-line catalog. This link is rewritten to point to the platform **1040** and to include an identifier of the different page.

One skilled in the art will appreciate that while following links provided as part of the composite site, the user's browsing session consists of requests sent to the platform **1040**. As for the exceptions noted above: first, certain links may not be rewritten ("forwarded links"), for instance those which point to resources provided by others than the Merchant and Affiliate; second, it should be noted that URLs for resources which themselves could not include links, e.g., an image file, need not be rewritten to maintain the above-described functionality. Thus, from the composite site browsing state **3300**, the user's browsing session returns to the composite site browsing state **3300** when following non-forwarded links **3350** and leaves the composite site browsing state **3300** when following a forwarded link **3400**.

**Fig. 4** depicts schematic of a composite site page **4000** as it could be parsed and rendered on a user's browser in accordance with an illustrative embodiment. The composite site page **4000** includes a page from a first peer's on-line catalog **4100** and a first banner **4400** from the first peer. The composite site page **4000** also includes a second banner **4300** from a second peer. In some embodiments, the first peer is a Merchant and the second peer an Affiliate. The composite site page **4000** also includes an offer-related document **4200** that may be created in connection creation of the offer and a sales logo **4500** indicating, for instance, a special sale or promotion.

One skilled in the art having the benefit of this disclosure will readily appreciate that possible layout of the composite site page **4000** is, in no way limited, to the specific layout shown in **Fig. 4**. Rather, one skilled in the art will now readily apprehend that may others could be made, and apprehend how to make them. Further, the layout of the composite site page **4000** need not be static and could change from request to request.

**Fig. 5** depicts a block diagram of a reference rewriting module (such as the reference rewriter **1130**) in accordance with an illustrative embodiment. The reference rewriting module rewrites resource references that point to target resources to references that point to platform resources.

Initially when the platform **1040** receives a request for platform resource **5100** it is passed to a parsing module **5200** that disassembles the reference and extracts an identifier of a target resource. Next a request for the target resource **5300** is sent and a response **5400** received including the target resource. In illustrative embodiments of the invention, the HTTP protocol is used and resources identified with URLs.

A URL extraction module **5500** parses the response **5400** to identify URLs that should be rewritten. One skilled in the art will appreciate that there are several levels of generality in which URLs can be detected and rewritten/substituted. As an initial matter, the response **54000** could be an ASCII file, a binary file, or a combination. The contents could be in a particular language, e.g., HTML, Java/ECMA Script, or a structured document such as a MACROMEDIA FLASH file, XML file, or PDF file. Still further, the response **5400** could be an unstructured document. In some embodiments, there are plural URL extraction modules **5500** and each is associated with a particular language and handles documents in that language.

For structured documents, preferably the structure is known, and, if the size of the document is stored as part of the document, this may be extracted as well and rewritten to accommodate changes to the size of the document on account of rewriting URLs. For unstructured documents, parsing may not be possible and pattern matching may be used.

The URL extraction module **5500** need not extract each URL for rewriting and in some embodiments, URLs that identify documents which themselves do not contain any selectable links, e.g., images, sound files, video clips, are left unaltered.

For URLs that should be replaced, a set of replacement rules **5600** define how the replacement should be affected. The replacement rules **5600** should be suitably chosen to effectively replace the URLs without introducing errors into the expected behavior of the user's client system when presenting the altered document. For documents in a particular language, the replacement could be language specific. In HTML, for instance, simply placing the original URL in the data portion of the path of a new URL that references a resource on the platform **1040** could be sufficient. In JavaScript, where the URL could be generated at the client-side after rendering, the replacement rule may rewrite functions generating such URLs to be wrapped inside another function that calls the original function, receives the result, and handles the result as described above for HTML.

For structured or semi-structured documents, URLs may be substituted as described above for an HMTL document, however care should be taken to maintain any internal consistency in the document. For instance, a size field should typically be increased to account for the increased length of the substituted URLs. As noted above, for unstructured documents, search/replace with pattern matching could be used.

Based on the replacement rules **5600** a replacement reference is determined and a URL replacement module **5700** replaces the original reference with the replacement reference. One of skill in the art will appreciate that, with decreased generality, other cases of reference replacement can be handled. For instance, client-side state objects (commonly known as "cookies") can be replaced so that an original cookie set by a target site is wrapped in a cookie set by the platform. On subsequent requests to the platform, this cookie will be sent, the target cookie extracted and forwarded along with the request for a target resource.

Another example is secure sockets layer (SSL) sessions. For SSL sessions, the platform initiates an SSL connection with the user's client system as a server and another SSL with the target system as a client; i.e. the platform acts a 'man-in-the-middle' observer. The platform then receives encrypted requests from the client system, decrypts the requests, and submits a suitably rencrypted request to the target system. The response from the target system is decrypted, references are replaced as described above, and then rencrypted and returned as a response to the client. As one of skill in the art will appreciate, the platform should obtain suitable certificates for carrying on in this manner.

Although the present invention has been described in terms of features illustrative embodiments, one skilled in the art will understand that various modifications and alterations may be made without departing from the scope of the invention. Accordingly, the scope of the invention is not to be limited to the particular embodiments discussed herein, but should be defined only by the allowed claims and equivalents thereof.

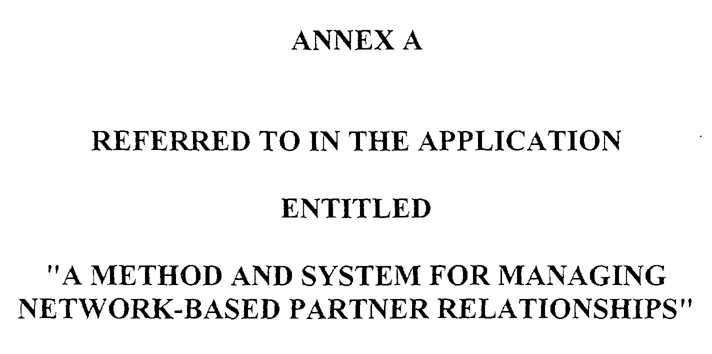

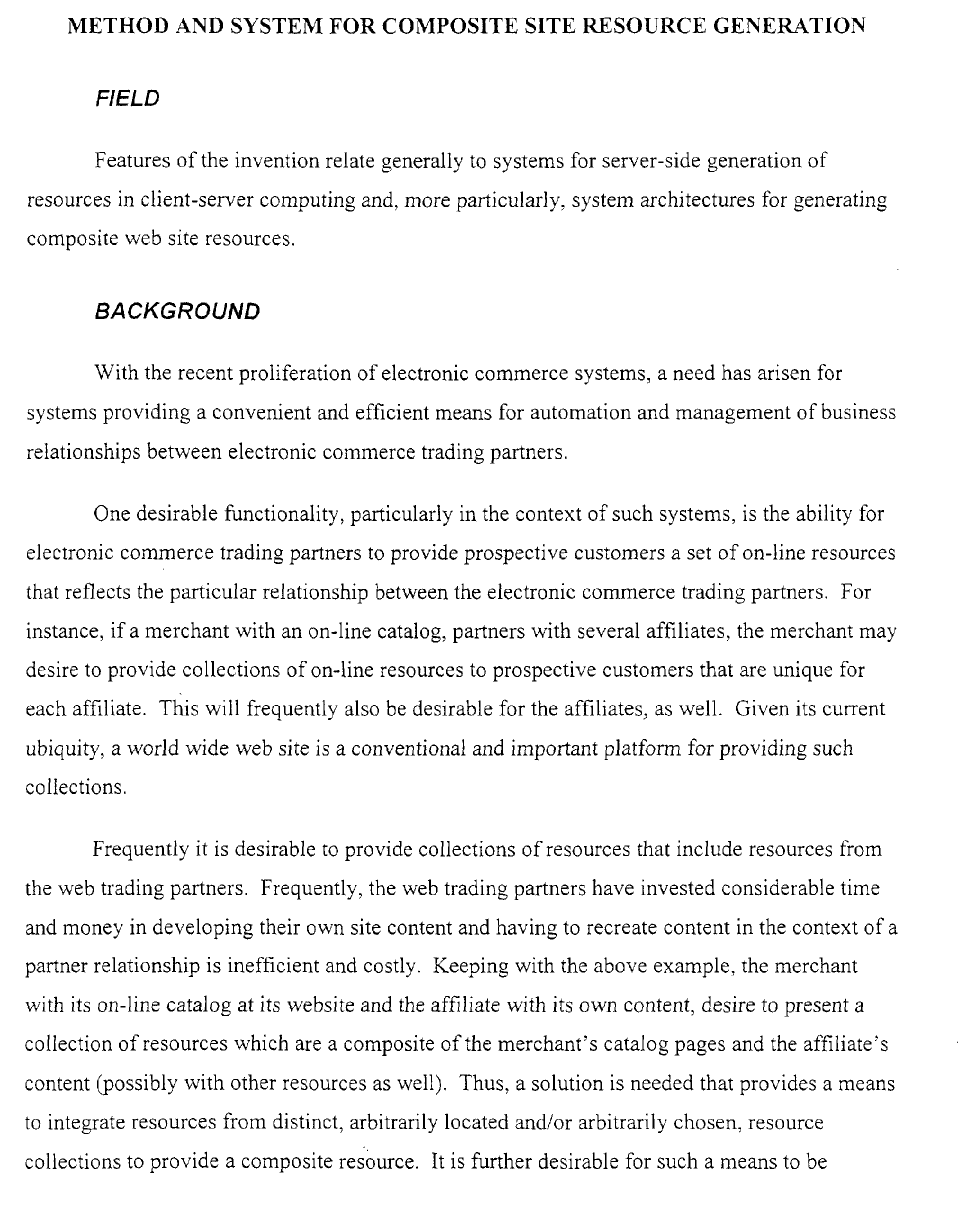

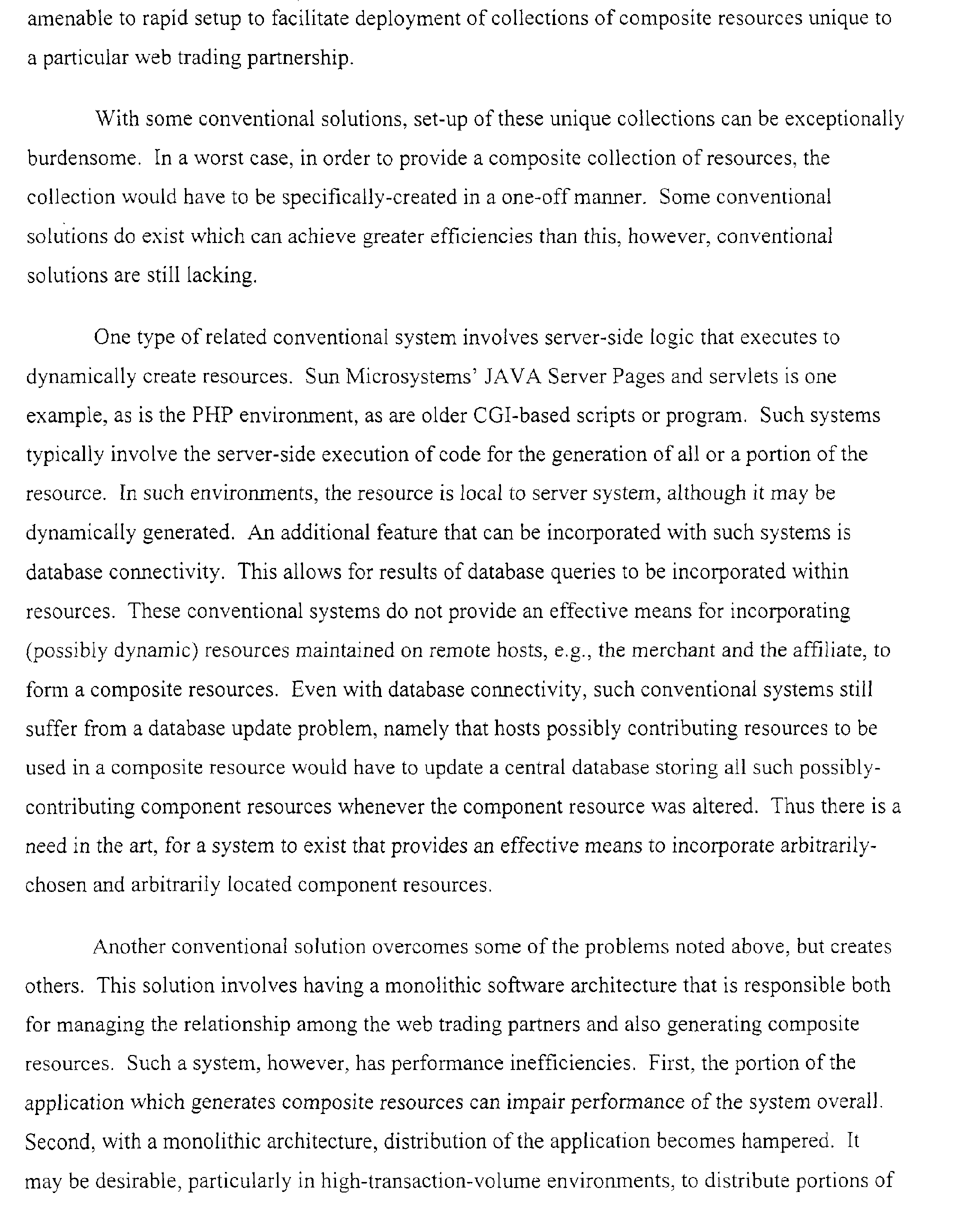

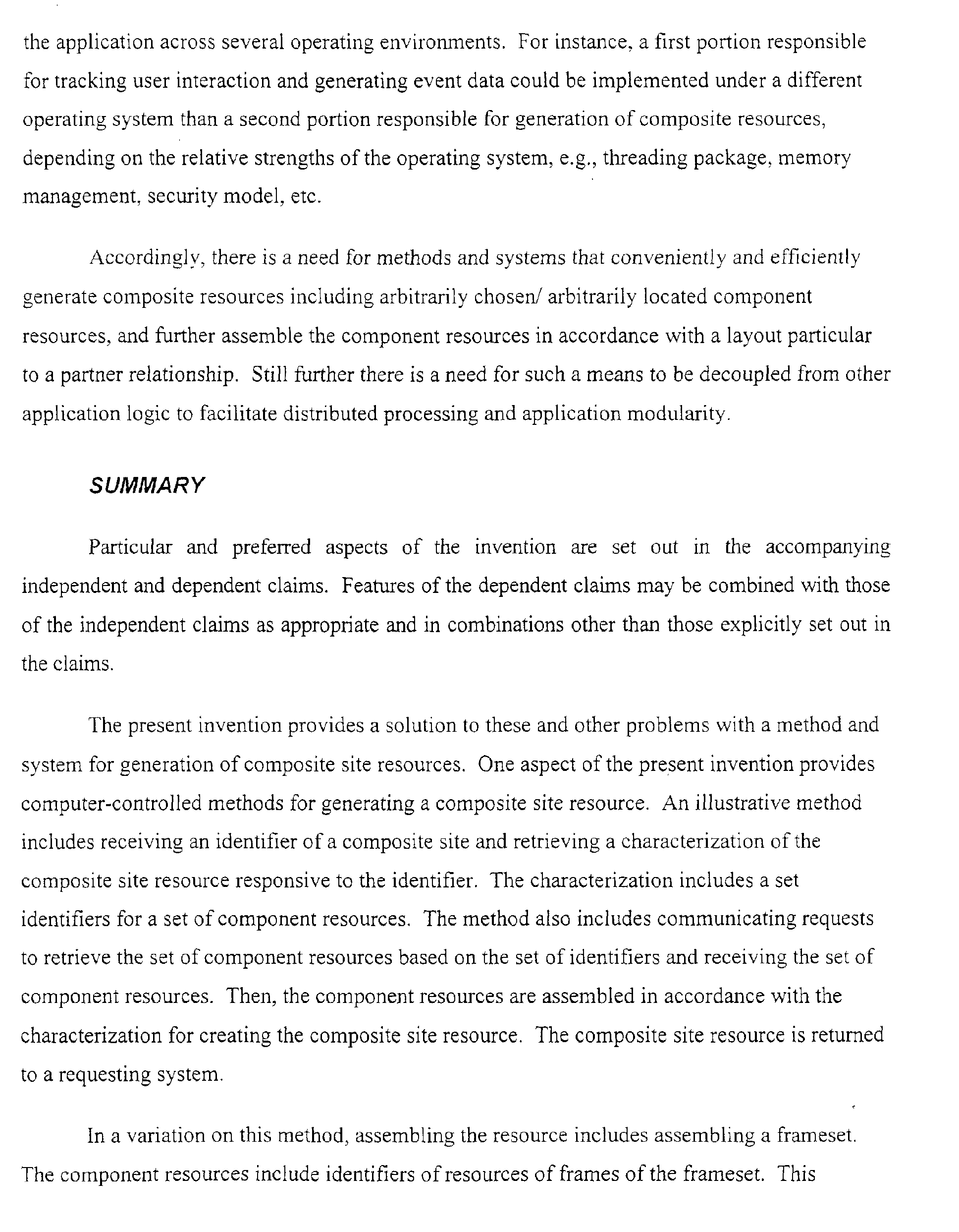

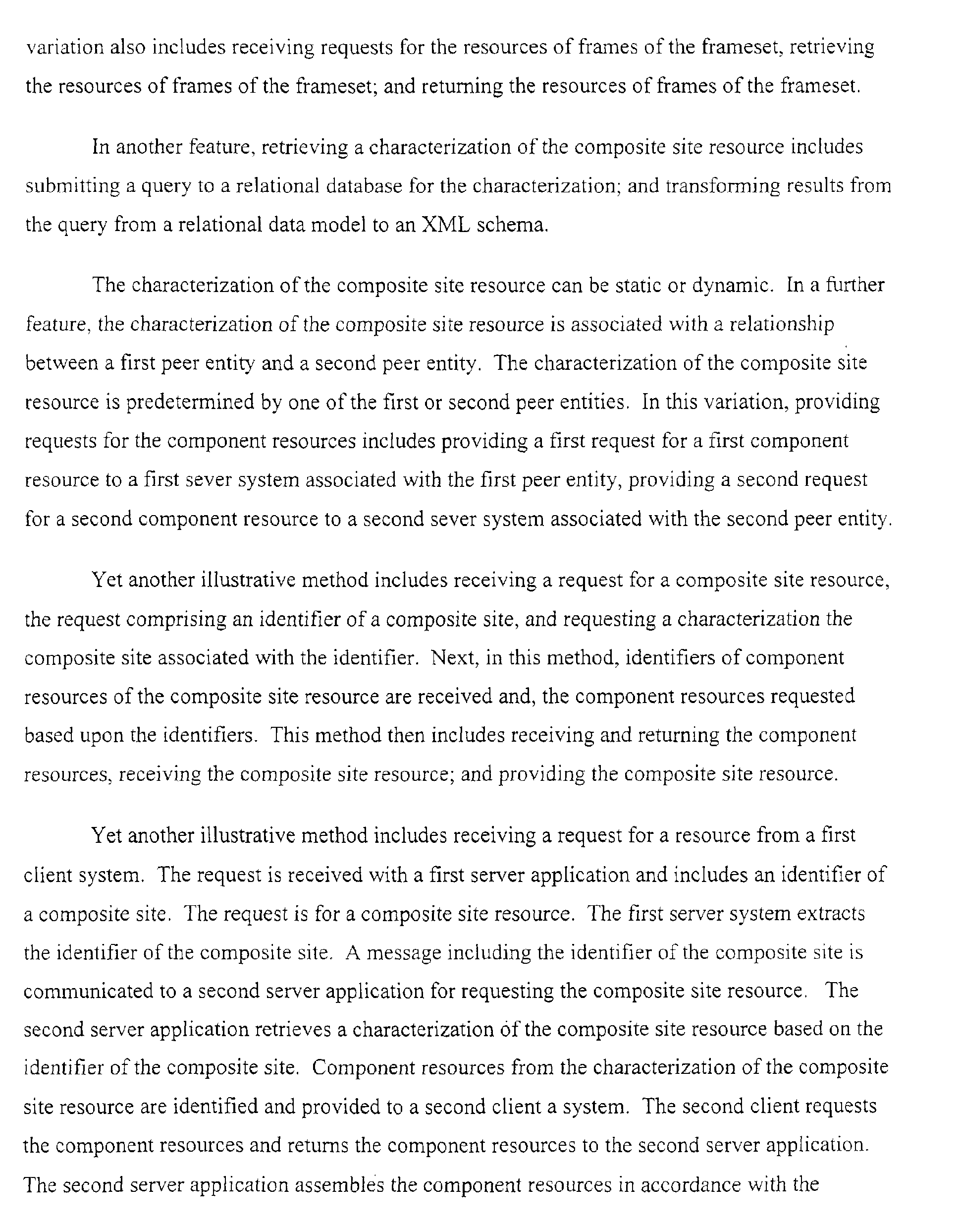

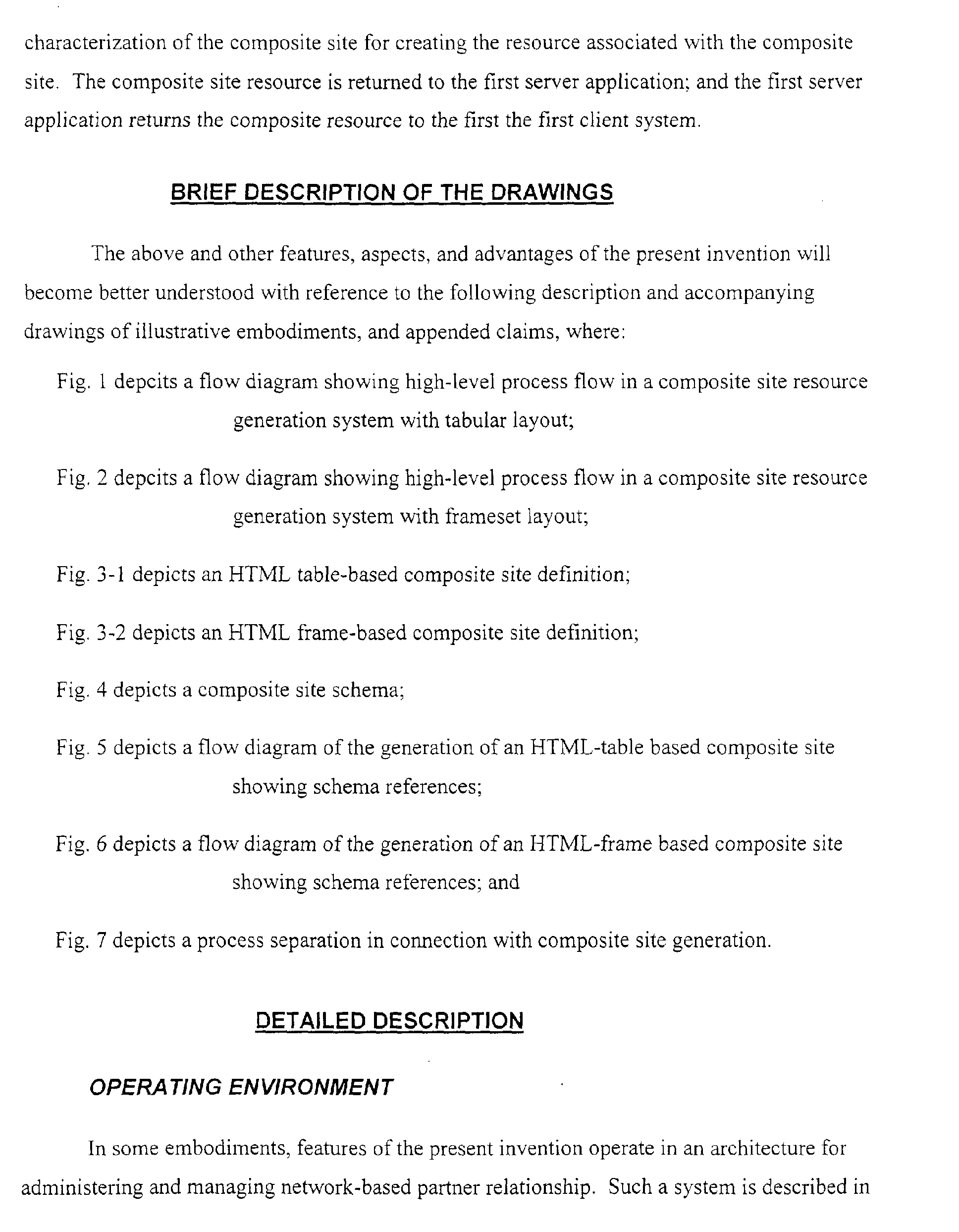

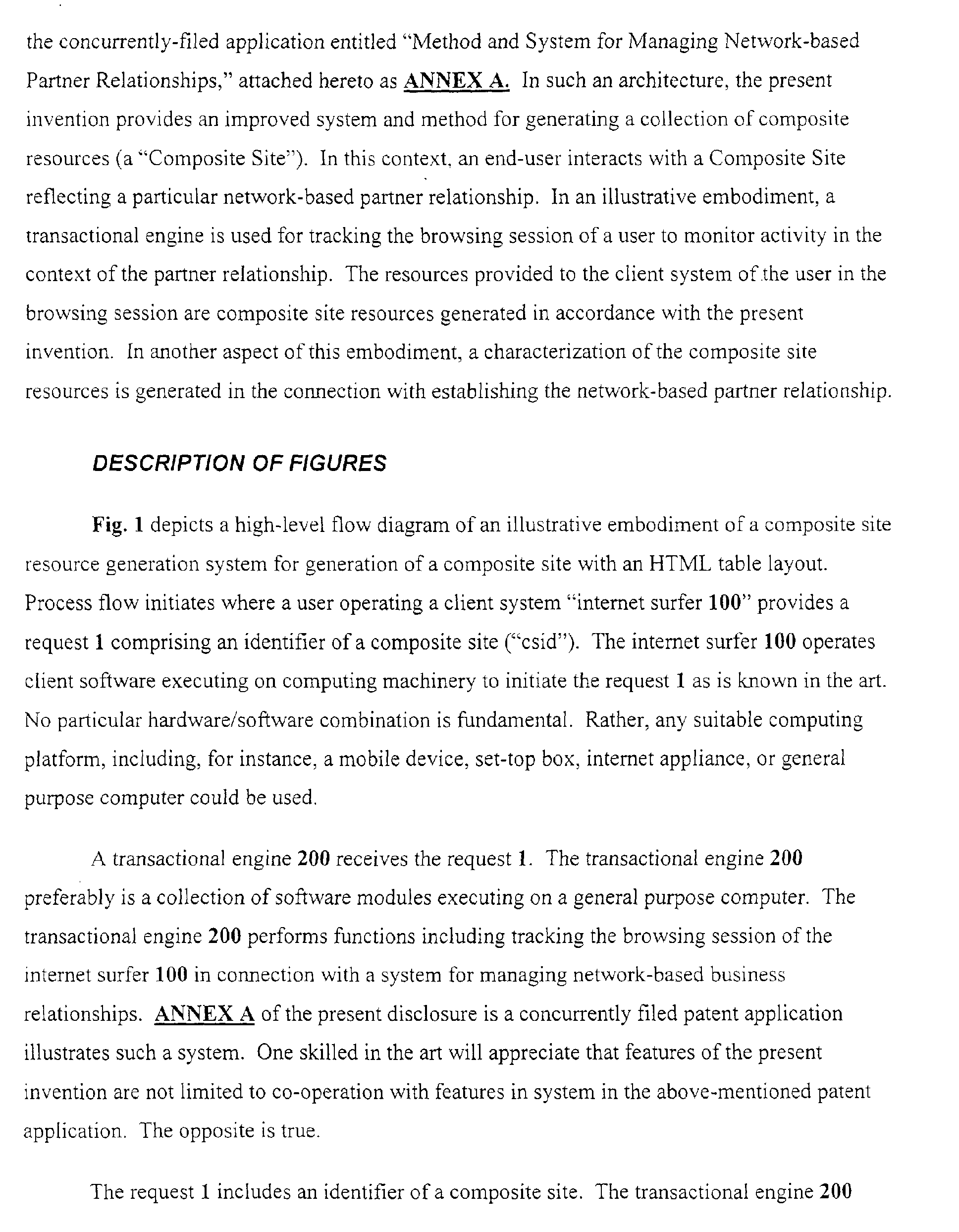

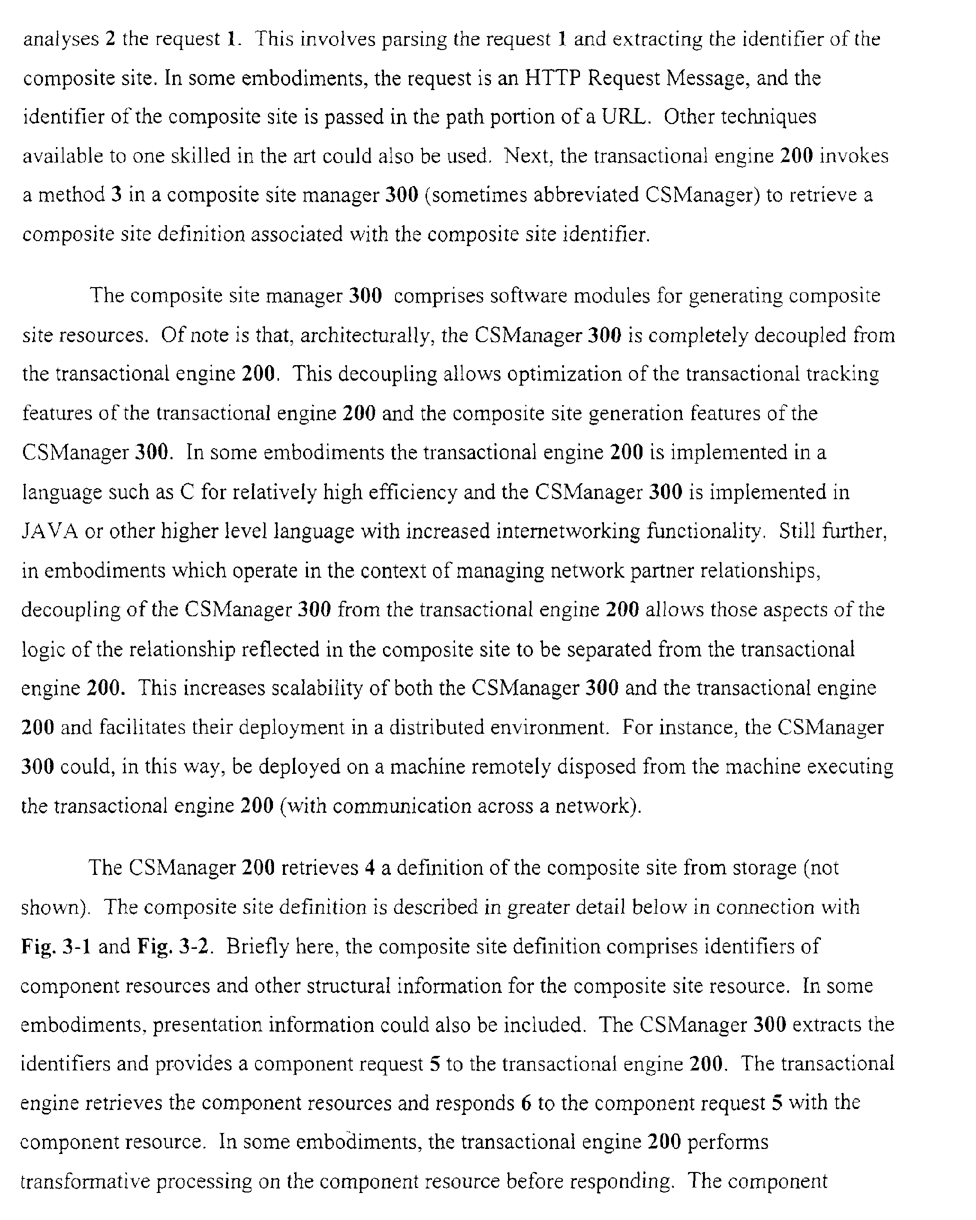

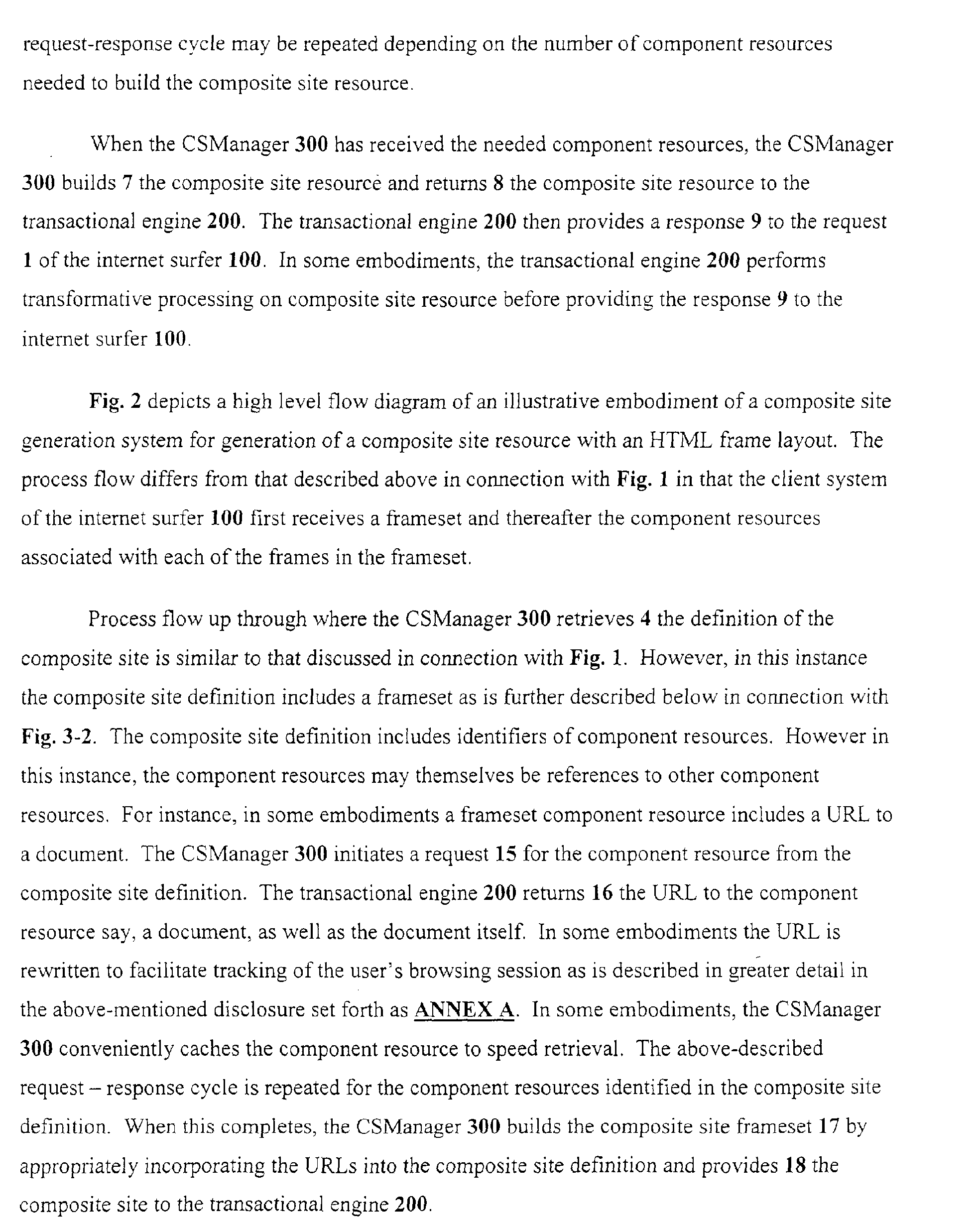

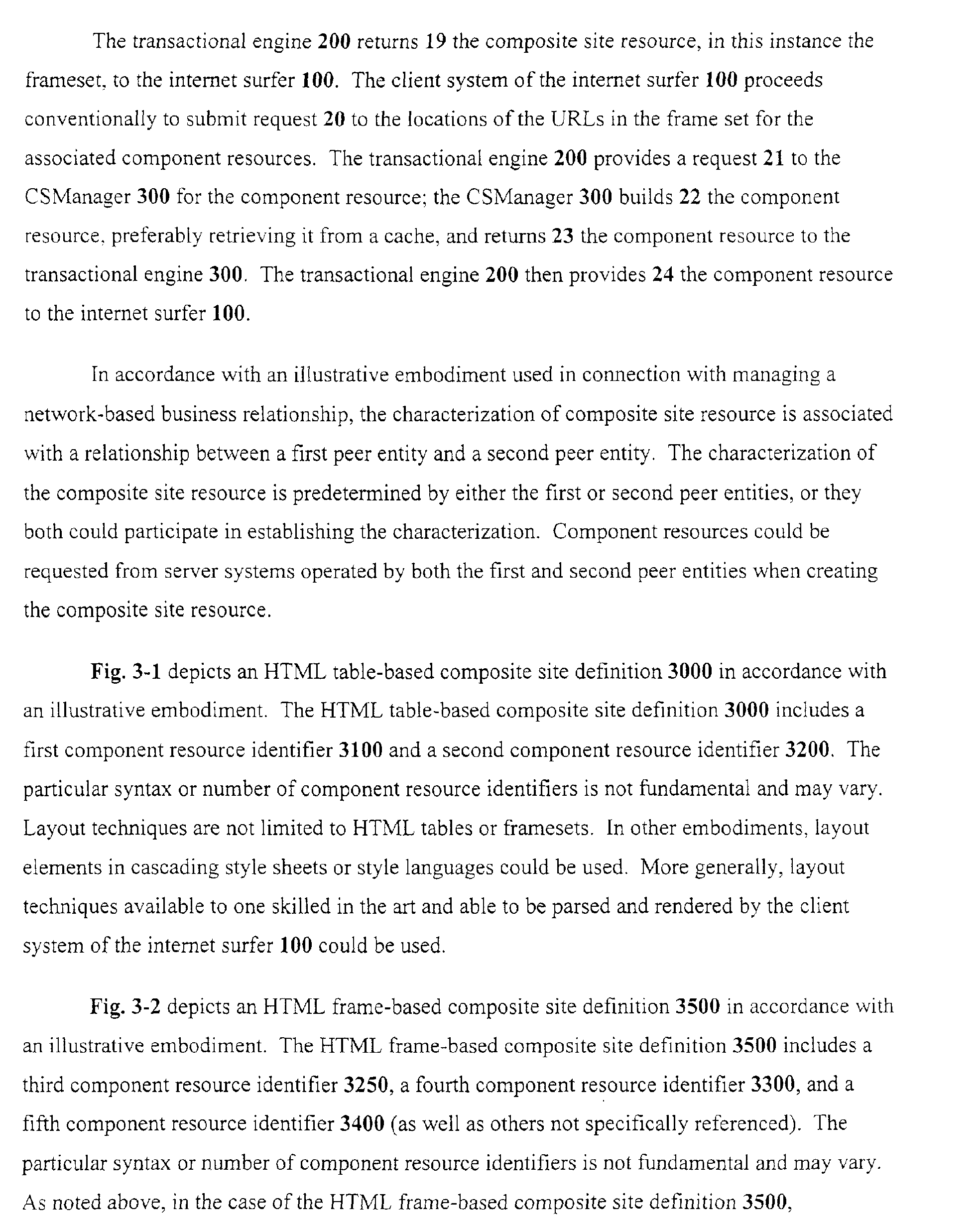

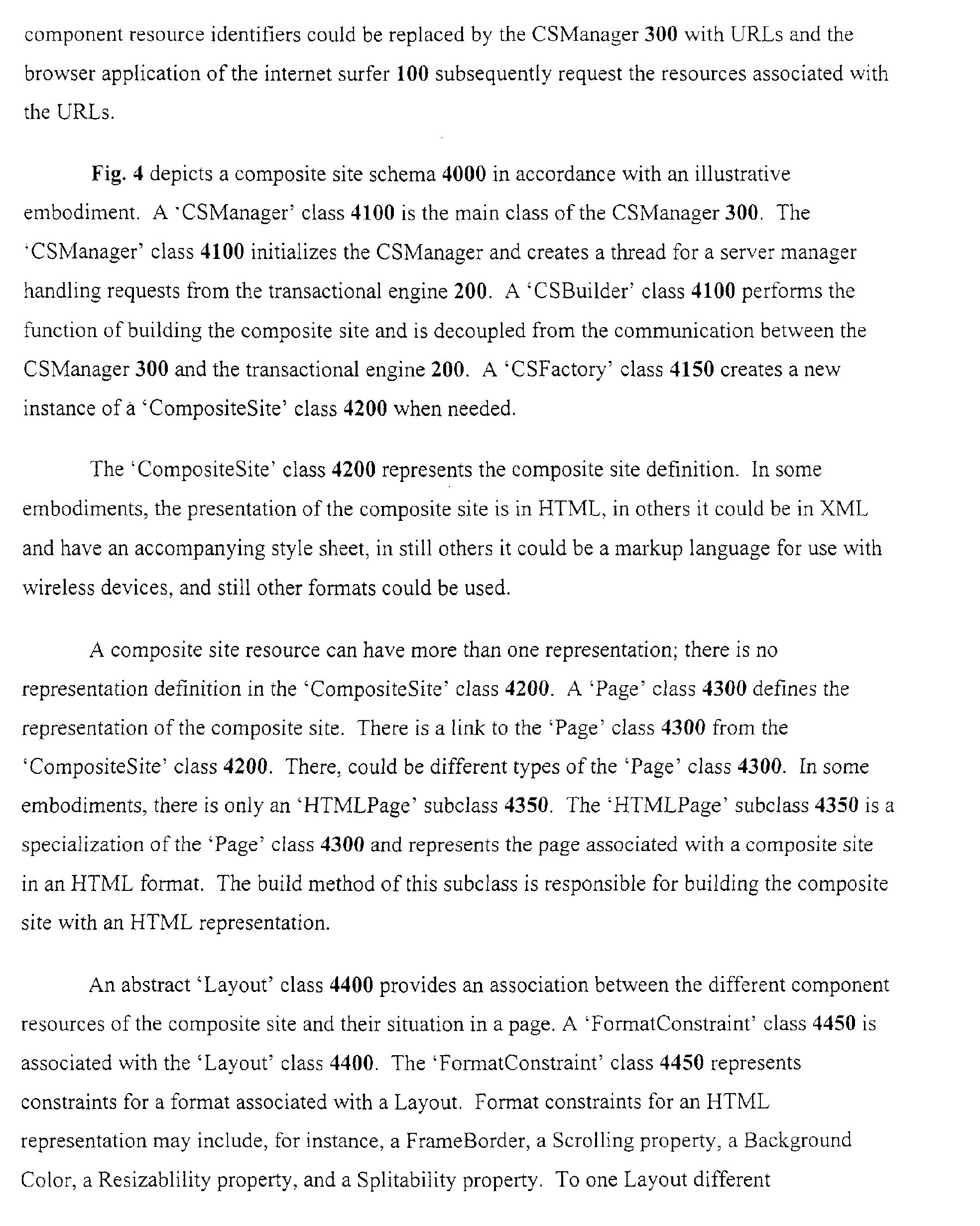

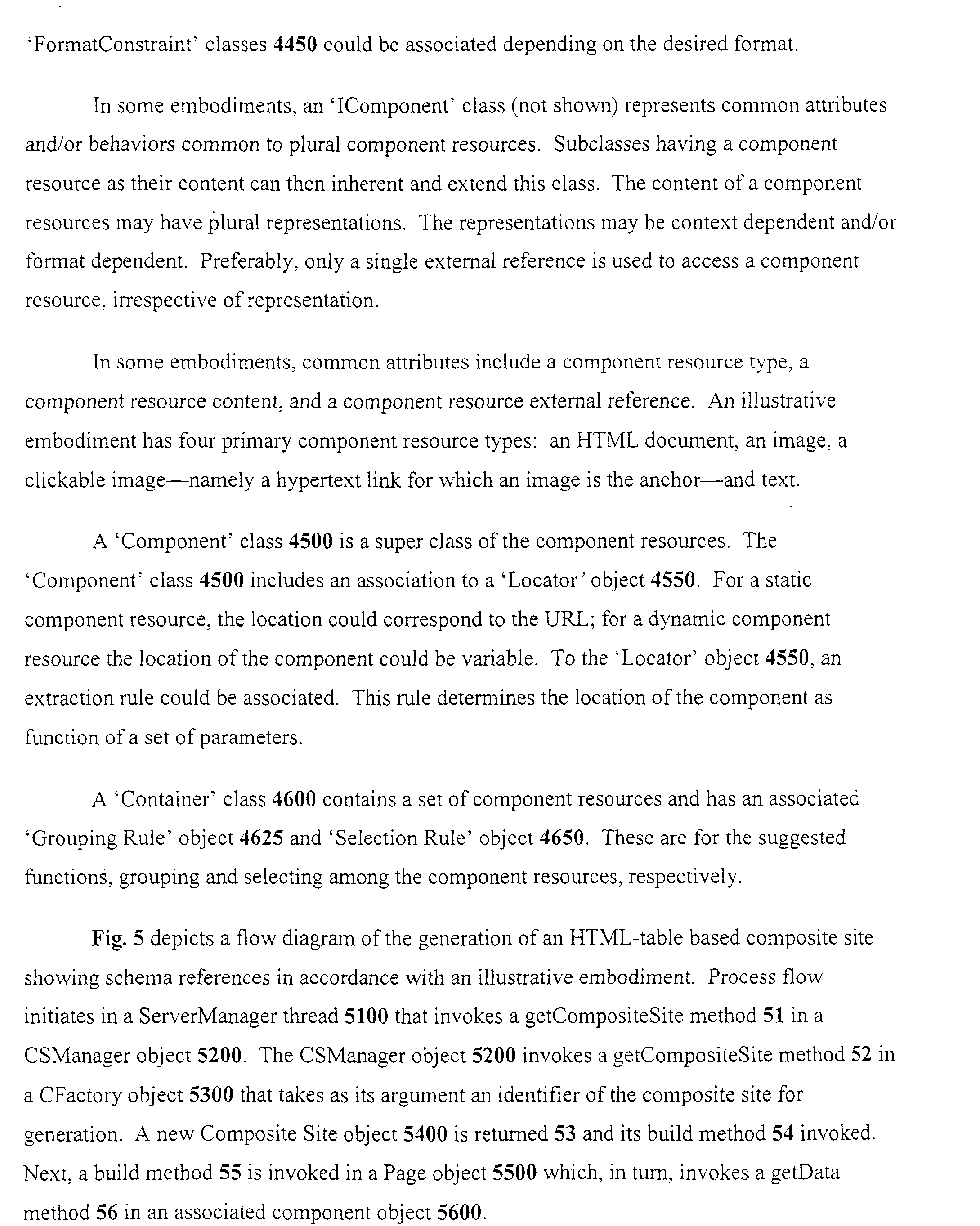

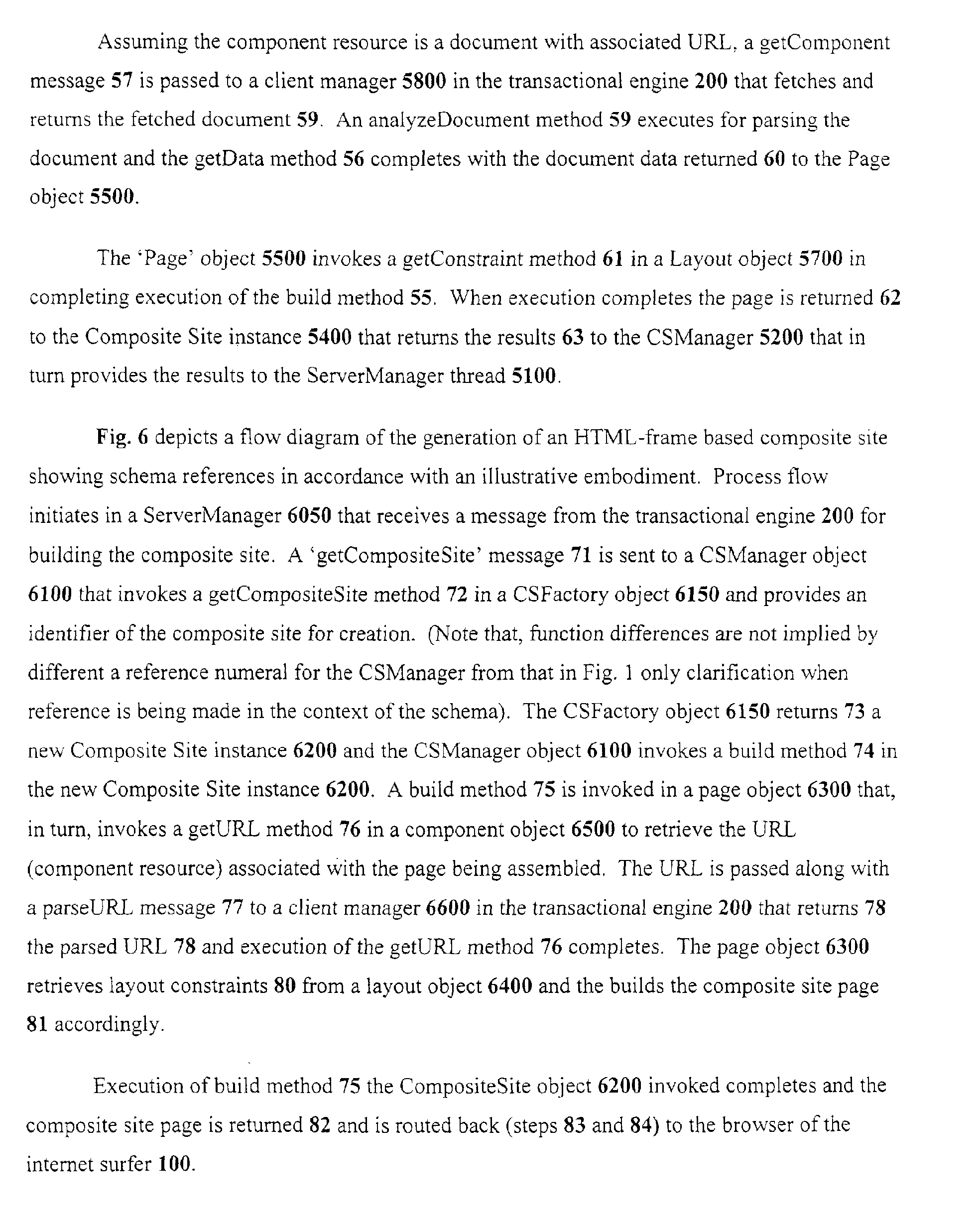

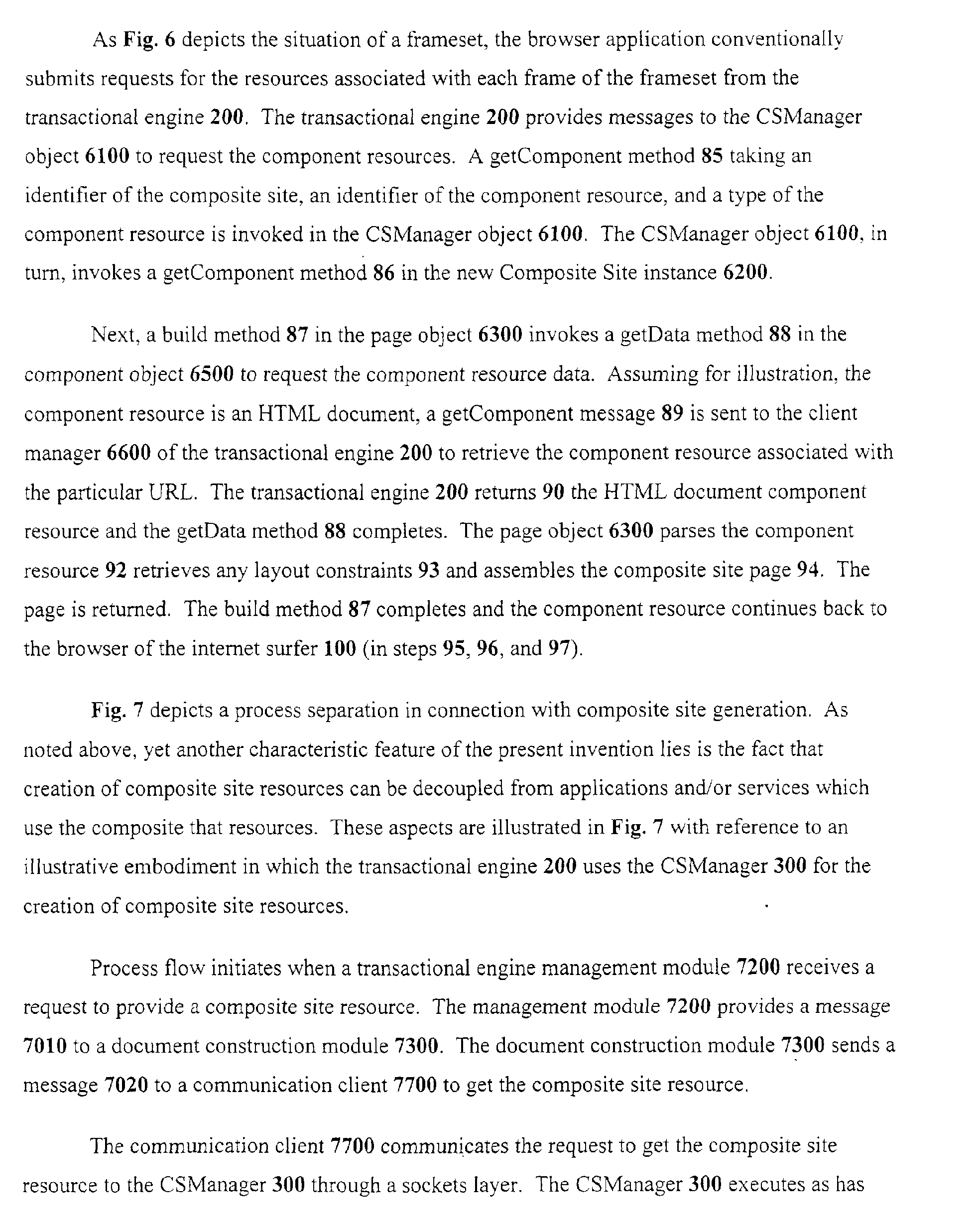

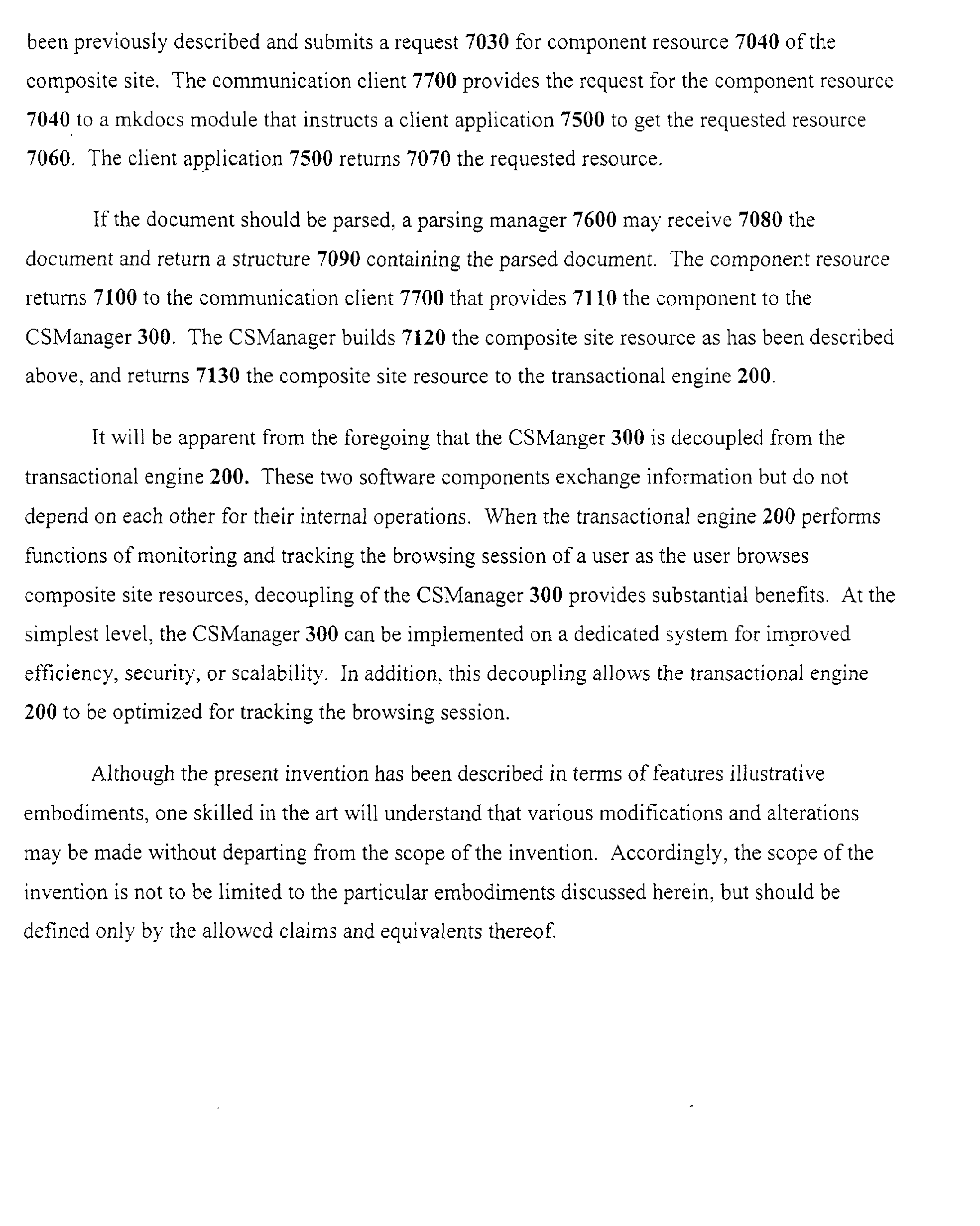

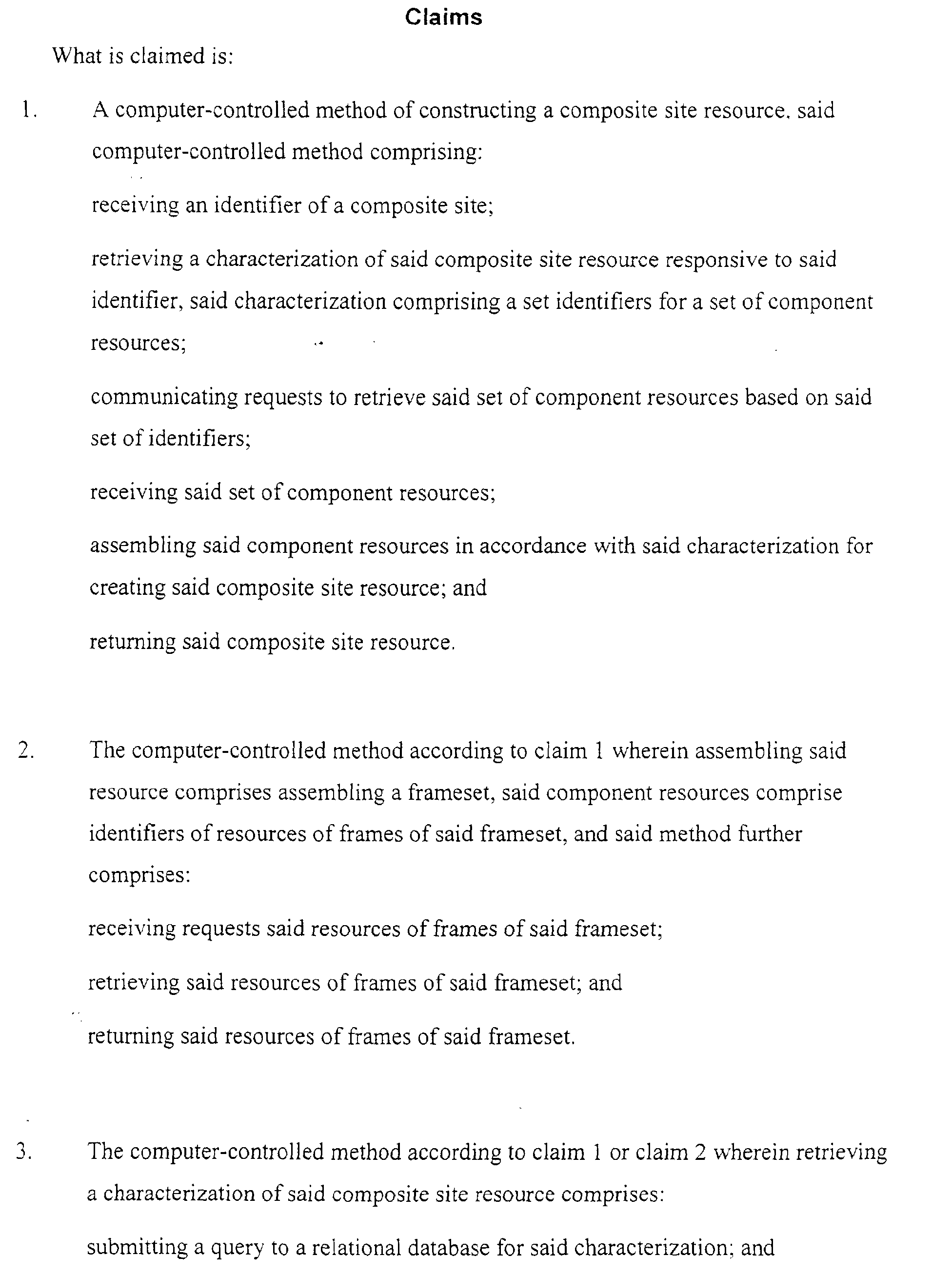

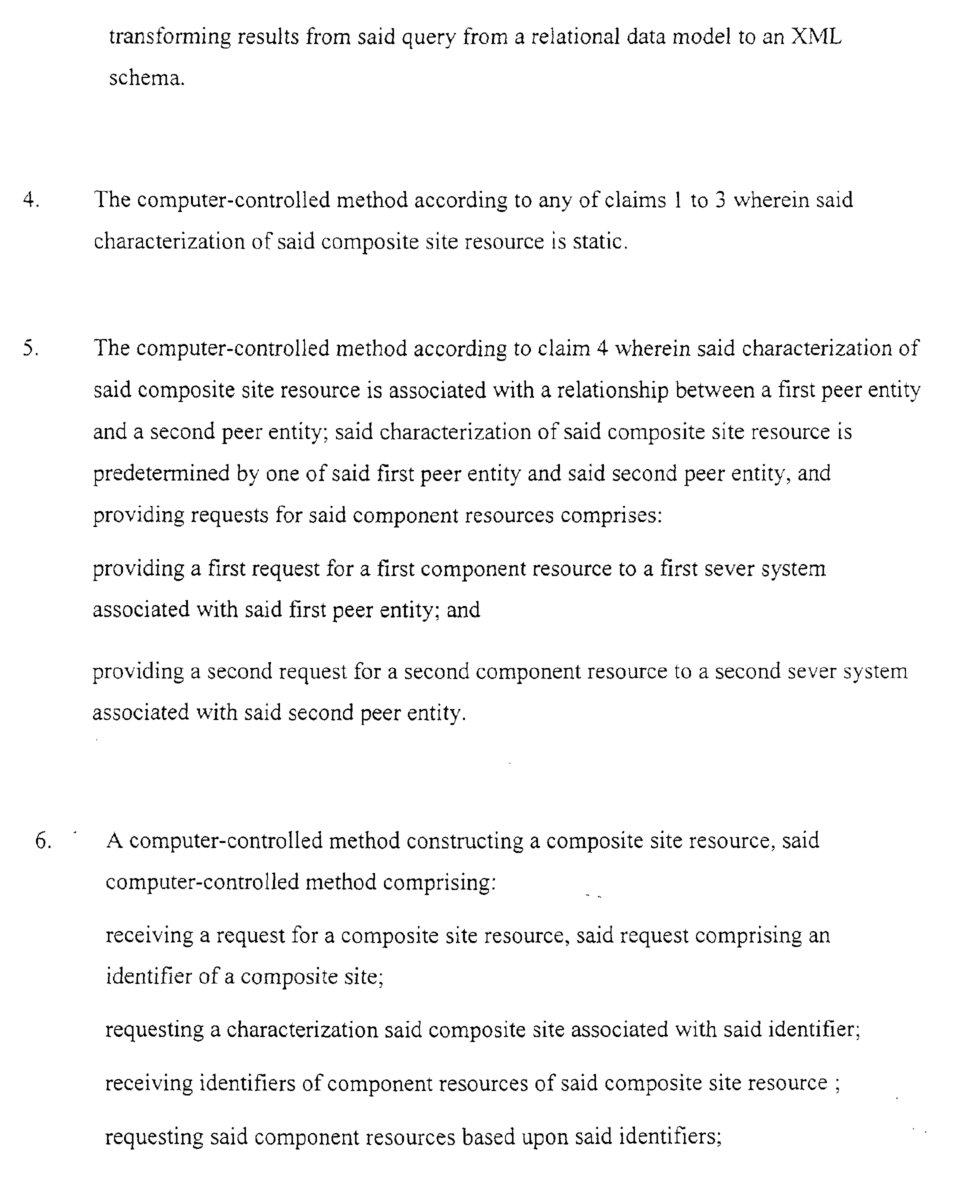

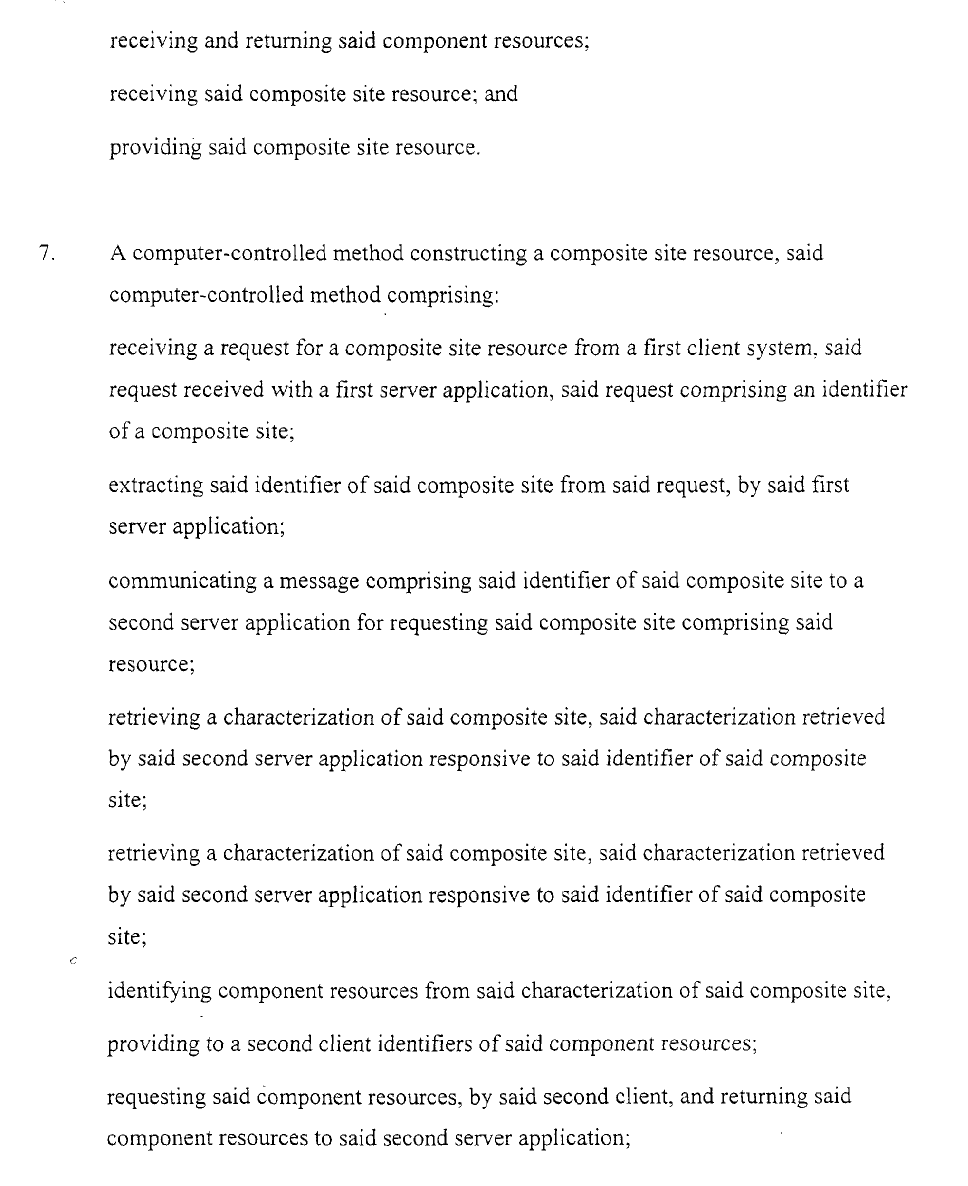

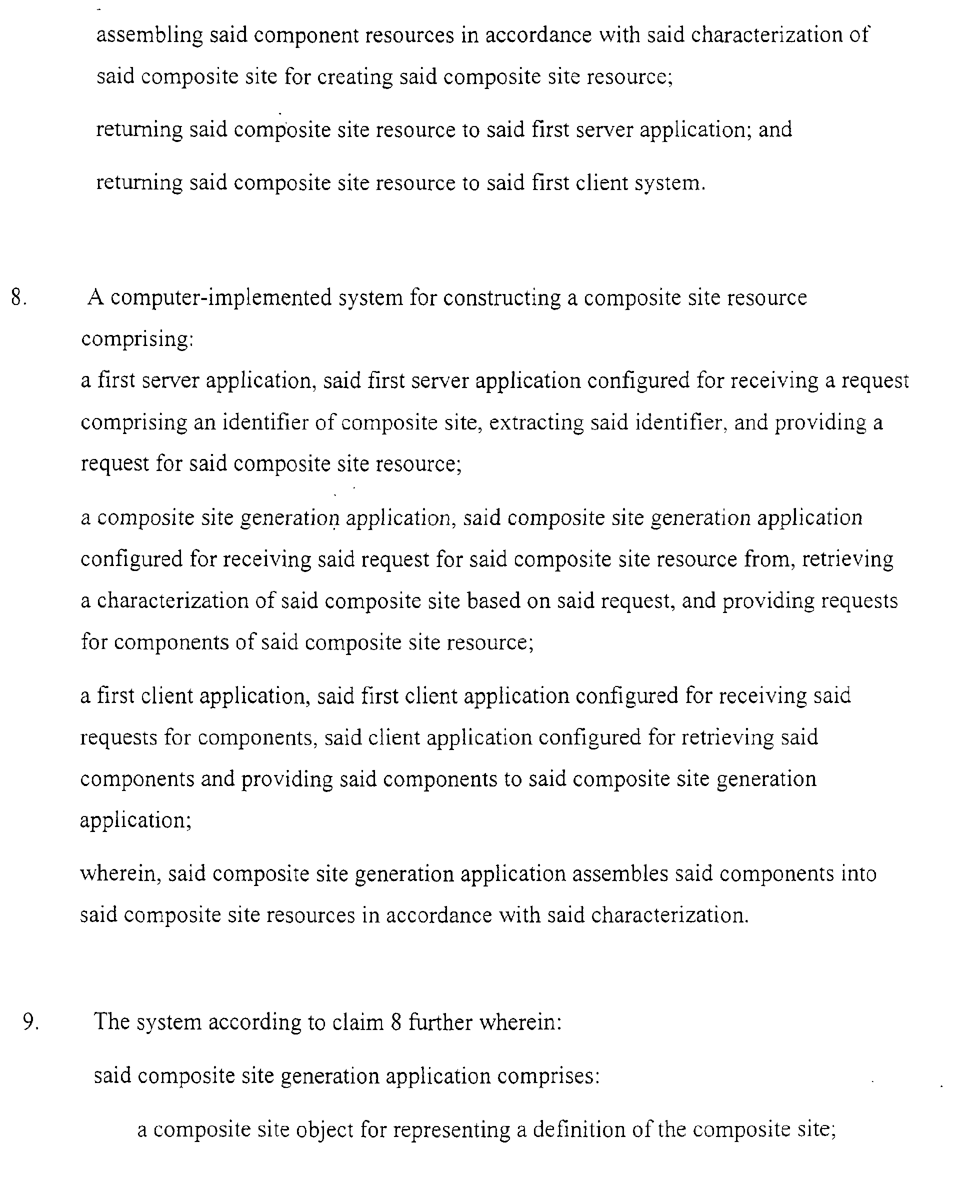

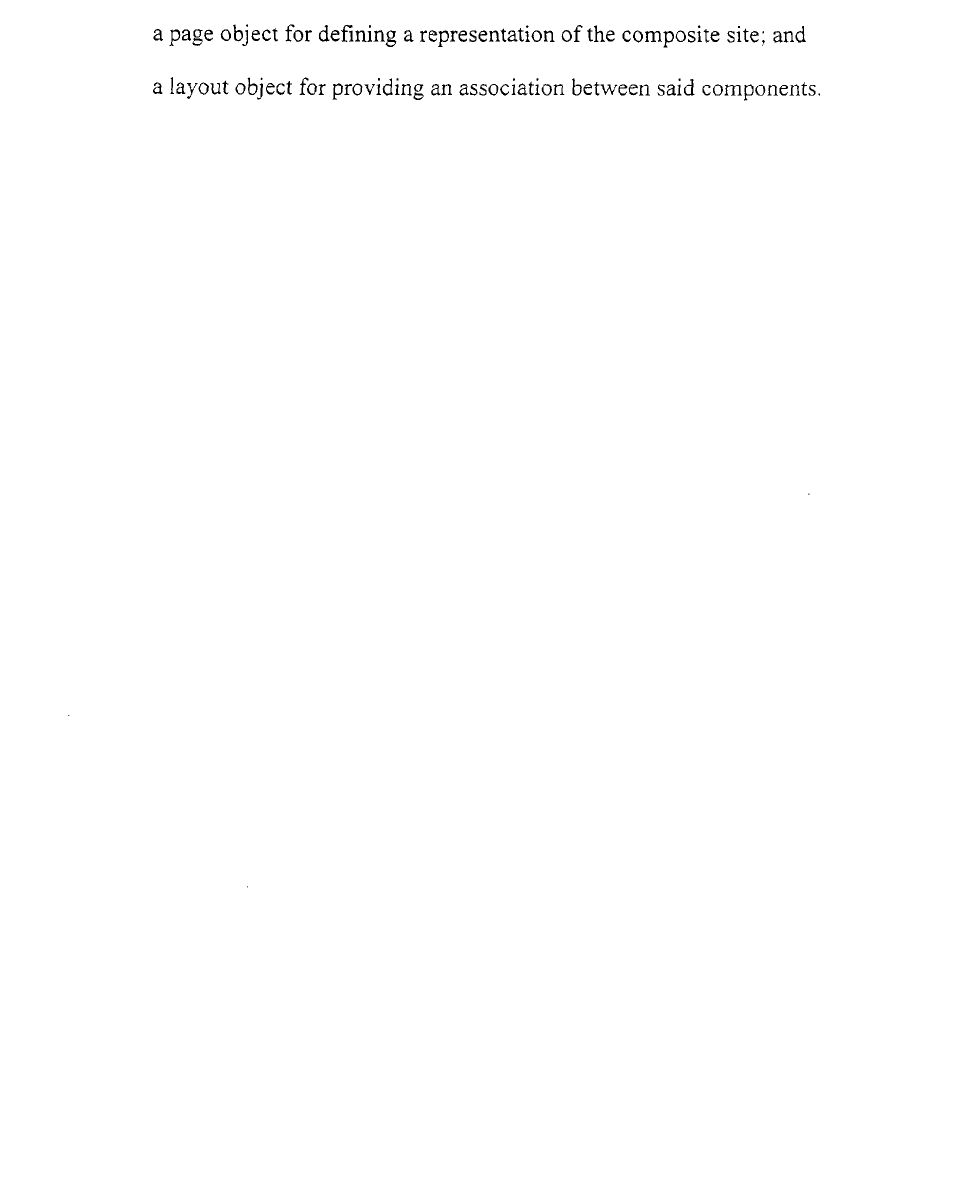

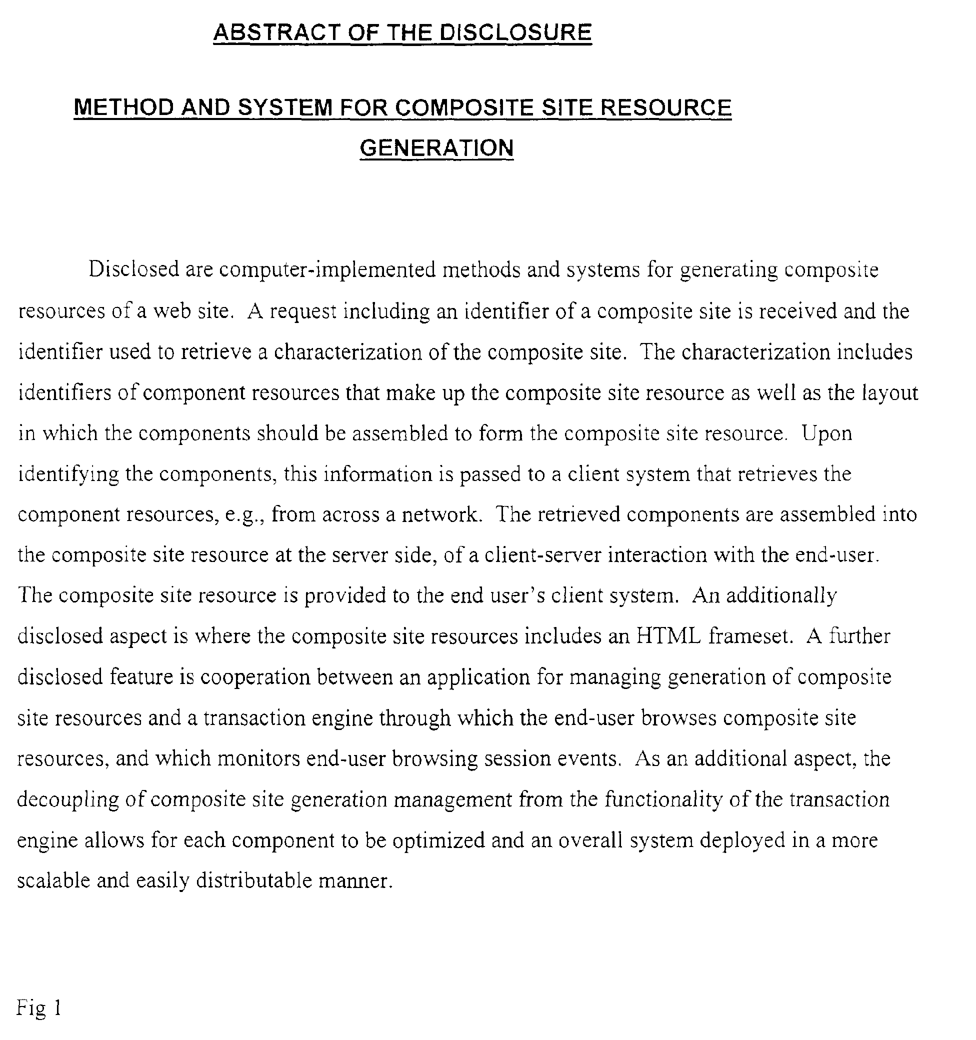

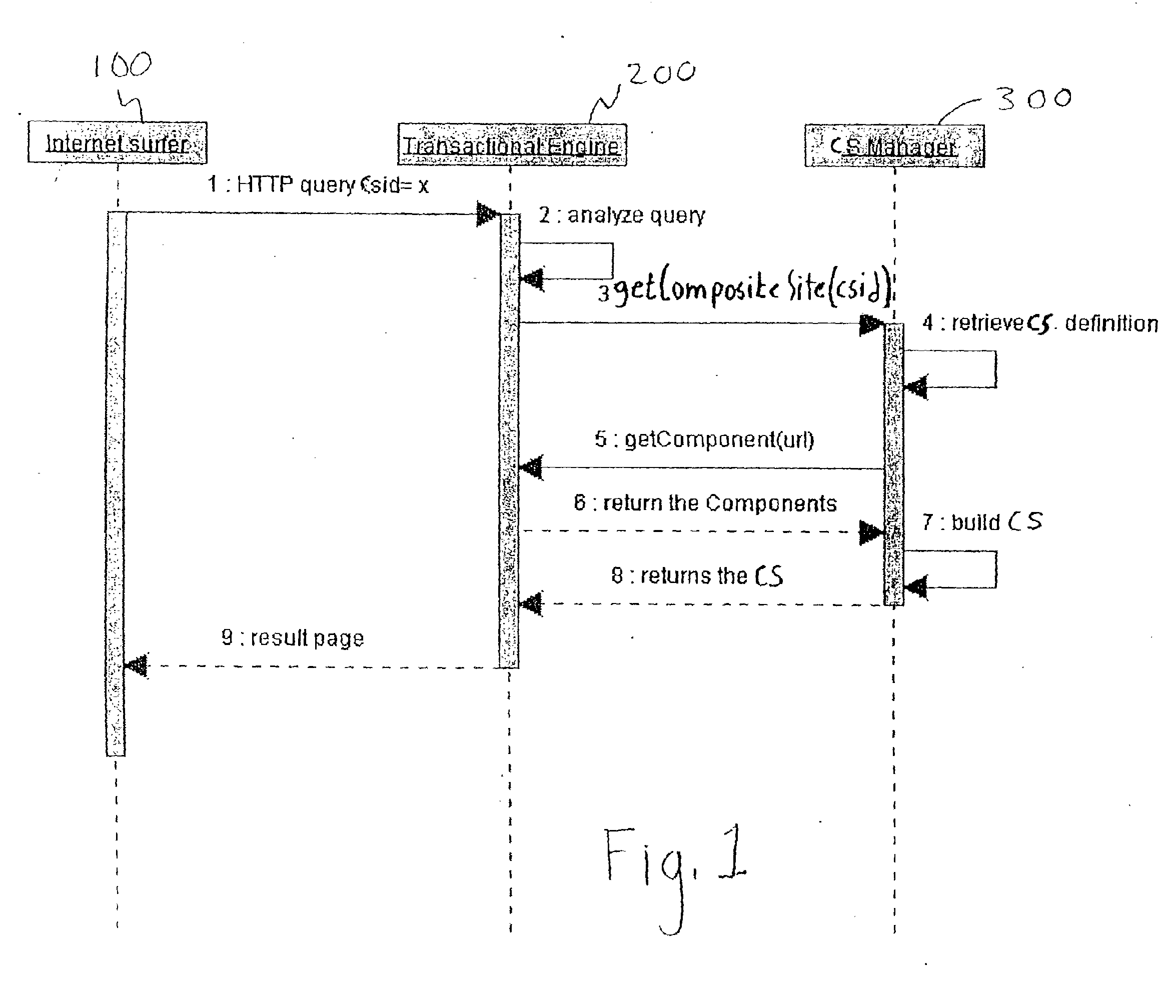

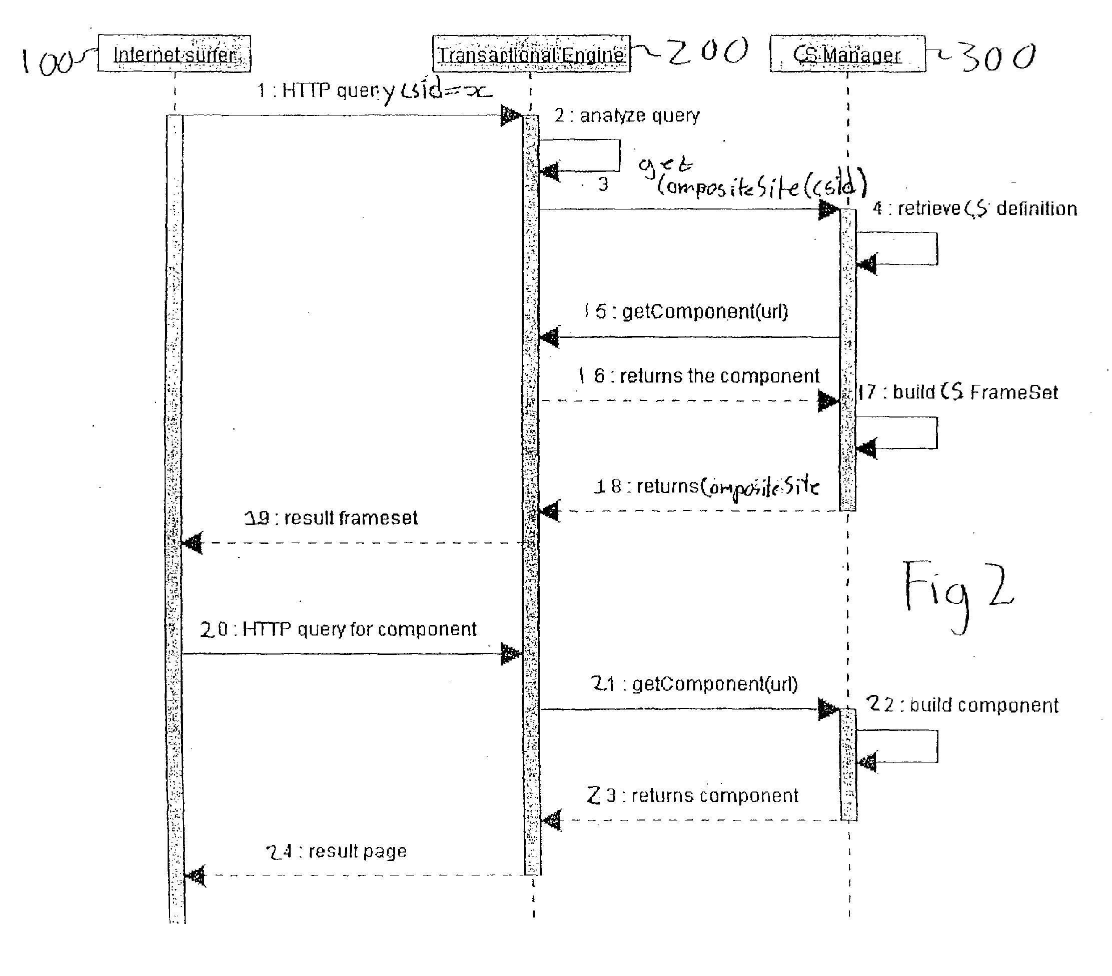

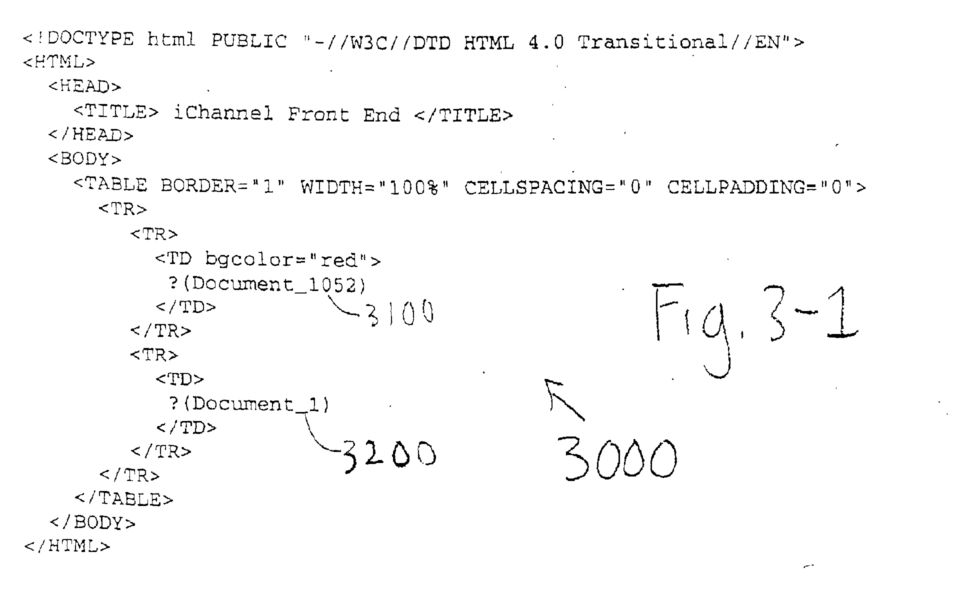

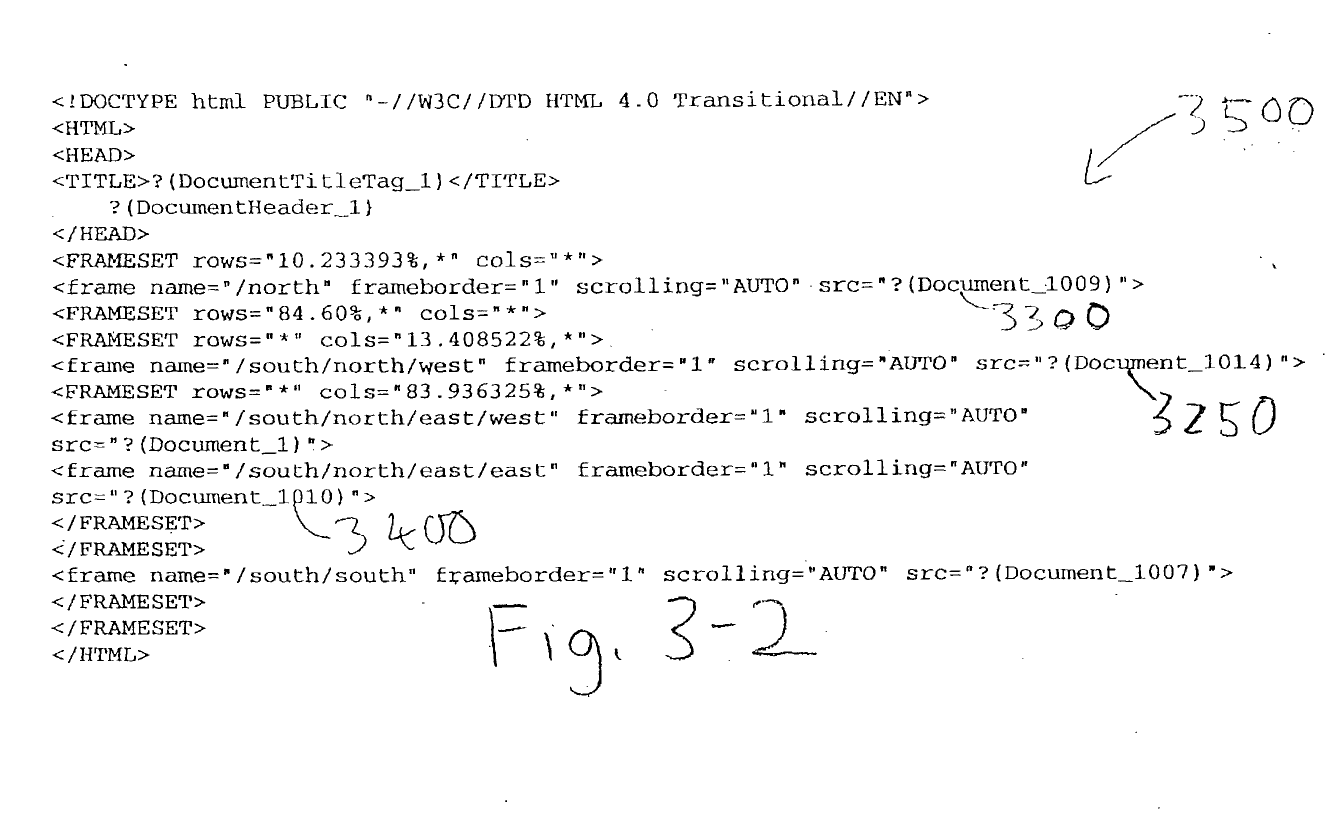

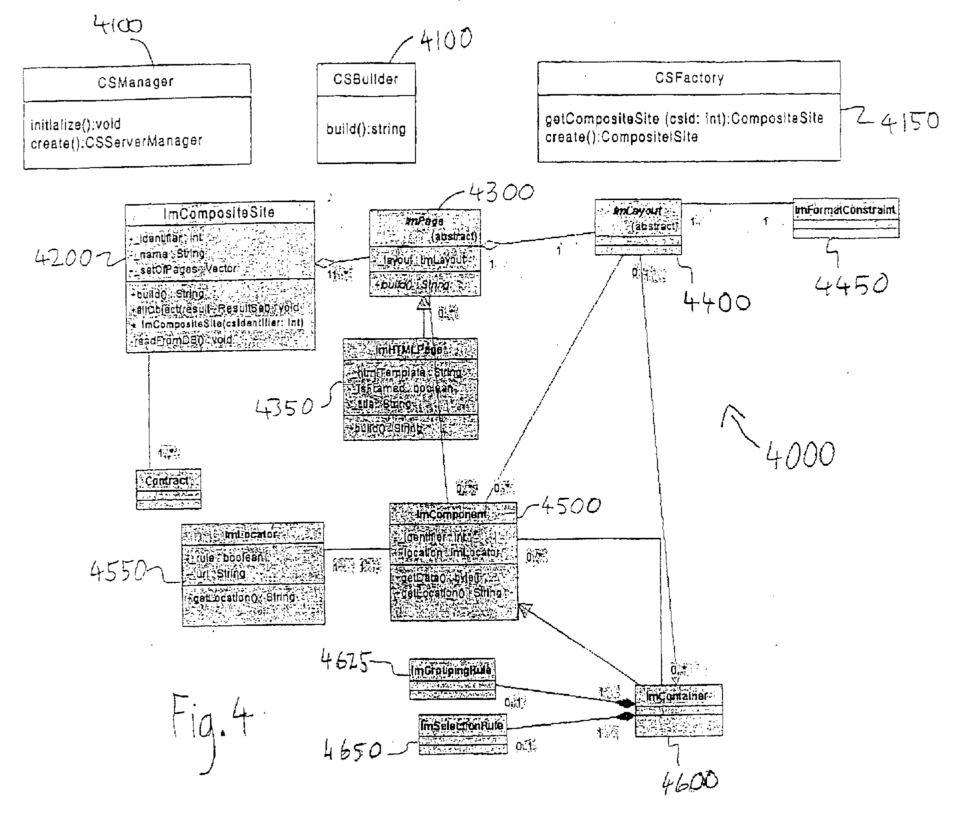

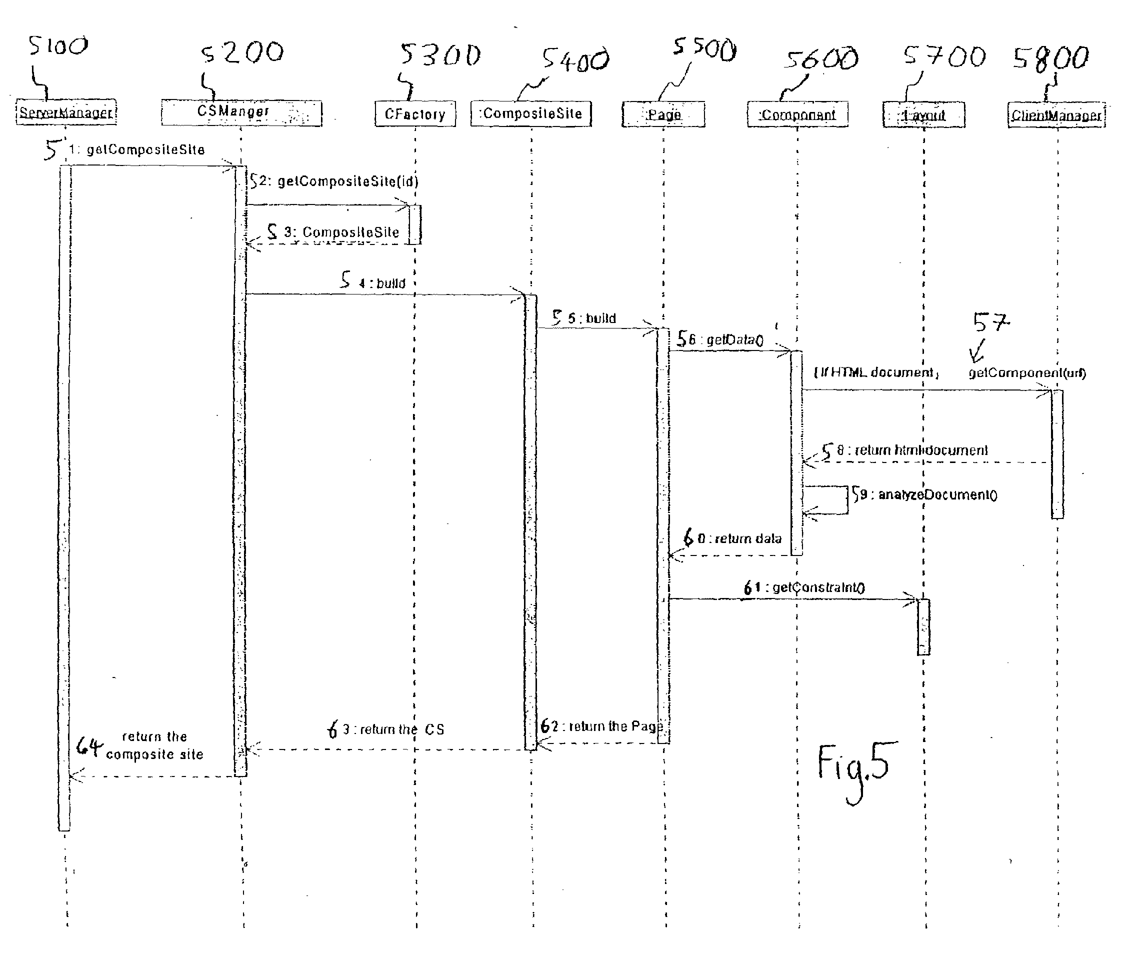

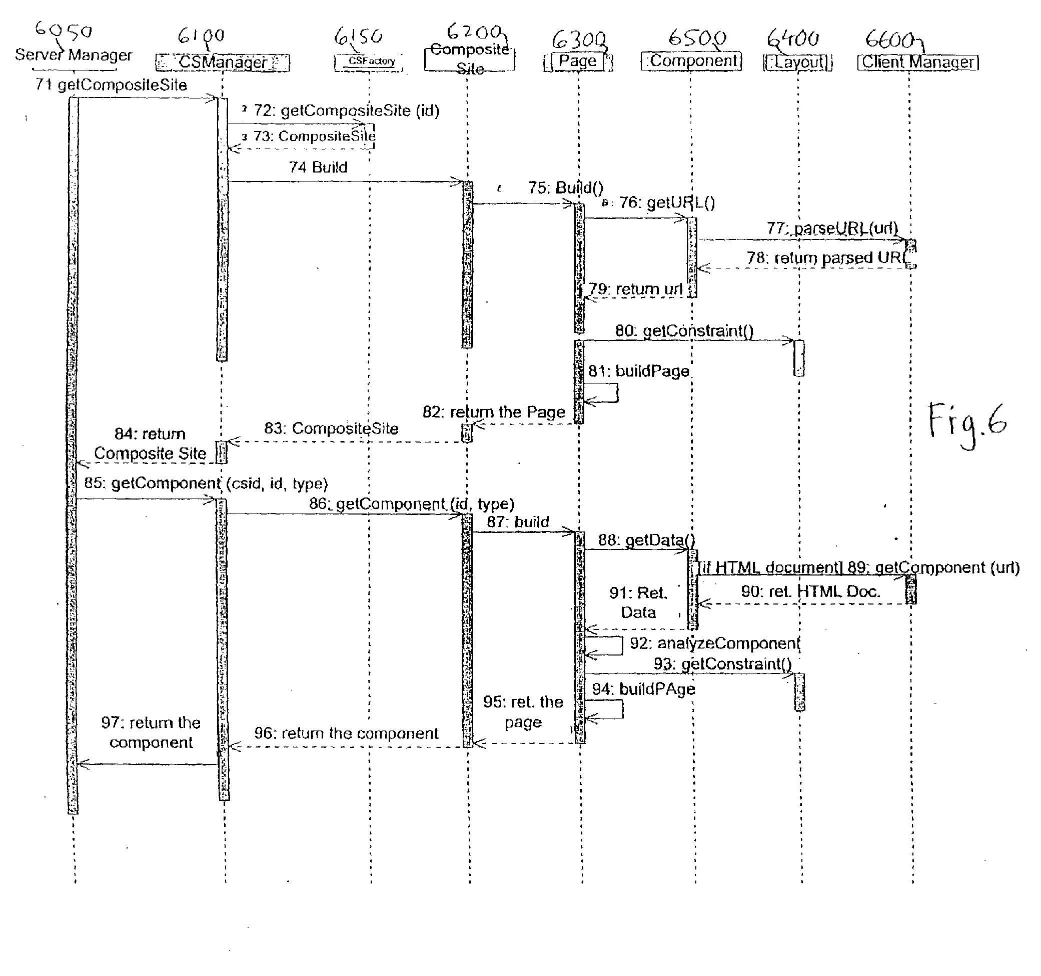

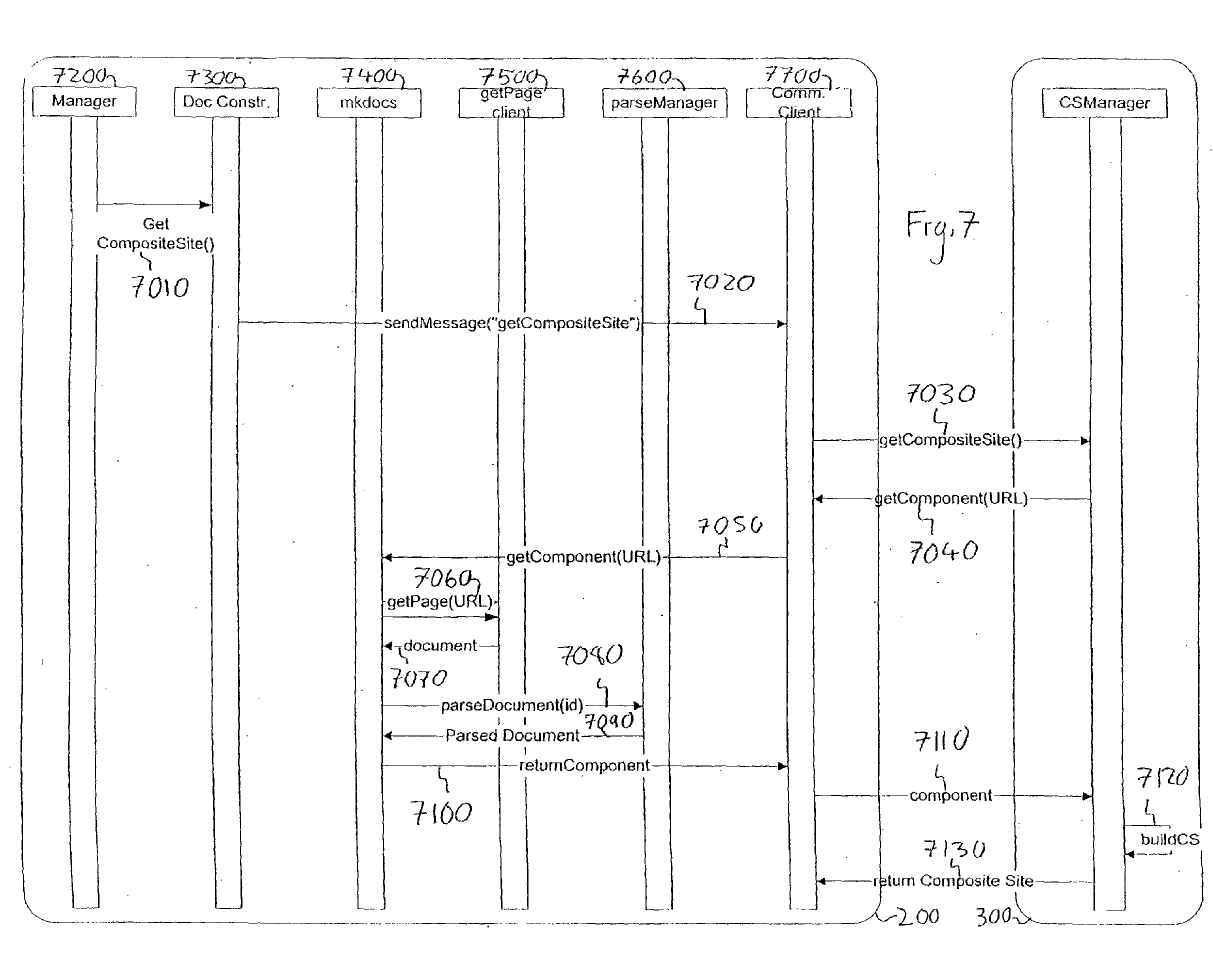

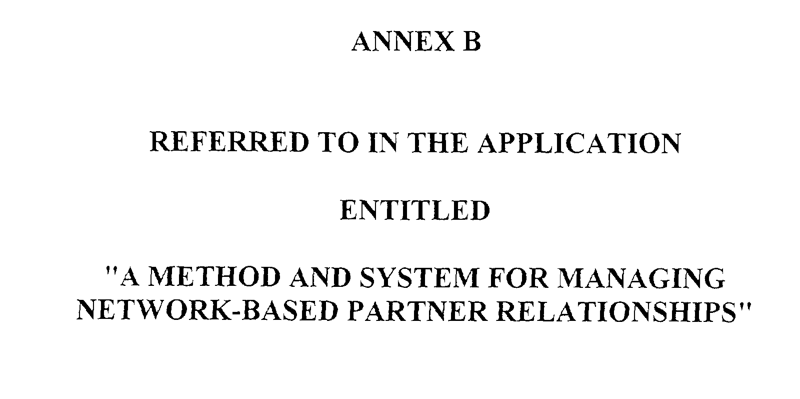

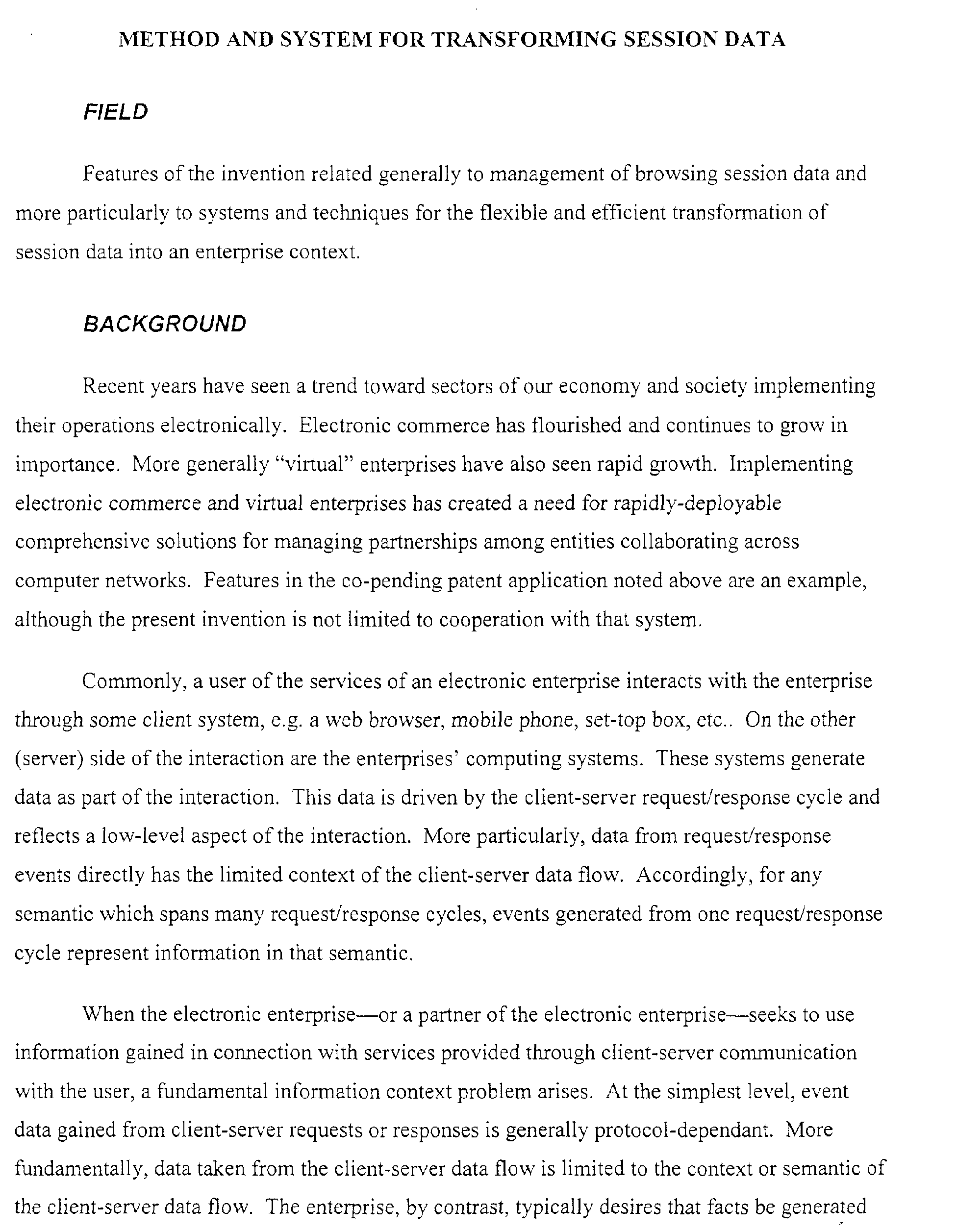

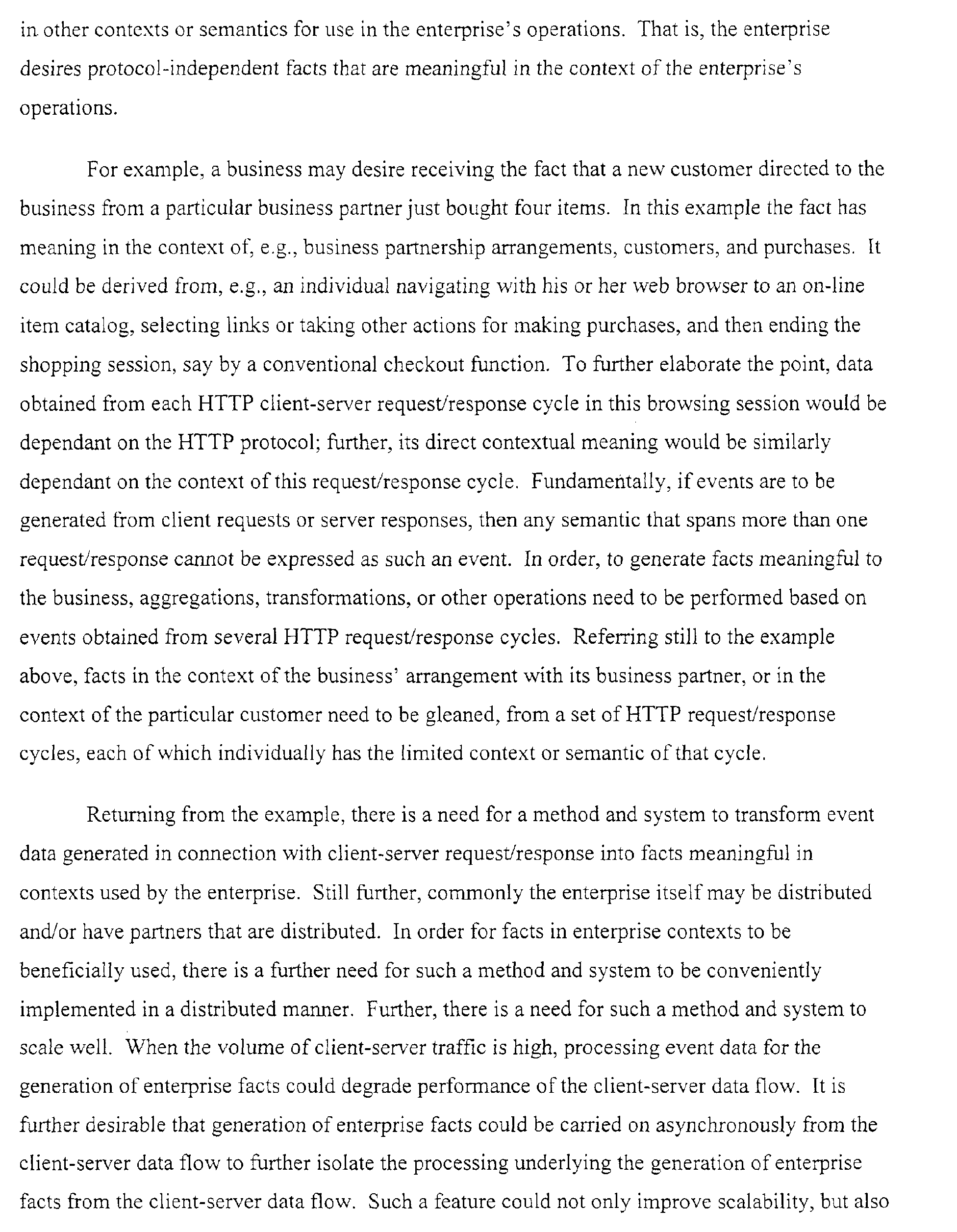

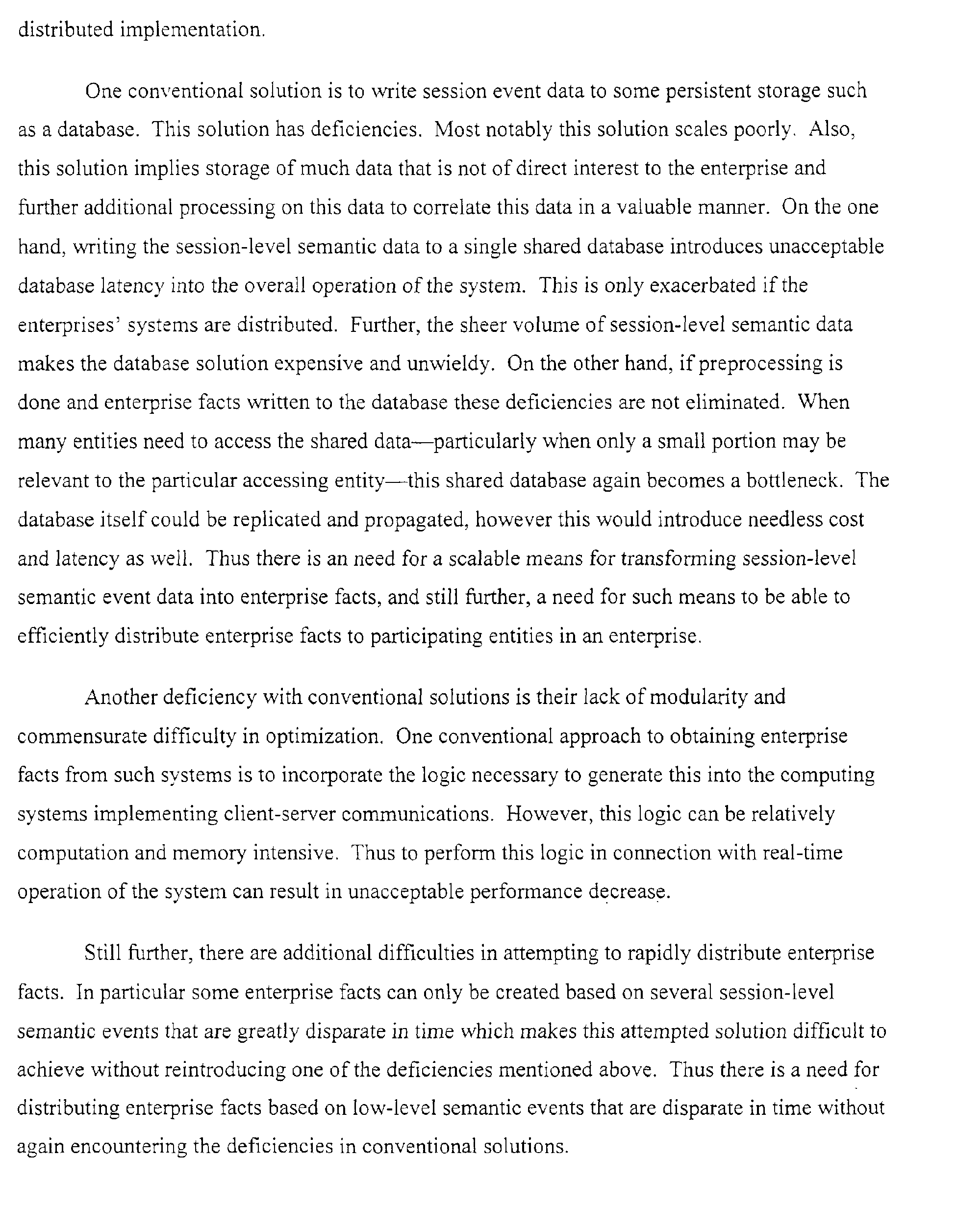

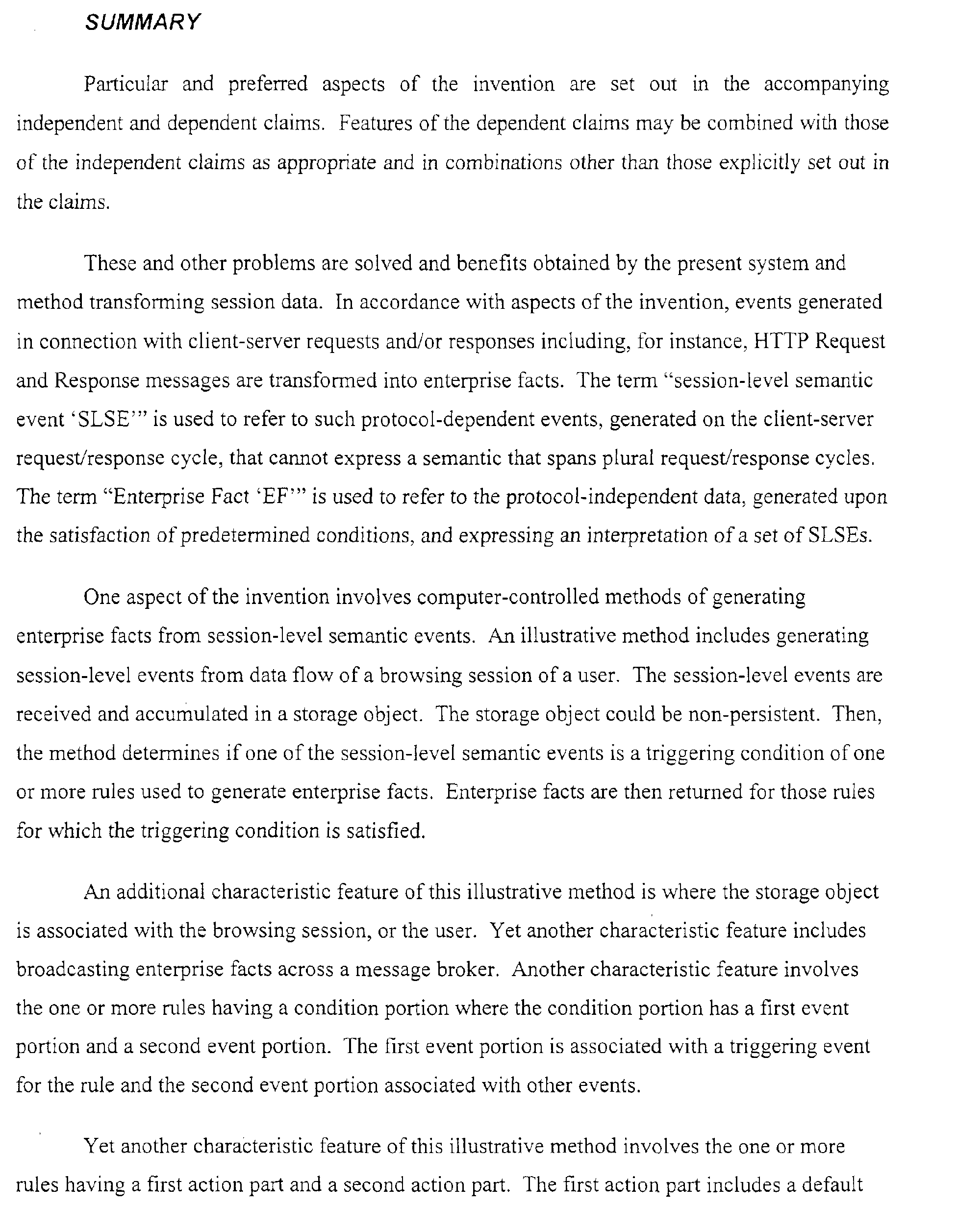

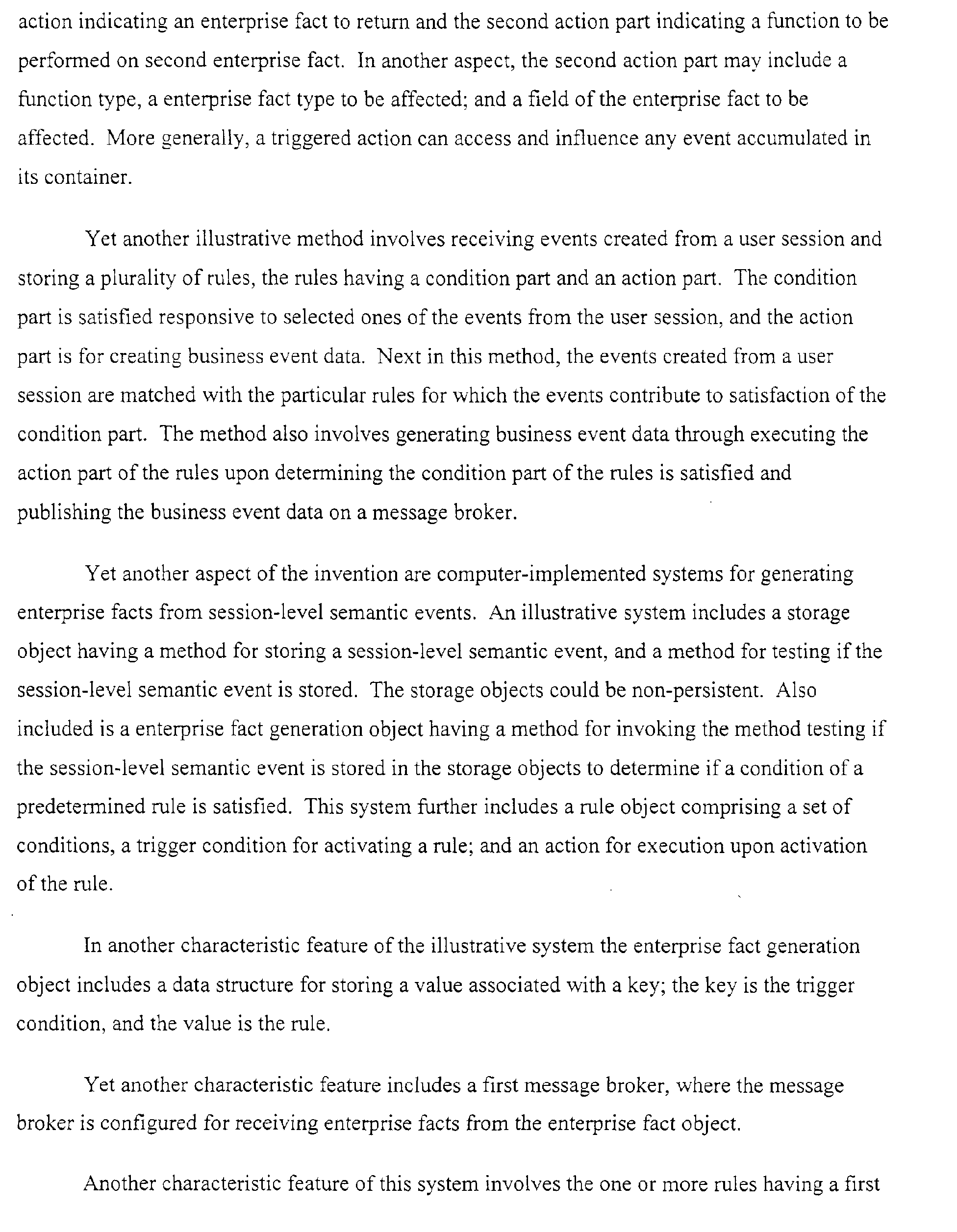

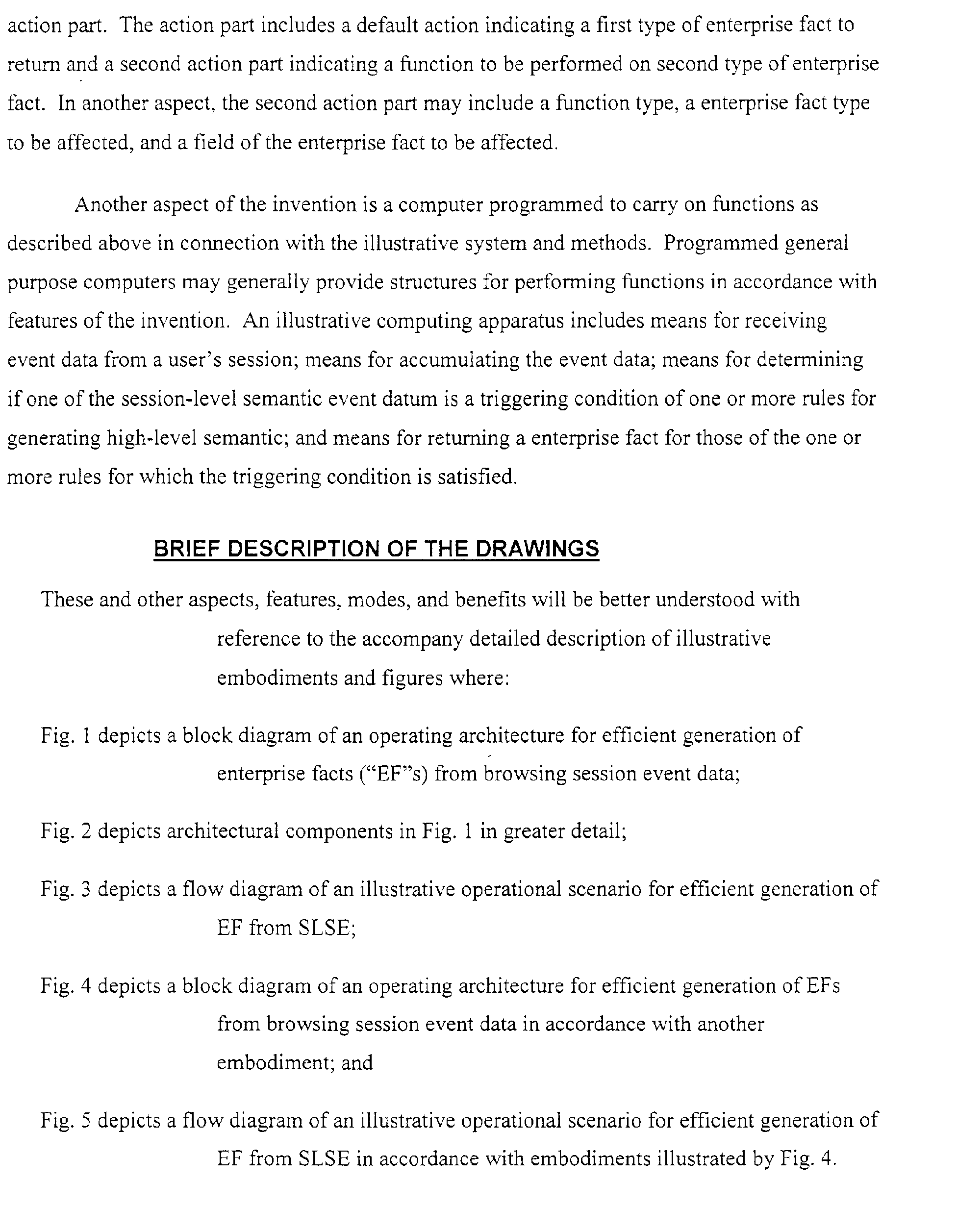

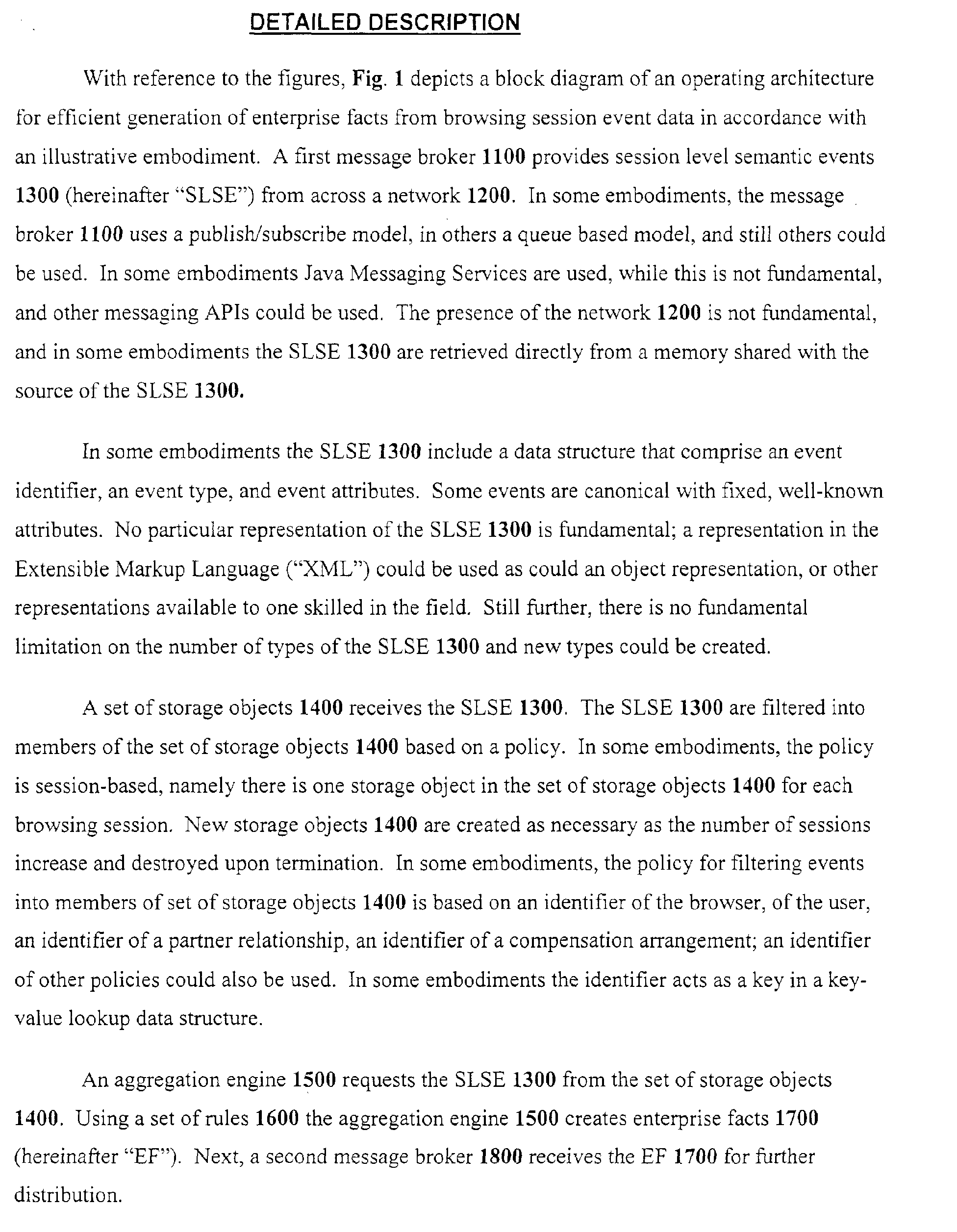

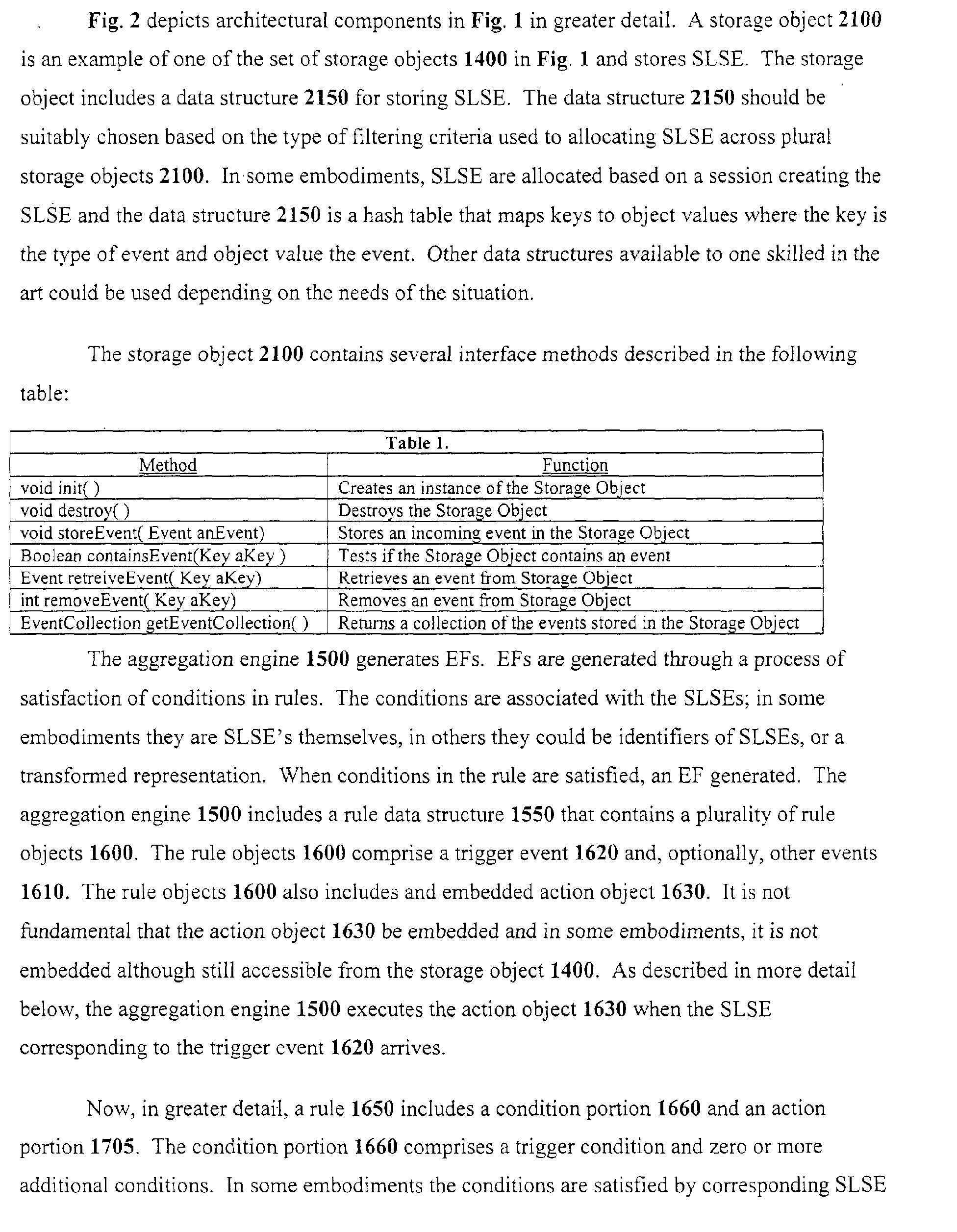

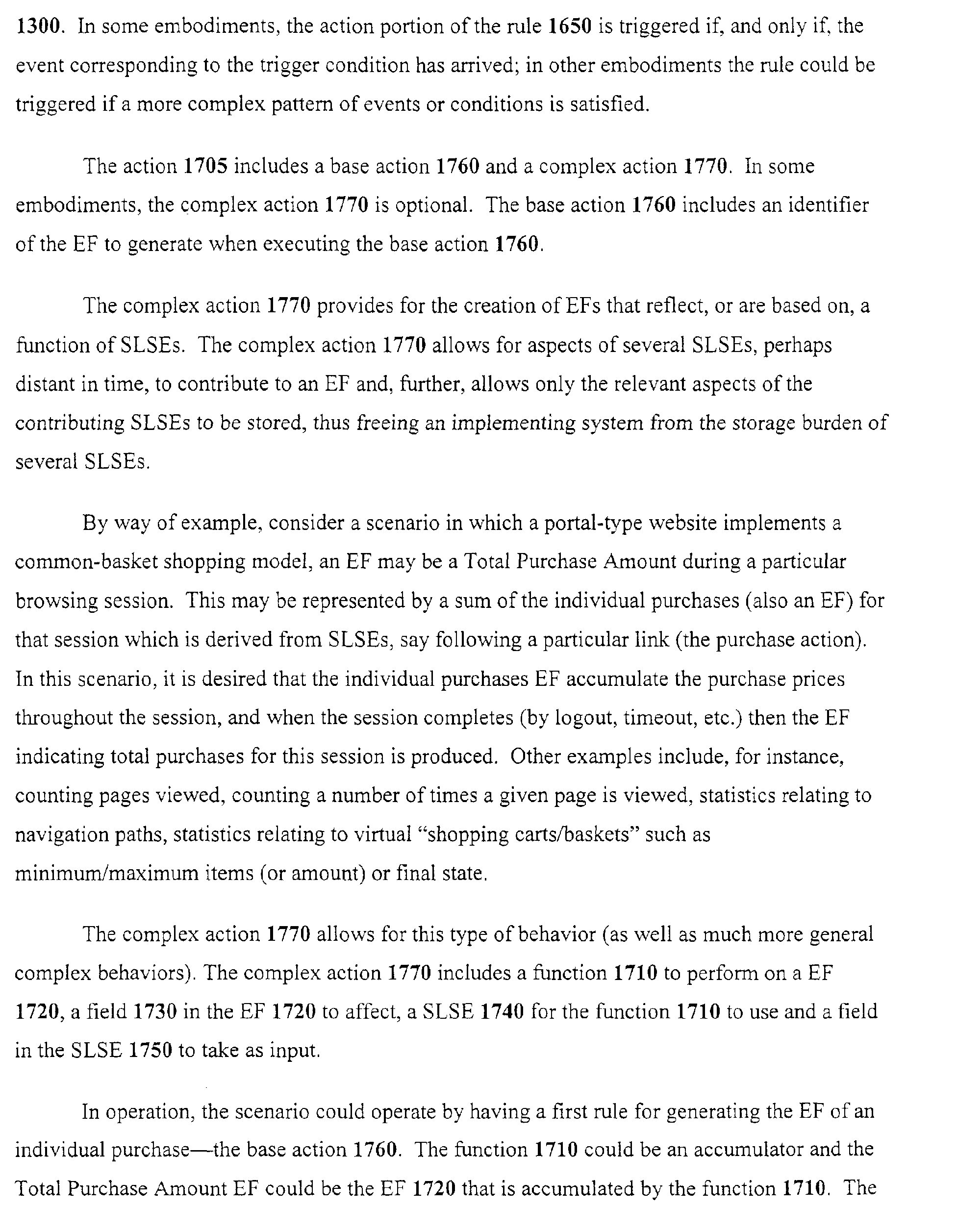

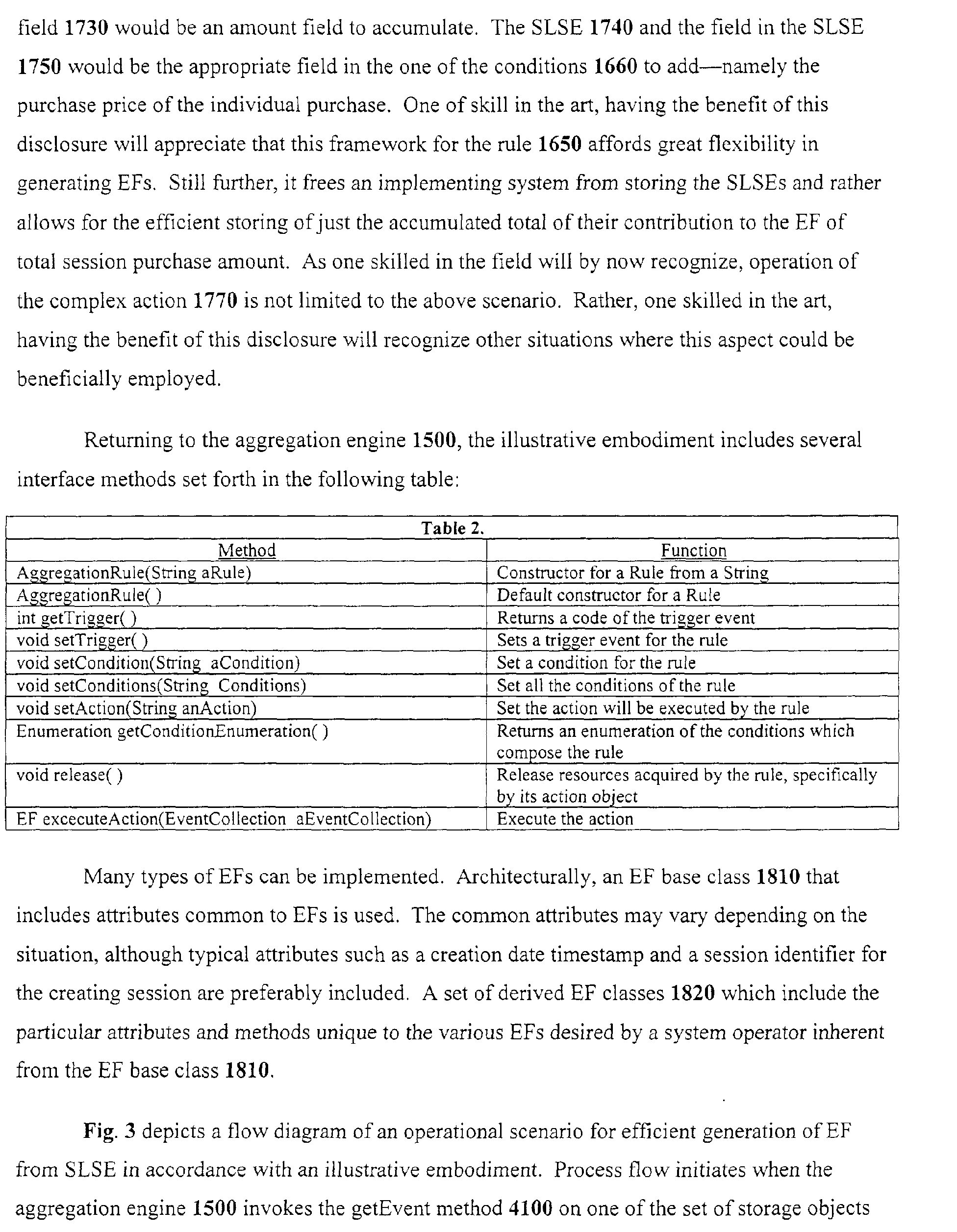

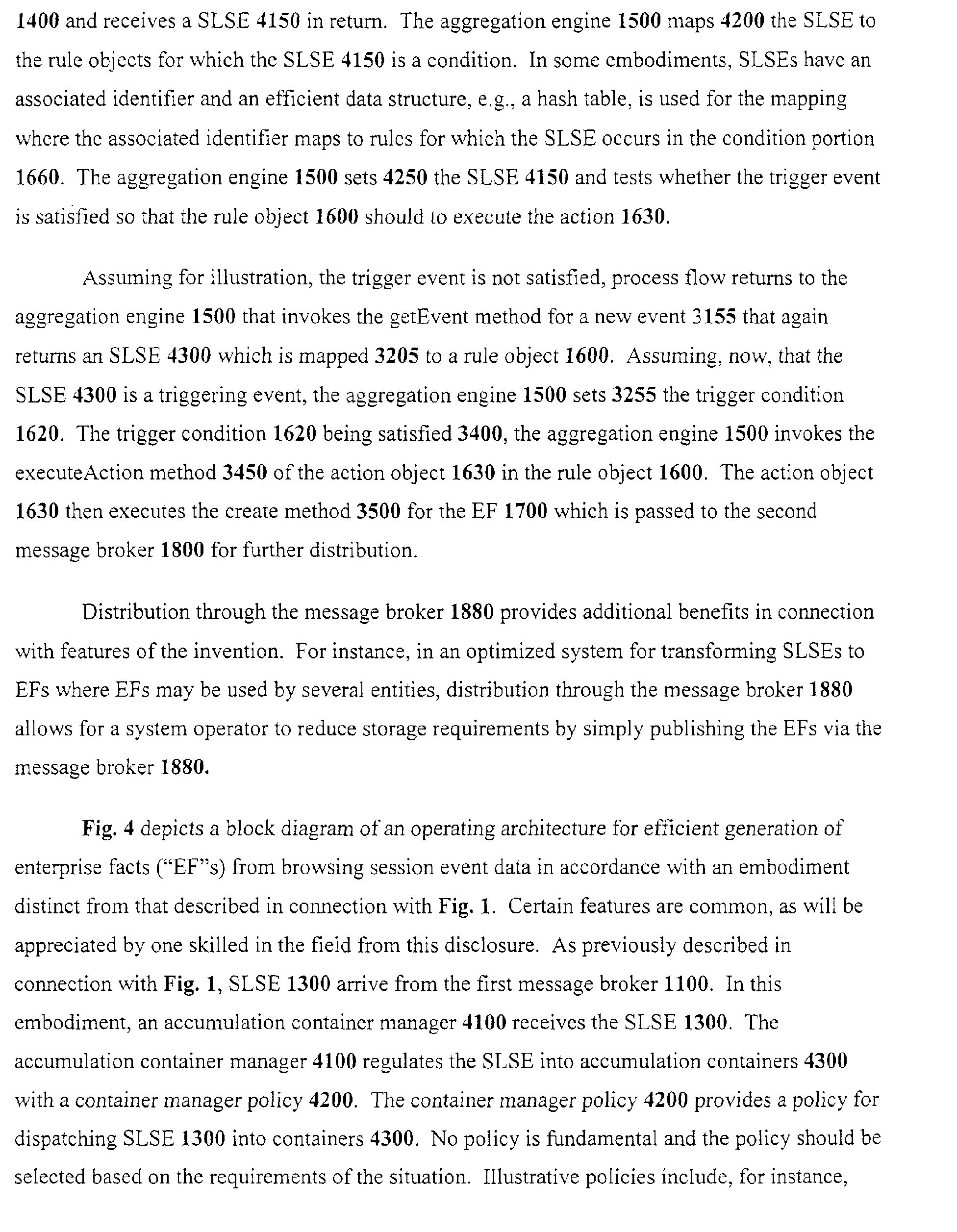

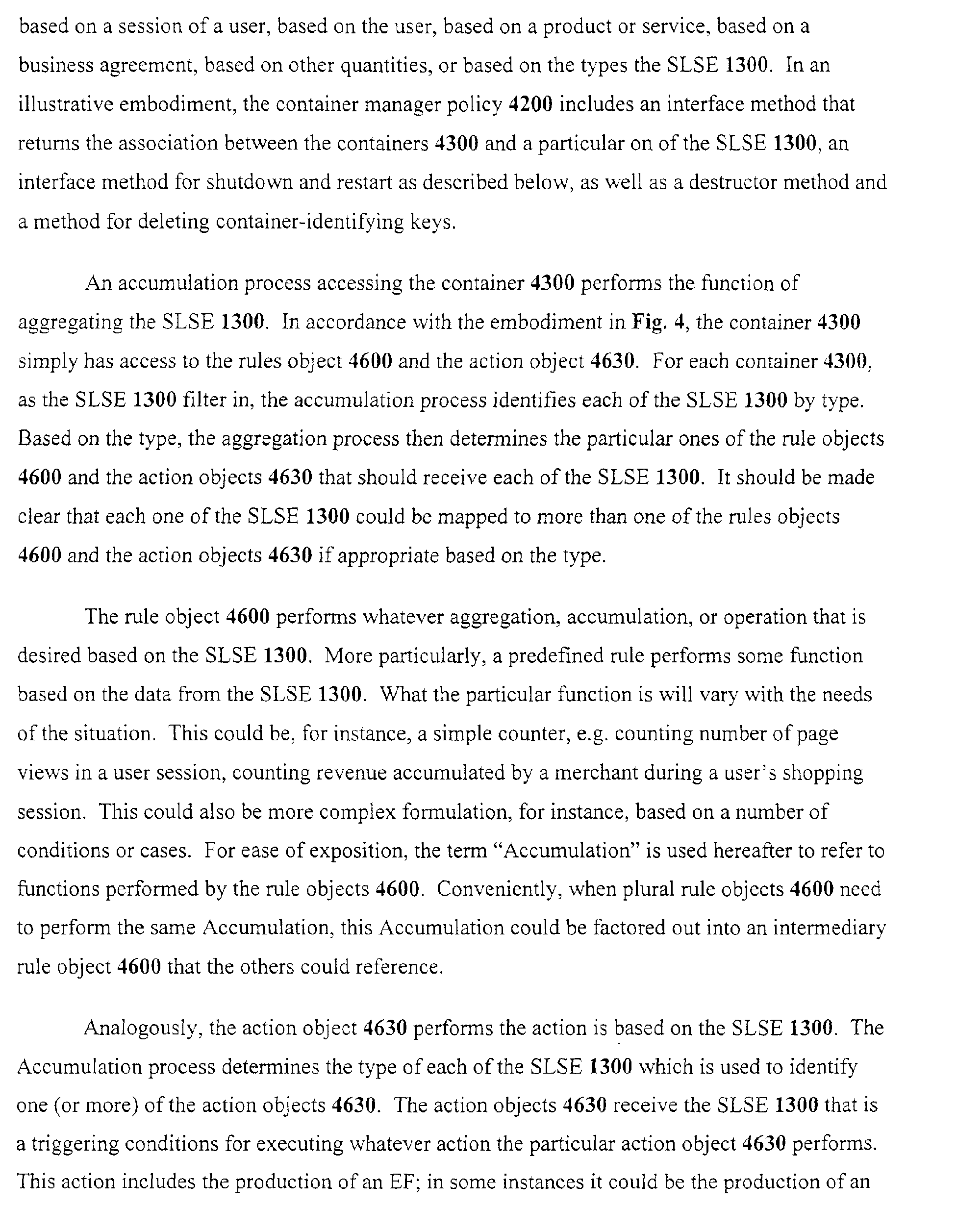

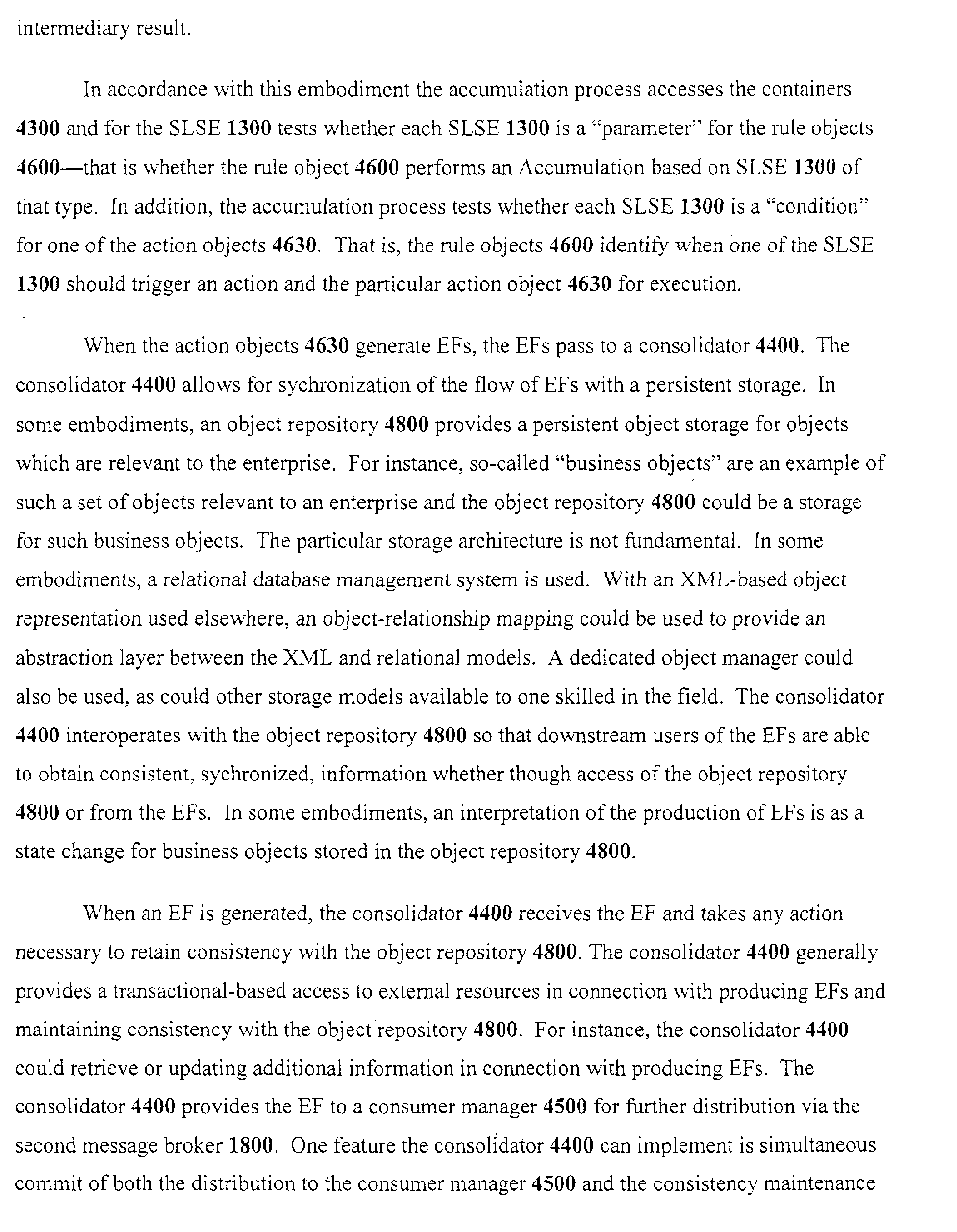

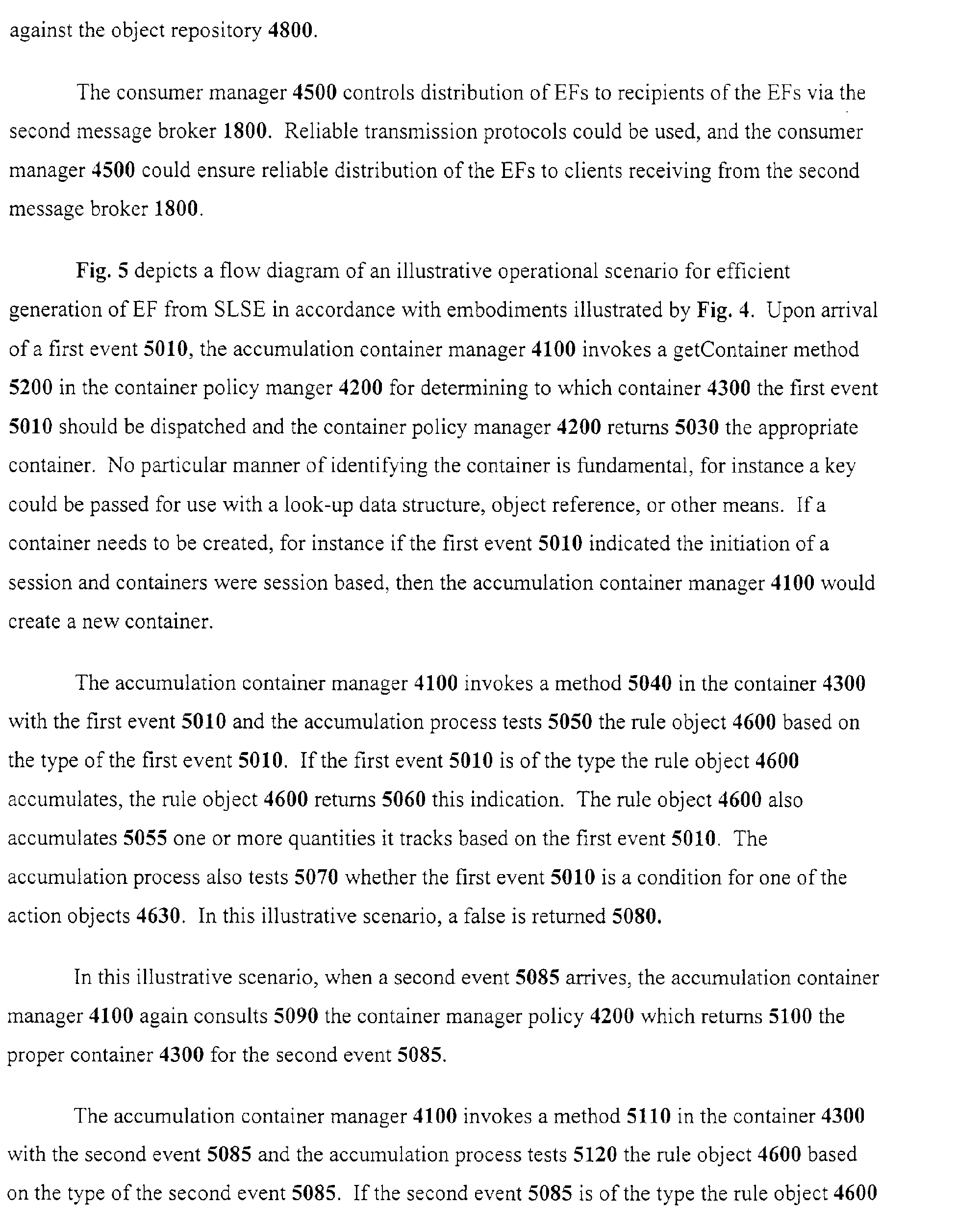

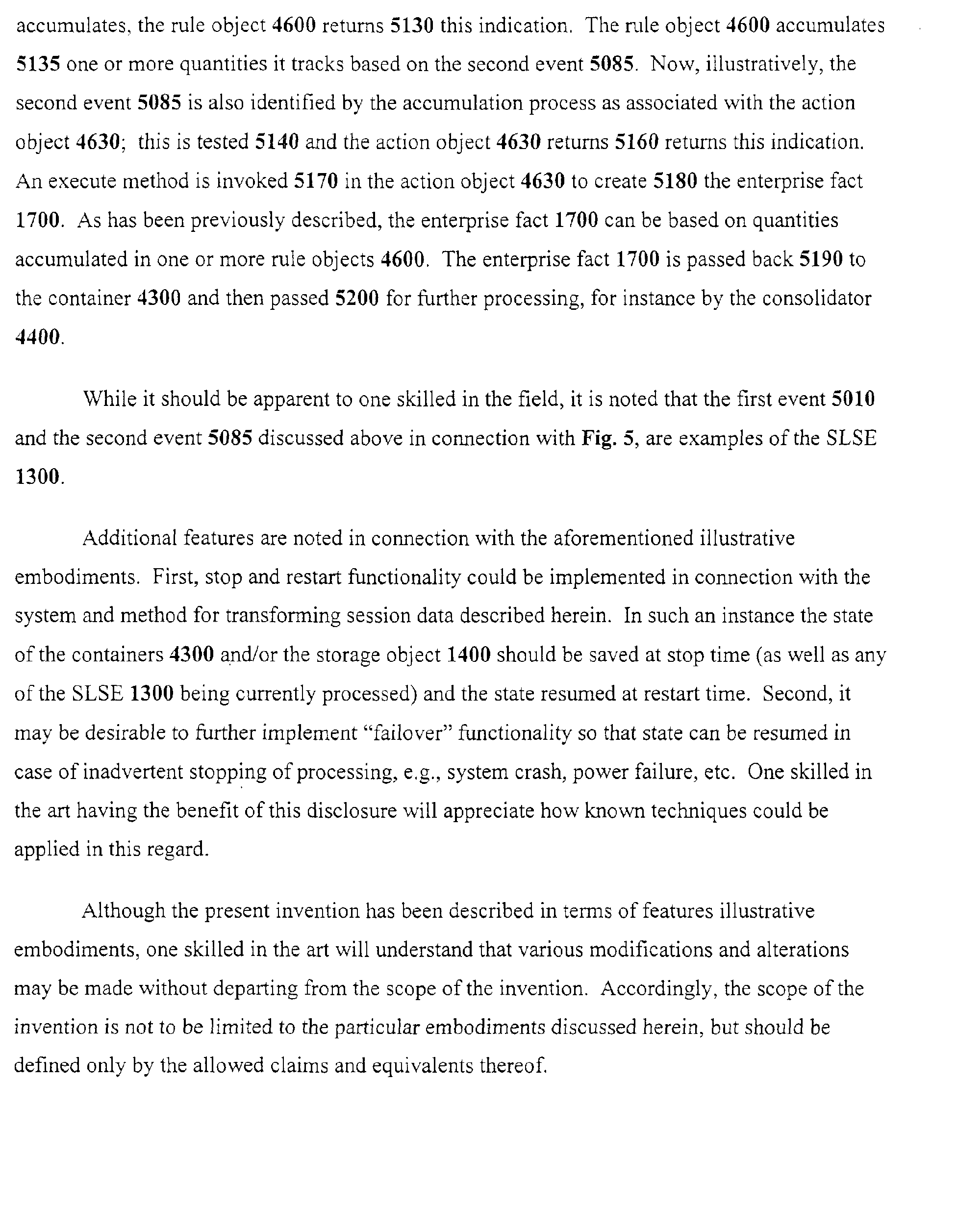

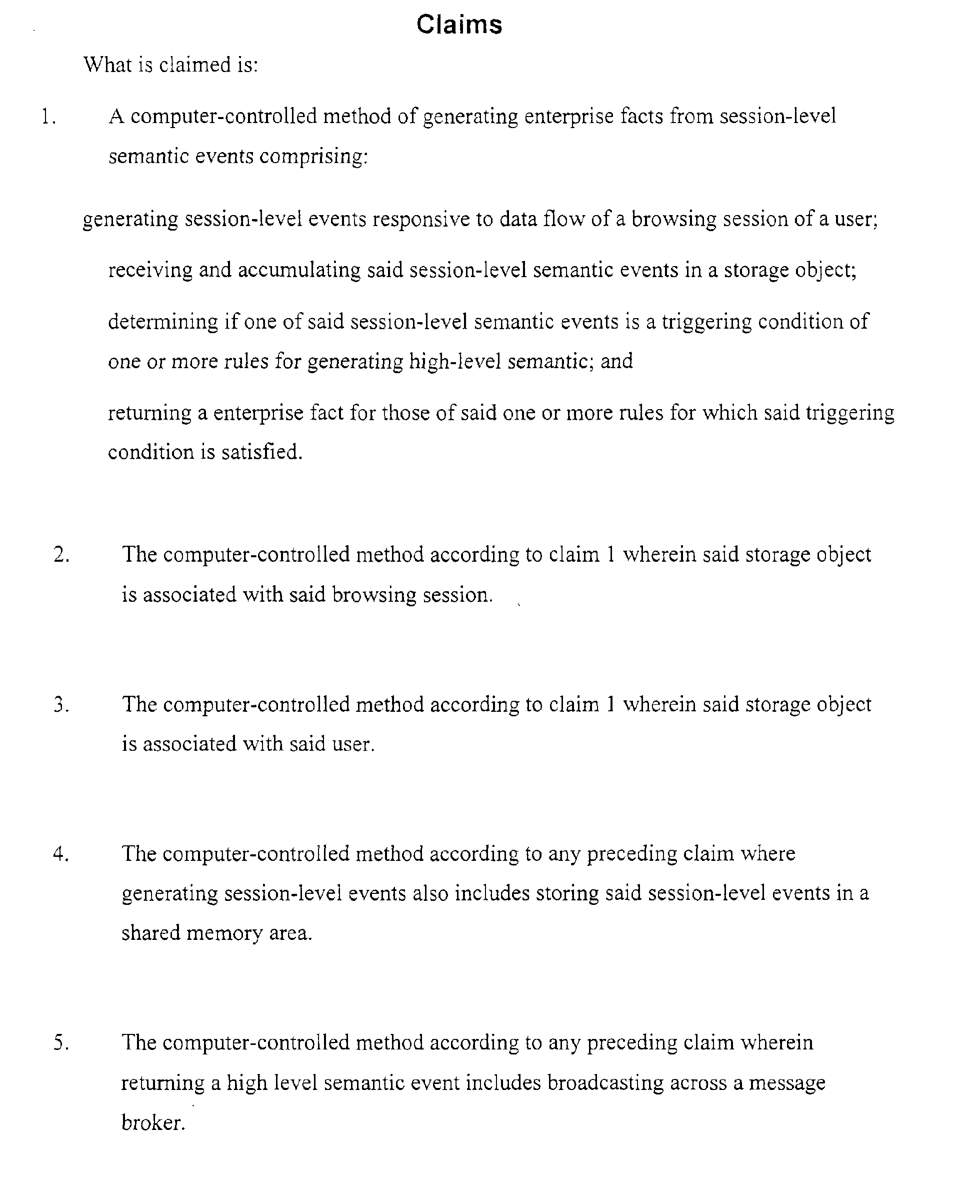

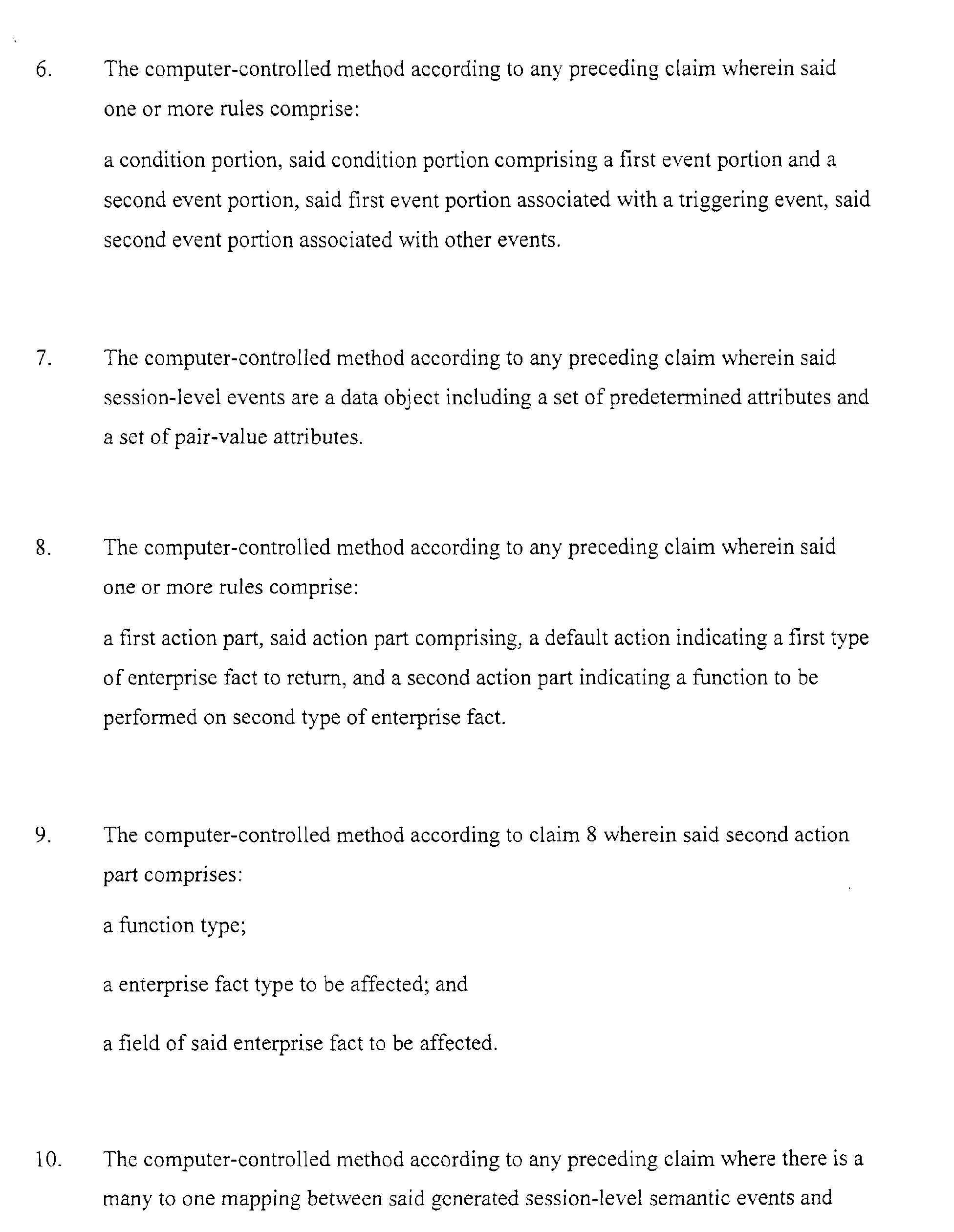

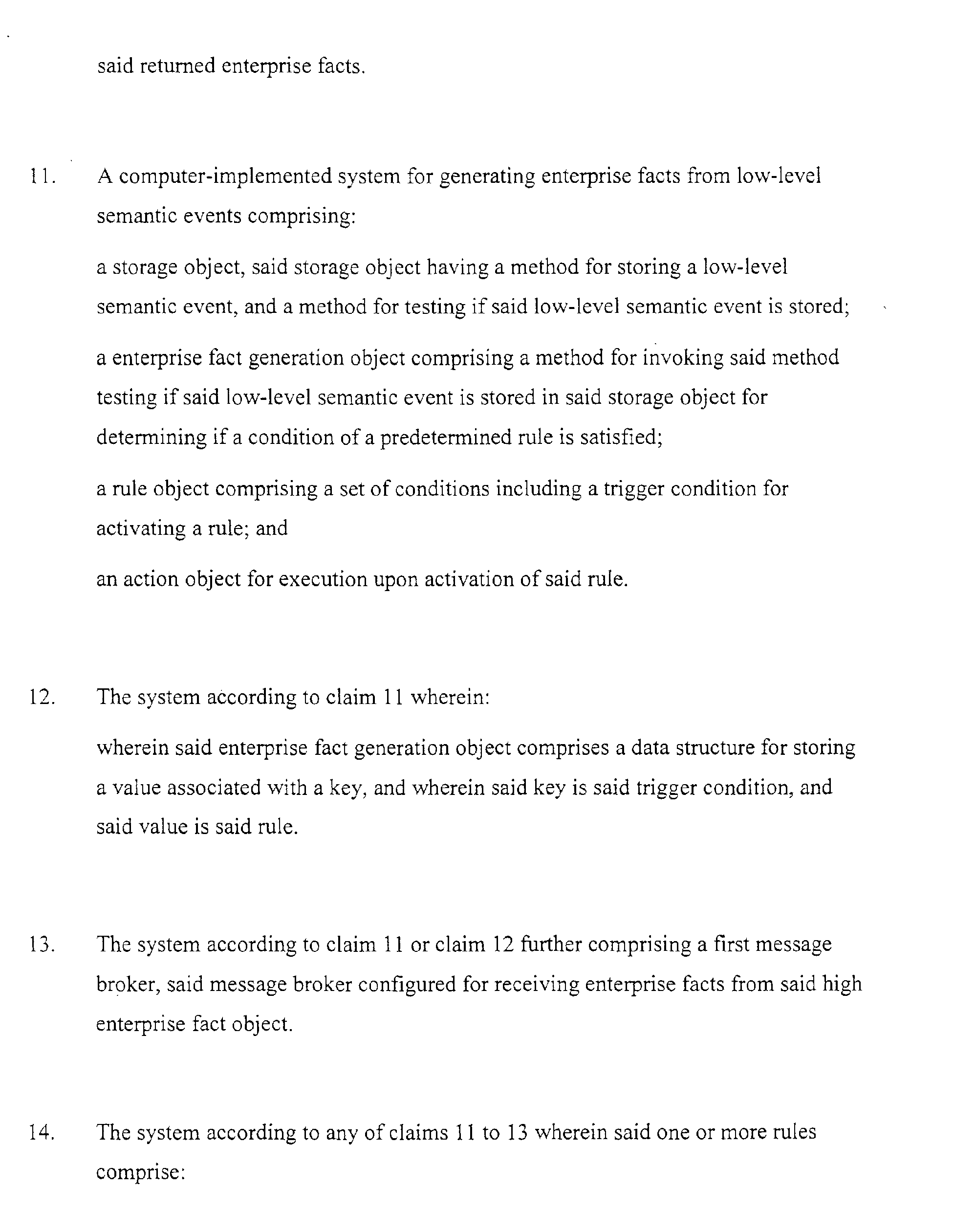

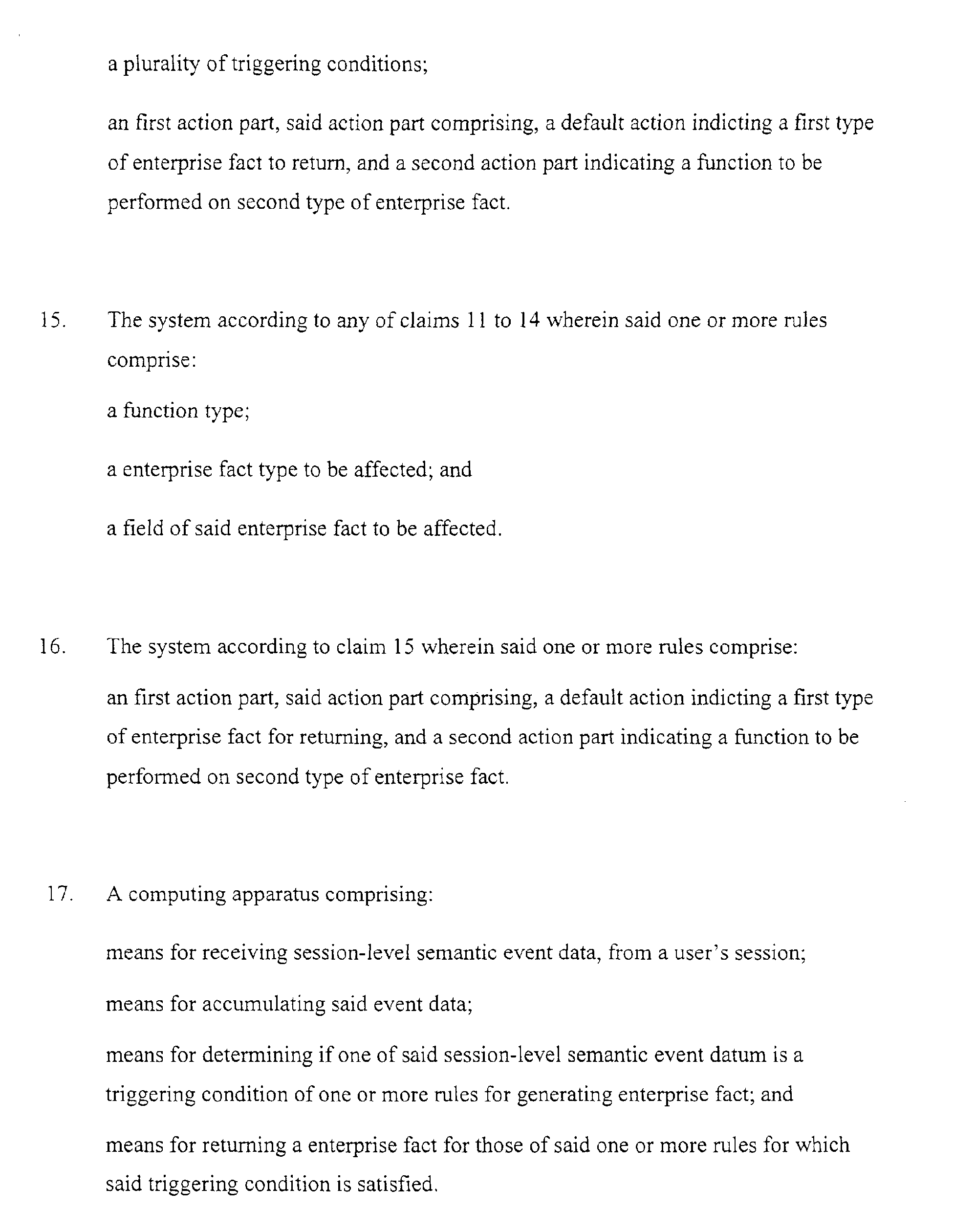

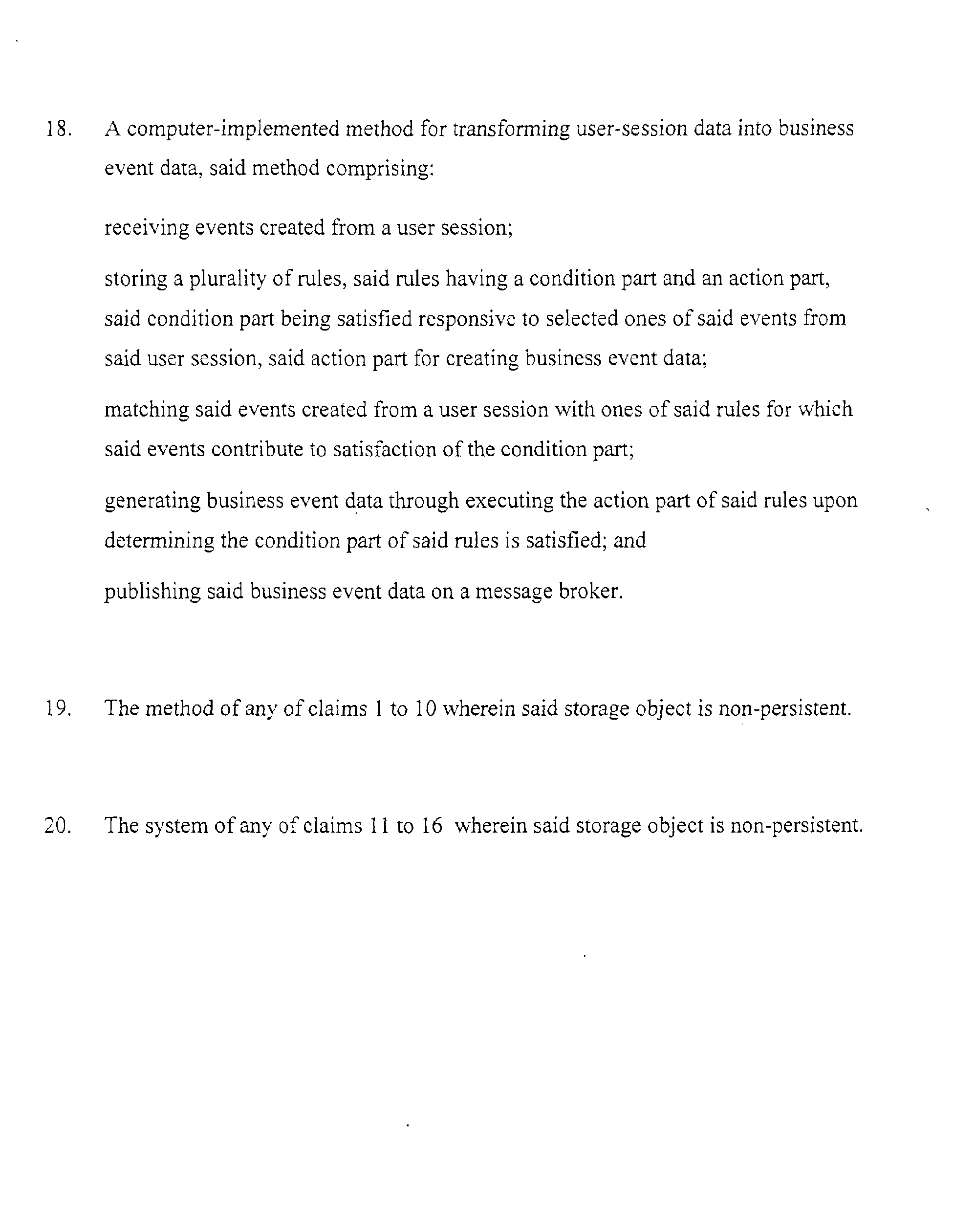

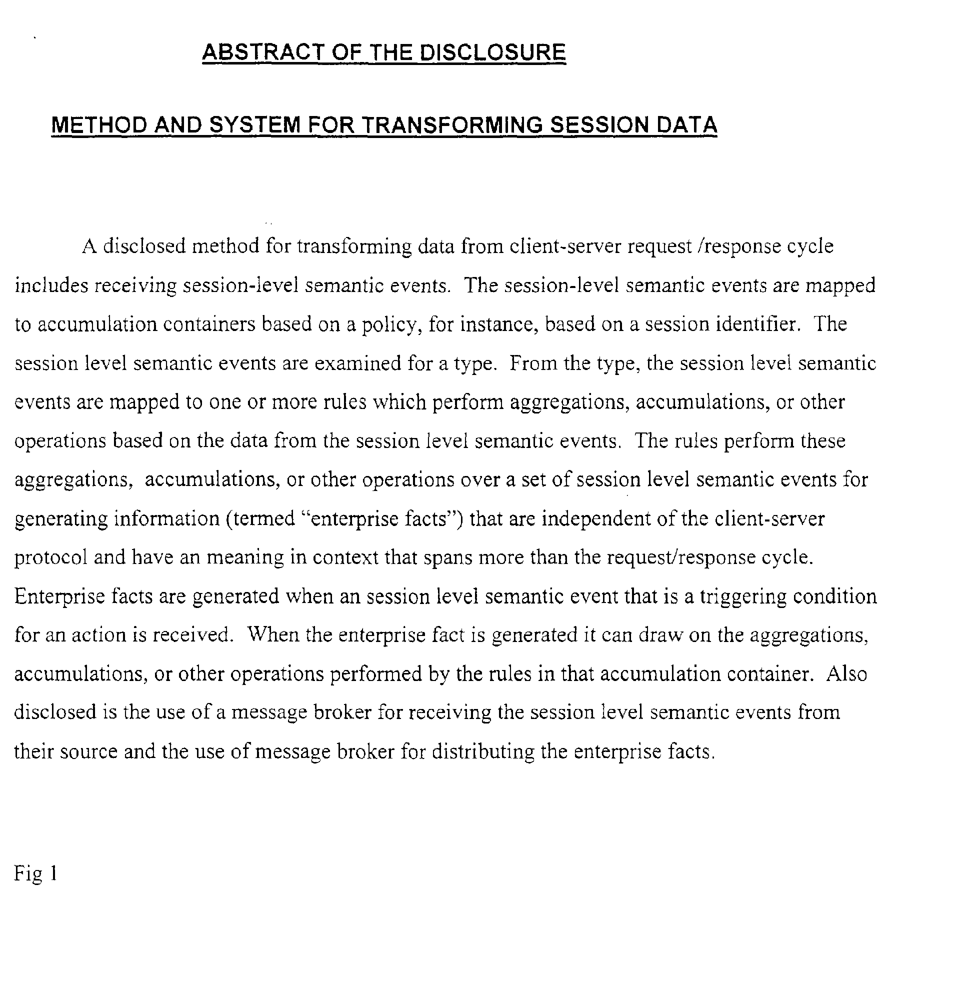

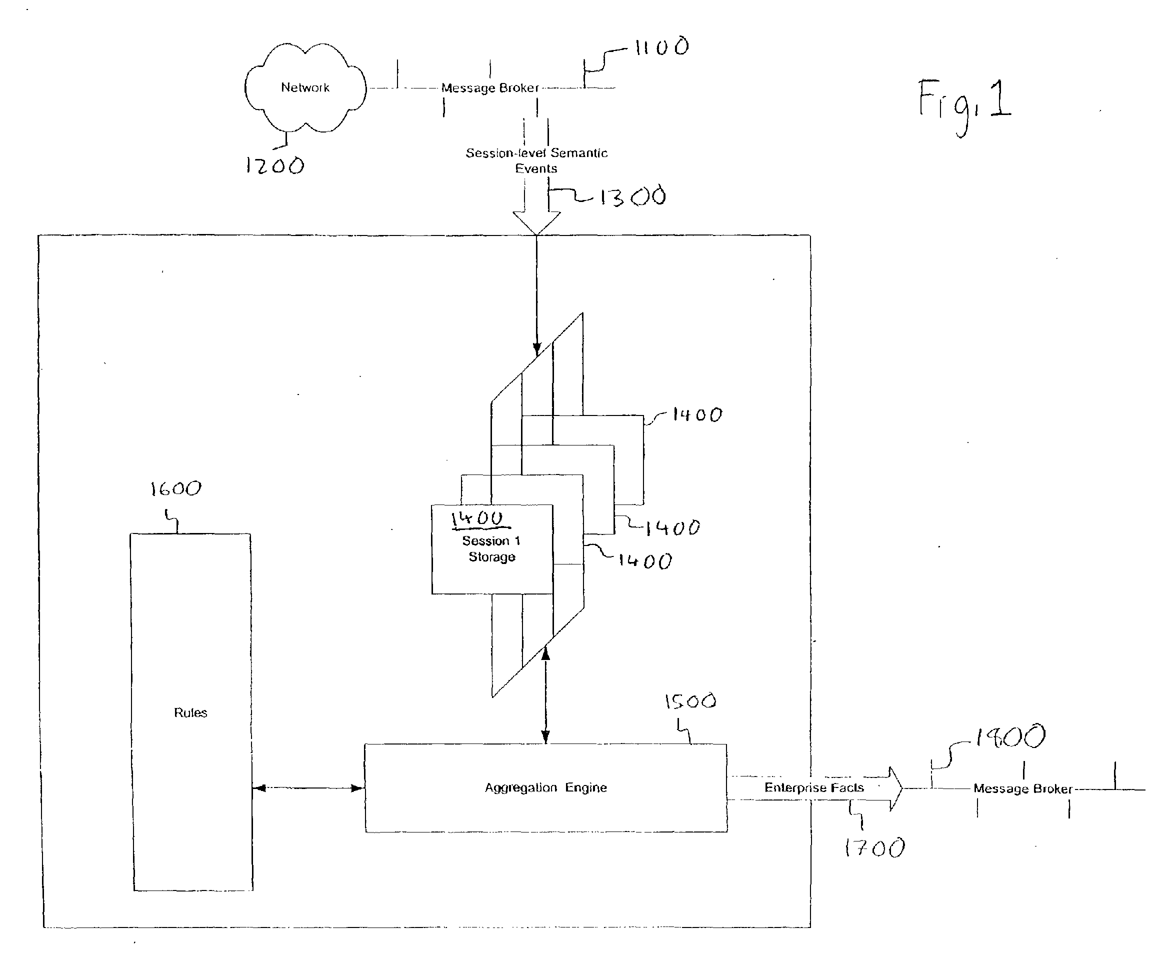

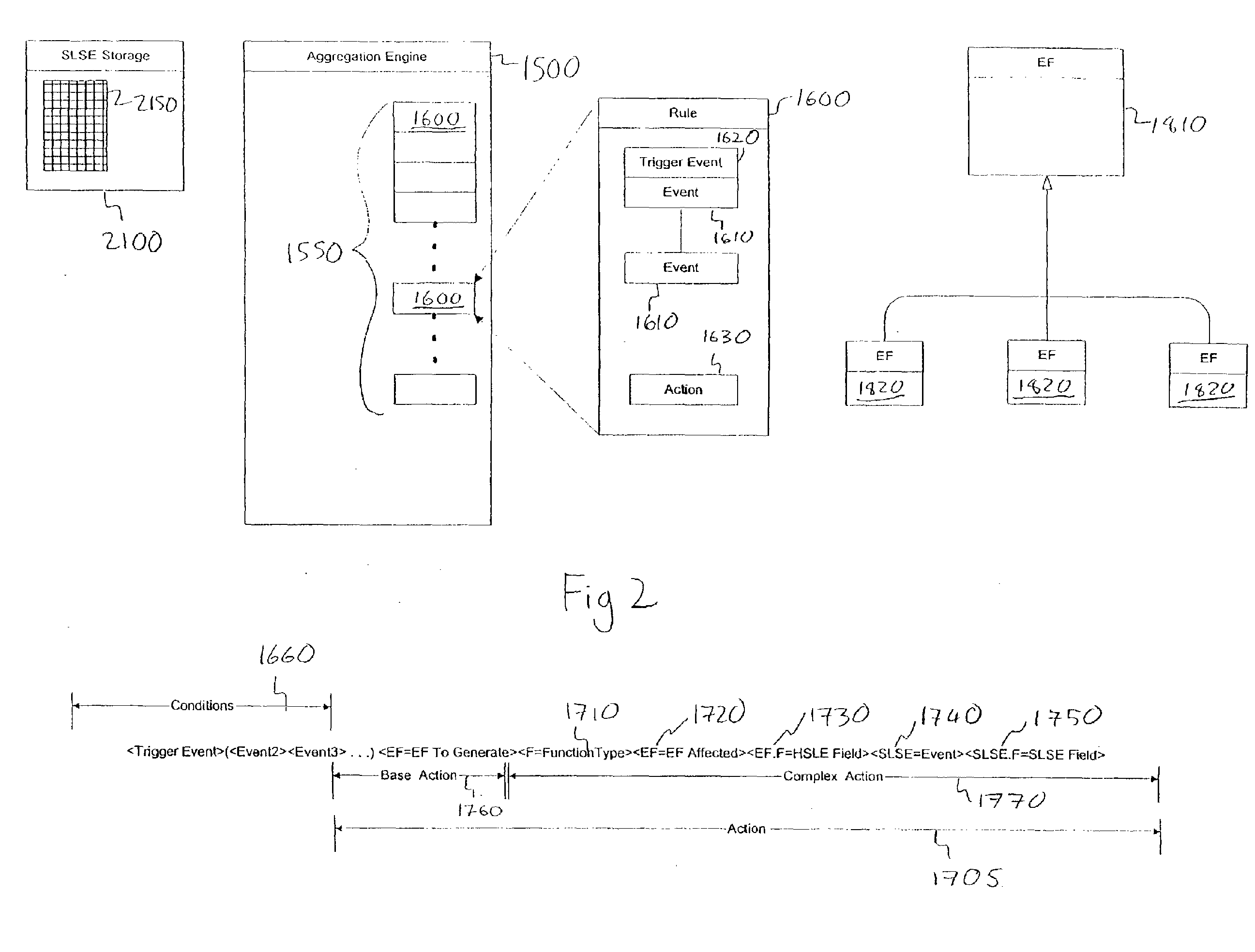

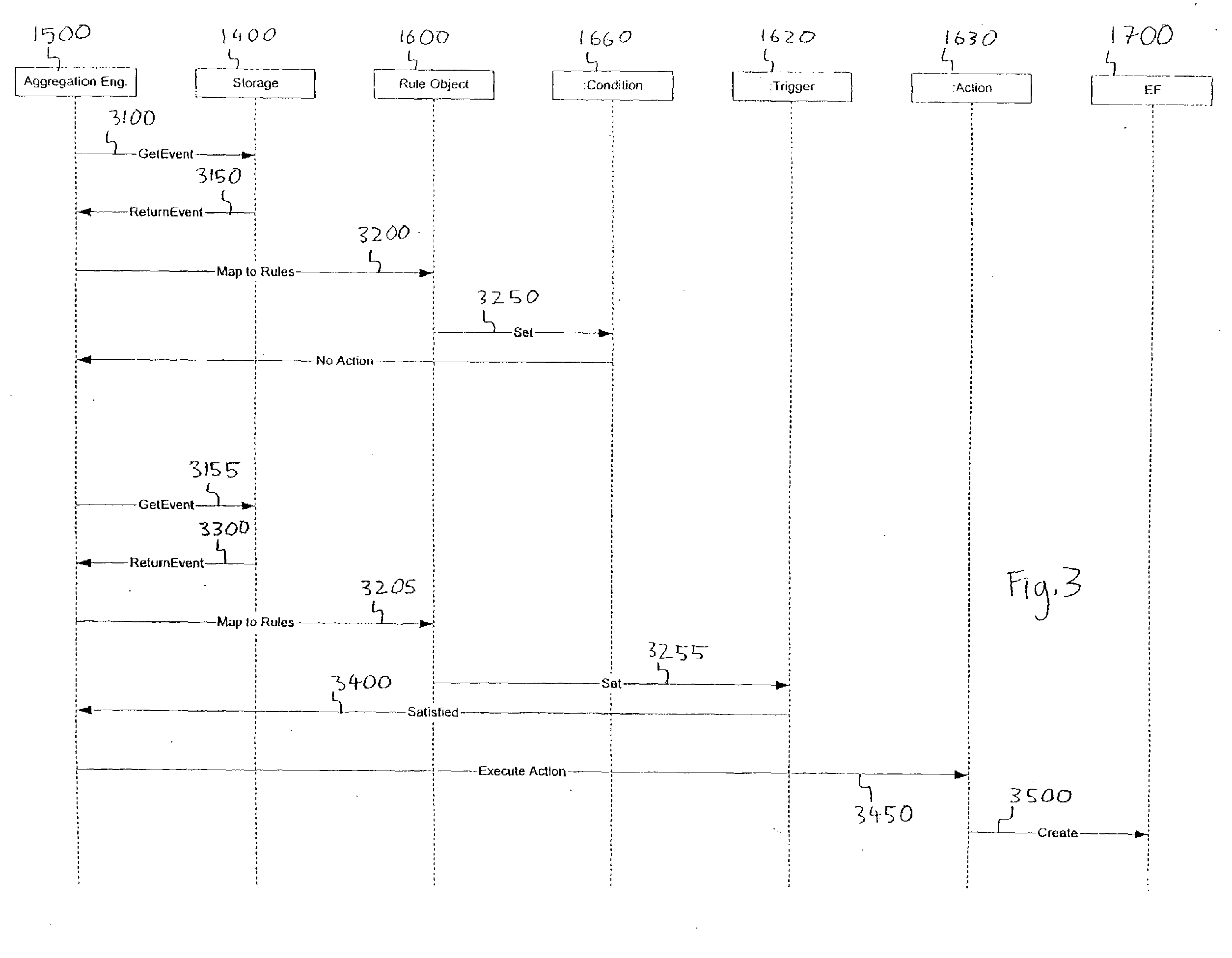

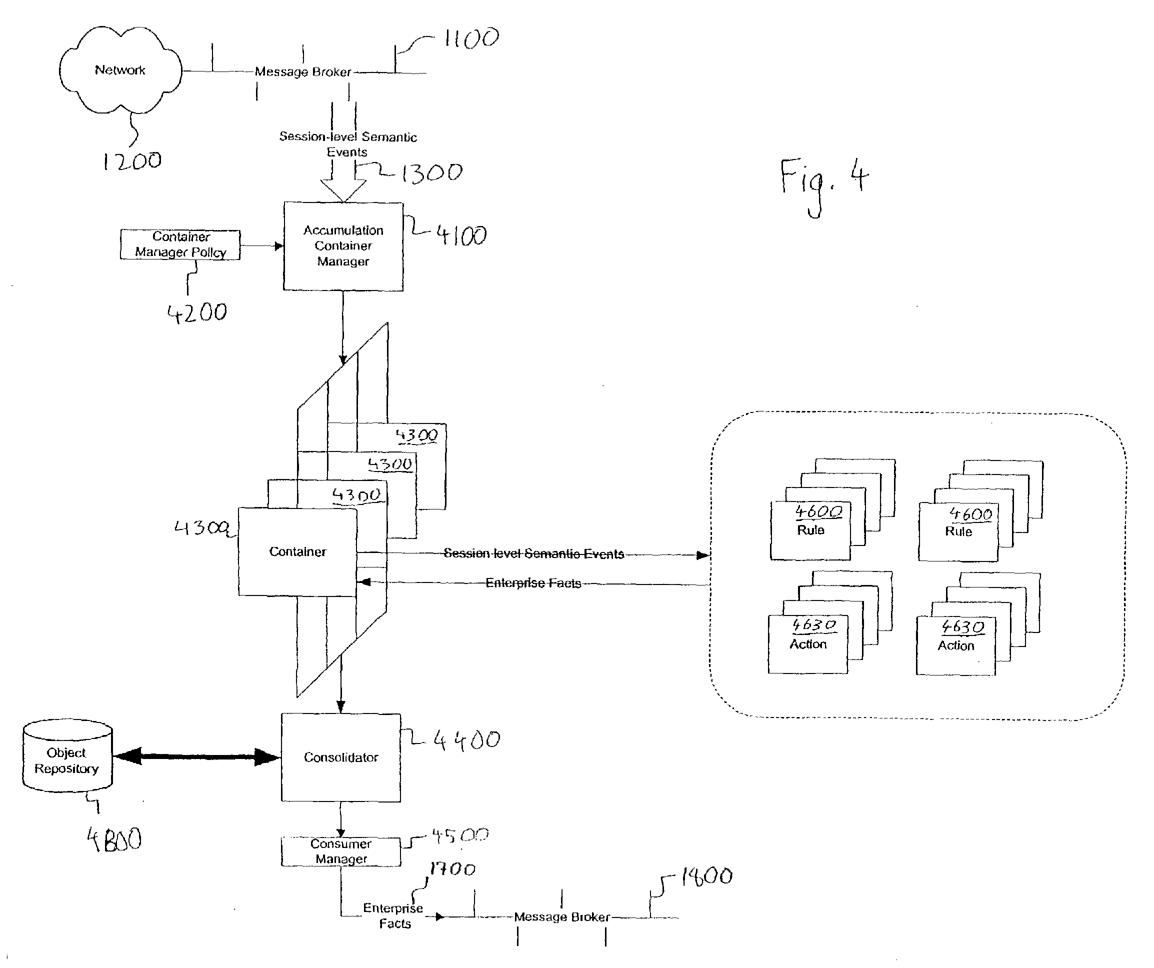

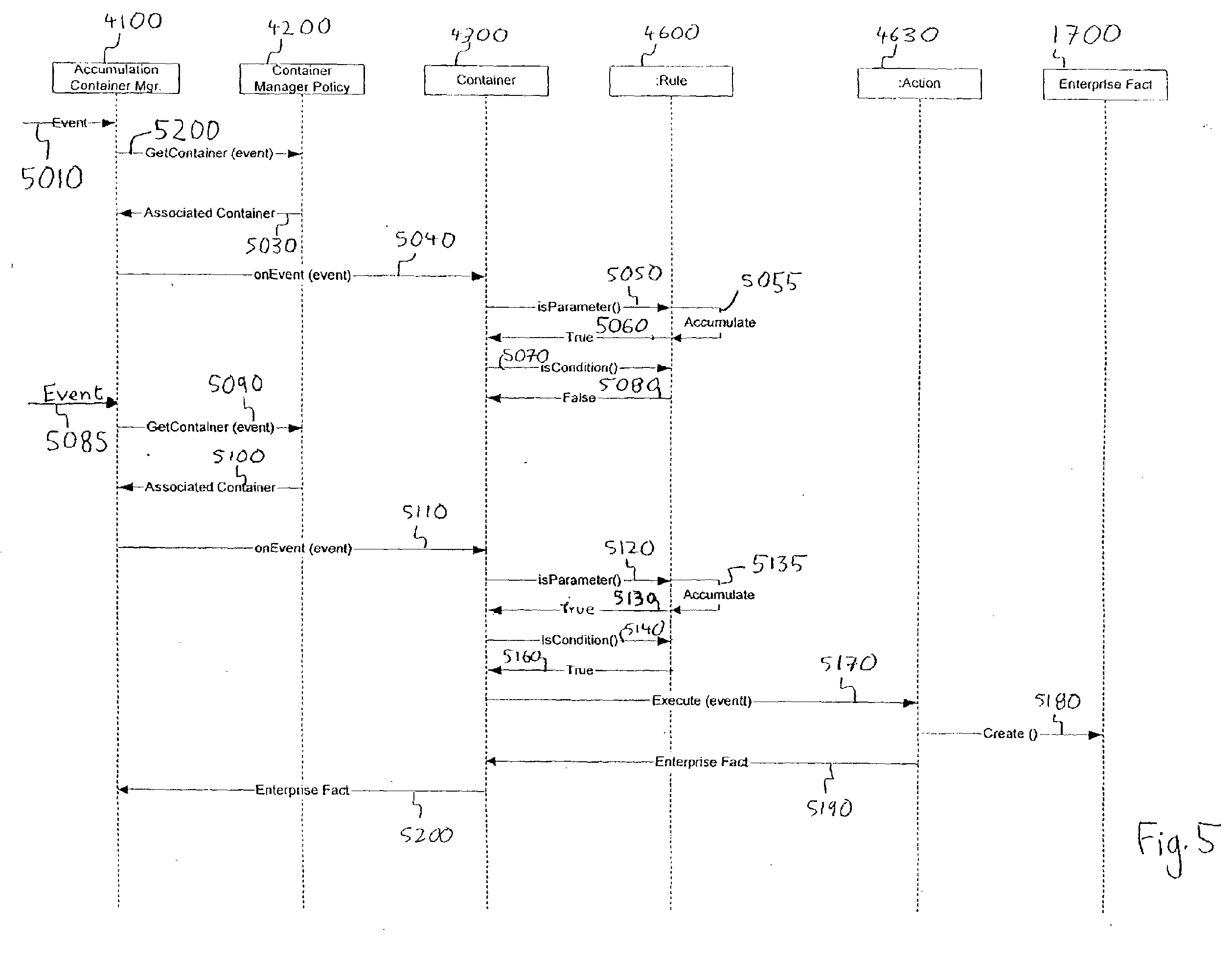

## Claims

1. A computer-controlled method of operating a network-based partner relationship, said computer-controlled method comprising:
establishing a representation of a relationship between a first peer entity and a second peer entity, said representation comprising: a collection of resources associated with said relationship, a presentation representation to be applied when providing ones of said collection of resources, and criteria for providing a compensation flow between said first peer entity and said second peer entity;
dynamically generating composite resources during a browsing session, said composite resources comprising a first component selected from said collection of resources and associated with said first peer entity, and a second component selected from said collection of resources and associated with said second peer entity;
monitoring said browsing session for generating session events;
transforming said session events to events in a semantic associated with said relationship, generating higher-level semantic events;
generating a compensation flow responsive to said higher-level semantic events based on said criteria.

2. The computer-controlled method according to claim 1 wherein:
generating session events further comprises providing said session events on a first message broker; and
wherein transforming session events comprises:
receiving said session events from said message broker; and
providing said higher-level semantic events on a second message broker.

3. The computer-controlled method according to claim 2 wherein dynamically generating composite resources during a browsing session comprises:
receiving said higher-level semantic events from said second message broker; and
selecting one of said first component and said second component responsive to said higher-level semantic events.

4. The computer-controlled method according to any preceding claim wherein dynamically generating composite resources during a browsing session comprises:
initiating a request for said first component, said request directed to a first target site;
receiving said request;
altering said request, forming an altered request; and
forwarding said altered request to said first target site.

5. The computer-controlled method according to any preceding claim wherein dynamically generating composite resources during a browsing session comprises:
initiating a request for said first component, said request directed to a first target site;
receiving a response from said first target site;
altering said response forming an altered response;
forwarding said altered response; and
receiving said altered response.

6. The computer-controlled method according to claim 4 further comprising:
initiating a request for said first component, said request directed to a first target site;
receiving said request;
extracting information from said request;
altering a state of a state object responsive to said information extracted from said request.

7. The computer-controlled method according to claim 6 said state object comprises contents of a common shopping basket.

8. The computer-controlled method according to claim 6 wherein said state object comprises a representation of value stored of a common wallet.

9. A computer-controlled network-based partnership system comprising:
a relationship engine for defining attributes of a relationship among peer entities comprising a first peer entity and a second peer entity;
a storage for storing said attributes of said relationship;
a composite site manager for dynamically generating composite resources during browsing sessions, said composite resources comprising component resources associated with said first and second peer entities, said composite site manager configured for retrieving a characterization of said composite resources from said storage;
a session tracking component, said session tracking component comprising:
a server application configured for receiving requests from a client system,
a communication client configured for requesting said composite resources from said composite site manager,
a client application configured to request said component resources from server systems associated with said first and second peer entities; and
a session event generation module configured for generating event data respecting said requests and said component resources;
a set of semantic mapping modules, said semantic mapping modules configured for receiving , said semantic mapping modules comprising rules for generating higher-level semantic events responsive to said event data.

10. The system according to claim 9 further comprising:
a message broker, said message broker configured for receiving said higher-level semantic events from said set of semantic mapping modules; and
wherein said composite site manager is further configured for receiving said higher level semantic events from said message broker, and wherein said composite site manager dynamically generates said composite resources responsive to said higher-level semantic events.

11. The system according to claim 9 or claim 10 further comprising:
an interposition module, disposed between said client application and said server systems, said interposition module configured for altering said request sent by said client application for said component resources.

12. The system according to claim 9 or claim 10 further comprising:
an interposition module, disposed between said client application and said server systems, said interposition module configured for altering said component resources sent by said server systems.
